# EUROPÄISCHE PATENTSCHRIFT

(11) **EP 1 726 054 B1**
(45) Veröffentlichungstag und Bekanntmachung des Hinweises auf die Patenterteilung: **13.05.2009**
(21) Anmeldenummer: 05706744.9
(22) Anmeldetag: 07.02.2005
(51) Int. Cl.: H01M 8/02, H01M 8/06, H01M 8/14

(54) **BRENNSTOFFZELLE UND VERFAHREN ZUR ABREICHERUNG VON KOHLENDIOXID**
FUEL CELL AND METHOD FOR DEPLETING CARBON DIOXIDE
PILE A COMBUSTIBLE ET PROCEDE POUR REDUIRE LE DIOXYDE DE CARBONE

(30) Priorität: 12.02.2004 DE 102004006915
(43) Veröffentlichungstag der Anmeldung: 29.11.2006
(73) Patentinhaber: Mayer, Günter, 64319 Pfungstadt (DE)
(72) Erfinder: Mayer, Günter, 64319 Pfungstadt (DE)
(74) Vertreter: Zellentin, Wiger
(86) Internationale Anmeldenummer: PCT/DE2005/000204
(87) Internationale Veröffentlichungsnummer: WO 2005/078836

(56) Entgegenhaltungen:
- US-A- 3 847 672
- US-A- 5 232 792
- US-B1- 6 322 916

## Beschreibung

Die vorliegende Erfindung betrifft eine neuartige mehrkammerige Brennstoffzelle, in welcher unter Verwendung von Kohlendioxid und Wasserstoff in einer Alkalischmelze (LiKCO₃ ein elektrischer Strom erzeugt wird. Die Gase werden durch Anoden und Kathoden geleitet, wobei die Gase an den Grenzflächen mit der Schmelze in Kontakt treten und diese einen Elektronenfluss erzeugen.

Die WO 98/08264 schlägt vor, das Kohlendioxid in die Karbonatmatrix beabstandet von der Kathode in eine Mehrkammerbrennstoffzelle einzutragen, wobei zwischen Anoden- und Kathodenkammer eine Elektrolytschmelzkammer angeordnet ist. Dies bringt jedoch Stabilitätsprobleme der Zelle und damit verbundene Undichtigkeiten mit sich, da das Gas in der Schmelze mechanisch arbeitet, und die Druckunterschiede in der Anoden- und der Kathodenkammer Kräfte auf die Kammer innerhalb des Elektrolyten übertragen. Außerdem kann der Strömungsquerschnitt und damit der Abstand der beiden Innenwände innerhalb des Elektrolyten nicht beliebig variiert werden, um einen reibungslosen Prozess zu gewähren.

Von Elektrolytmatrizen wird erwartet, dass sie strukturell stabil sind und sich in sehr dünnen Platten herstellen lassen, damit die Impedanz in der späteren Zelle möglichst niedrig ist. Und sie sollten sehr preiswert herstellbar sein. Eine Voraussetzung dafür, sie preiswert herstellen zu können, besteht u.a. darin, dass sie als Folie aus einer wässrig dispergierbaren Masse aufziehbar sind. Elektrolytmatrizen bestehen heute aus Keramik, wie beispielsweise Aluminiumoxid oder eine Mischung aus Aluminiumoxid und Zirkonoxid. Die Elektrolytmatrix wird von beiden Seiten durch einen hohen Flächenandruck belastet, durch welchen der Kontakt zwischen Elektrode und Elektrolyt erst zustande kommt. Es ist bekannt, dass es insbesondere bei länger laufendem Betrieb der Zelle zur vereinzelten Rissbildungen kommt. In der DE 199 36 087 A1 wird daher vorgeschlagen, die Elektrolytmatrix mit riss-stoppenden Zuschlagstoffen zu durchmischen. Diese bestehen aus FeCrAl-Partikeln, welche durch eine Voroxidation mit einer elektrisch isolierenden AlO₂-Schicht umgeben sind und sich dadurch in einer wässrigen Dispersion verarbeiten lassen.

In der US-Patentschrift US 4 643 955 wird eine Brennstoffzelle offenbart, welche aus einer porösen Anode und einer porösen Kathode besteht und durch eine Elektrolytmatrix voneinander beabstandet wird. Das Problem der chemischen Auflösung der Kathode, welche vorzugsweise aus Nickeloxid besteht, wird darin in der Weise gelöst, dass mögliche Undichtigkeiten in der Elektrolytmatrix durch eine zweite Elektrolytschicht verhindert werden, indem zwischen der Anoden-Kammer und der Elektrolytmatrix eine weitere poröse mit Elektrolyt getränkte Metallschicht eingezogen und zwischen der Kathode und der Elektrolytmatrix eine poröse metallische Schicht eingefügt wird, welche nicht mit Elektrolyt getränkt ist und als Drainage wirkt.
Die Anode und Kathode ist mit einer Porenweite von mehr als 5 µm und die der Elektrolytmatrix am nächsten angeordneten Schichten sind mit einer Porenweite von weniger als 1 µm ausgeführt. Anders in der weiter von der Elektrolytmatrix entfernten Anode und Kathode. Der noch durch die Elektrolytmatrix diffundierende Wasserstoff wird durch den Sauerstoff zu Wasser oxidiert. Die als Drainage ausgebildete Schicht besitzt eine Porenweite von <1µm, wodurch die Oxidation durch den übrigen Massenstrom nicht behindert wird. Durch diese Maßnahme wird gegenüber einer Brennstoffzelle ohne eine derartige Schutzvorrichtung eine verminderte Reduktion von Ni-Ionen zu elementarem Nickel in der Elektrolytmatrix erreicht.

In der Japanischen Anmeldung JP 07045296 A wird zur Verlängerung der Lebensdauer und zur Vermeidung von Kurzschlüssen in der Elektrolytmatrix durch Ni-Ionen, welche durch diffundierten Wasserstoff aus der Anodenkammer zu elementarem Nickel reduziert werden, vorgeschlagen, die Zelle aus 3 porösen Schichten sowie einer perforierten Metallplatte aus Nickel herzustellen. Die mittlere poröse Schicht ist mit Elektrolytmasse getränkt und bildet die Elektrolytmatrix. An die eine Seite grenzt die gasdurchlässige Anode und auf der anderen Seite die gasdurchlässige Kathode an, in welcher nahe der Elektrolytmatrix eine perforierte Nickelplatte eingefügt ist und die zwischen Elektrolytmatrix und Nickelplatte gasdurchlässige Kathodenschicht als Drainage für den oxidierten Wasserstoff dient. Der die Elektrolytmatrix durchdringende Wasserstoff wird durch den anliegenden Sauerstoff zu Wasser oxidiert, während das durch die Kathodenkammer strömende Sauerstoff-Kohlendioxid-Gasgemisch oberhalb der Drainage nicht in die Oxidation eingreift.

Das für die Herstellung von Elektroden bis dato geläufigste Material ist das Nickel. Das Hauptproblem mit Elektroden aus Nickel und Nickellegierungen sind jedoch noch immer die strukturelle Instabilität. Die Elektroden können im Laufe der Zeit während des Betriebes plastisch verformt oder bei kurzzeitigem Gebrauch gesintert werden, so dass die spezifische Oberflächenausdehnung einer porösen Elektrode verringert wird und der Anpressdruck an die Elelctrolytmatrix nachgibt, wodurch die Zelle an Leistung verliert. In der DE 689 01 782 T2 wird vorgeschlagen, die poröse Elektrode mit gleichmäßig darin verteilten keramischen Teilchen zu durchmischen, wobei die keramischen Teilchen von einer dünnen Schicht aus Lanthan überzogen sind. Mit den keramischen Teilchen wird ein Versintern der Nickelkömer untereinander verhindert. Weiterhin beschreibt die US-A-5 232 792 (REZNIKOV ET AL) eine Brennstoffzelle, bei welcher zwischen Anoden-und Kathodenkammer eine Schmelzkarbonmatrix angeordnet ist, wobei eine Zu- und Ableitung für Kohlendioxid an der Matrix angeordnet ist, sowie die US-A-4 643 955 (SMITH ET AL) eine Brennstoffzelle, bei der die Anodenkammer durch ein Carbonat enthaltendes Salz unterteilt ist, das der Abreicherung von CO₂ dient.

Die vorliegende Erfindung hat sich daher die Aufgabe gestellt, eine Brennstoffzelle zu schaffen, die gegenüber dem SdT wesentlich stabiler ist, die keine Undichtigkeiten aufweist und die einen weiten Strömungsquerschnittsbereich zulässt. Außerdem soll die Zelle auch mit einem Mischgas aus CO₂ und anderen z. B. brennbaren Gasen betrieben werden können, was sowohl mit der in der WO 98/08264 beschriebenen als auch mit allen anderen bis dato bekannten Brennstoffzellen ausgeschlossen ist.

Die Lösung dieser Aufgabe gelingt nach Hauptanspruch 1 durch eine Brennstoffzelle mit Anoden-Kammer, Kathoden-Kammer und Elektrolytraum sowie Zuleitungen für Brenngas (H₂ und/oder CO) und Ableitungen für entstehendes Kohlendioxid und Wasser an der Anoden-Kammer und Zuleitungen für Sauerstoff und Kohlendioxid sowie Ableitungen für Restsauerstoff und Restkohlendioxid an der Kathoden-Kammer, wobei die Anoden-Kammer und die Kathodenkammer einen Profilkörper oder einen weitporigen Metallschwamm aufnehmen erfindungsgemäß dadurch, dass die Brennstoffzelle in eine äußere Kathoden-Kammer und eine mittlere Kathoden-Kammer unterteilt und zwischen der Anoden-Kammer und der mittleren Kathoden-Kammer bzw. der äußeren Kathoden-Kammer zwei separate Elektrolyträume angeordnet sind. Die mittlere Kathoden-Kammer ist von einem Elektrolytkanal durchgriffen und die Zu- und die Ableitung für CO₂ an der äußeren Kathoden-Kammer angeordnet.

Der Metallschwamm in der mit Kohlendioxid beströmten äußeren Kathoden-Kammer kann durch einen Keramikschwamm ausgetauscht werden, ohne dass die Funktionsweise des Ionen bildenden Prozesses im angrenzenden Elektrolyten darunter leidet. Durch den Einsatz eines derartigen Schwamms wird ein generelles Standzeitproblem gelöst derart, dass die schwammartige Kathodenkammer, die üblicherweise aus Nickeloxid besteht, nicht mehr chemisch reagieren kann, wodurch für dieselbe eine nahezu unbegrenzte Lebensdauer erreicht wird. Es verbleibt somit lediglich die Reaktionsfläche des Elektrolyten für besonders aggressive Gase, die dem Kohlendioxid beigemischt sind, die dessen Lebensdauer begrenzt.

Die sich neu eröffnende Möglichkeit, in der äußeren Kathodenkammer außer Kohlendioxid auch brennbare Gase durchleiten zu können, hat schließlich den Vorteil, dass man den Brenngasschlupf aus der Anodenkammer in vollem Umfang derselben wieder zuführen kann. Brennstoffzellen haben bekanntlich einen Brenngasschlupf zwischen 15 und 30%. Dieser Schlupf kann innerhalb des Brennstoffzellensystems bis dato nur dadurch genutzt werden, indem man ihn mit Hilfe von Sauerstoff katalytisch in Wärmeenergie umwandelt. Mit der vollständigen Rückführung kann das Brenngas somit bis nahe 100% in elektrische Energie umgewandelt und auf eine katalytische Umwandlung des Brenngasschlupfes verzichtet werden.

Da die Gase, insbesondere die den Anodenkammern zugeführten, bei der Stromerzeugung nicht vollständig umgesetzt werden, wird vorgeschlagen, diese in an sich bekannter Weise unter Zumischung von Frischgas teilweise im Kreis zu führen.

Eine Reduktion des Karbonat-Ions ist hierbei nicht möglich, da dieses aufgrund des Potentialunterschiedes zwischen Anode und Kathode in Richtung Anode angetrieben wird und eine Fehlstelle an der Elektrolyt-Grenzfläche zurücklässt, in die lediglich ein neues CO₂-Molekül aus der Kathodenkammer nachrücken kann.

Somit lassen sich mit diesem Prinzip auch andere Gasströme, insbesondere brennbare, wie z. B. Prozess-, Bio-, Gruben- oder Erdgas von Kohlendioxid selektiv abreichem. Erfindungsgemäß nach Anspruch 14, lassen sich brennbare Gase, wie beispielsweise das Erdgas von dem darin enthaltende Kohlendioxid abreichem.

Als weiterer besonderer Vorteil der erfindungsgemäßen Brennstoffzelle ist anzusehen, dass der äußeren Kathodenkammer beliebige CO₂ enthaltende Gasmischungen zugeführt werden können, da diese nicht in die Karbonatschmelze eingetragen werden müssen und damit auch nicht oxidiert werden. Auf diese Weise lassen sich z.B. Abgase aus Biogasreaktoren von CO₂ Anteilen unter Stromerzeugung reinigen, wobei im Falle des Anschlusses von solchen Reaktoren aus der Pharmaindustrie die Sterilität erhalten bleibt und am Ausgang gereinigter Luftsauerstoff austritt, welcher dem Reaktor wieder zugeführt werden kann.

Das Funktionsprinzip der Brennstoffzelle ist wie folgt: Kohlendioxid (CO₂) wird an der äußeren und/oder mittleren Kathode durch die Elektrolytschmelze absorbiert. Gleichzeitig wird Sauerstoff an der mittleren Kathode reduziert und setzt sich mit dem in der Elektrolytschmelze gelösten Kohlendioxid (CO₂) zu Carbonat-Ionen (CO₃²⁻) um. Diese fließen daraufhin in Richtung Anode. Der Anode wird Wasserstoff (H₂) als Brenngas alleine, in Verbindung mit Kohlenmonoxid (CO) oder nur CO zugeführt, wobei der Wasserstoff zu Wasser (H₂O) und das Kohlenmonoxid zu Kohlendioxid (CO₂) oxidiert wird und mit den Carbonat-Ionen (CO₃²⁻) aus der Schmelze Kohlendioxid (CO₂) als Spaltgas umgesetzt wird. Das Kohlendioxid wird in einem Kreislauf von der Anode zur äußeren und/oder mittlere Kathode zurückgeführt.
Die Reaktionen lauten:

| | |
|---|---|
| Kathodenreaktion | ½ O₂ + CO₂ + 2^{e-} → CO₃²⁻ |
| Elektrolyt | Kathode → CO₃²⁻ → Anode |

**Anodenreaktionen:**

| | | |
|---|---|---|
| a) | in Abwesenheit von CO | H₂ + CO₃²⁻ → CO₂ + H₂O + 2e⁻ |
| b) | in Gegenwart von CO | H₂ + CO + 2CO₃²⁻ → 3CO₂ + H₂O + 4e⁻ |
| c) | in Abwesenheit von H₂ | CO + CO₃²⁻ → 2CO₂ + 2e⁻ |

An die Elektrolytmatrix werden besondere Ansprüche gestellt. Eine besondere Beanspruchung an die Brennstoffzelle und im Besonderen an die Anoden- und die Kathoden-Kammer sowie die Elektrolytmatrix stellen u. a. der Temperaturwechsel, die Temperaturverteilung und die Druckbelastung durch die Anpressung der Anoden- und der Kathoden-Kammer an die Elektrolytmatrix dar. Der Temperaturwechsel bewirkt Verwerfungen, welche im ungünstigen Fall zu Rissbildungen und zu Undichtigkeiten führten. Durch die Temperaturverteilung in den Kammern kann es zu Versinterungen kommen, wodurch der Anpressdruck an die Elektrolytmatrix nachgibt und die Zelle an Leistung verliert. Außerdem bildet sich ein Temperaturprofil mit einer Temperaturdifferenz zwischen dem Ein- und dem Auslass der einzelnen Kammer, welche aus der Strömungsgeschwindigkeit des einzelnen Gasstroms resultiert, wobei der geschwindigkeitsabhängige Strömungswiderstand in der durchströmten Kammer durch die Porenweite in den Metallschwämmen von der Anoden- und der Kathoden-Kammer bestimmt werden.

Das Problem ist nach heutigem SdT nicht in allen Punkten gleichzeitig lösbar. Es besteht daher der Bedarf nach einer neuen ganzheitlichen Lösung. Die Aufgabe gelingt erfindungsgemäß in drei Teilschritten derart, dass a) die Elektrolytmatrix zusammen mit der Anoden- und der mittlerer Kathoden-Kammer einen Halb-Kondensator bildet und als Ionen leitender Schichtkörper ausgeführt ist, wobei die Kathoden-Elektrode als Kondensatorplatte und die Anoden-Elektrode als Stromableitplatte für eine externe Kondensatorplatte dienen, b) die Stromkollekoren in der Anoden- und der Kathoden-Kammer über eine Feder Druck mindernd mit der Anoden- und der Kathoden-Elektrode verbunden sind und die Metallschwämme in der Anoden- und der Kathoden-Kammer für eine bessere Kühlung durch offenere Körper mit niedrigerem Strömungswiderstand ersetzt sind und c) die von außen auf die Anoden- und Kathoden-Kammer einwirkenden Flächenkräfte durch Körper absorbiert werden, welche die Anoden- und die Kathoden-Kammer mit den dazugehörigen Ein- und Auslässen abdichtend umfassen und wodurch die Anoden- und Kathoden-Kammer nebst Halb-Kondensator von dem anliegenden Anpressdruck entlastet werden.

Um die Vorteile des Halb-Kondensators gegenüber einer herkömmlichen Elektrolytmatrix zu verdeutlichen, folgt zunächst eine Beschreibung des SdT.

Die in der Kathoden-Kammer generierten und vom Elektrolyten aufgenommenen Karbonat-Ionen (CO₃²⁻) fließen in demselben von der Kathode zur Anode, indem sie durch einen zwischen der Anode und der Kathode herrschenden Ladungsunterschied angetrieben werden. Ein solcher Ladungsunterschied besteht zwischen den Elektrodenplatten eines Kondensators.

Die in Brennstoffzellen verwandten Kondensatoren sind als Plattenkondensatoren ausgeführt derart, dass sie aus einer Anoden- und einer Kathoden-Elektrode sowie einem als Dielektrikum wirkenden Elektrolyten bestehen, wobei sich der Elektrolyt in einem Gehäuse befindet, der Elektrolytmatrix, welche die beiden Elektroden voneinander beabstandet. Der Elektrolyt bewirkt auf beiden Seiten eine Polarisationsladung und lässt einen Teil der Feldlinien dort enden, wodurch die Stärke des elektrischen Feldes abnimmt und eine die Ladung verstärkende Wirkung eintritt.

Die Kapazität eines Kondensators wird des Weiteren durch die Elektronen aufnehmende Oberfläche bestimmt. Diese muss gasdurchlässig sein, weshalb man poröse Metallschwämme verwendet. Der Zugewinn an Oberfläche ist gegenüber einer Folienlösung beachtlich, wobei die Korngröße der Metallkörner nicht zu klein gewählt werden darf. Dies aus zweierlei Gründen. Mit kleiner werdender Korngröße schrumpft die Porenweite des Metallschwamms, wodurch sich der Strömungswiderstand in der Elektrode vergrößert und die Antriebsleistung für das zu transportierende Gas steigt. Gleichzeitig nehmen die Kapillarkräfte im Metallschwamm durch die enger werdende Porenweite zu und entziehen der Elektrolytmatrix den Elektrolyten, wodurch die Elektrode mit Elektrolyt voll läuft und es in der Elektrolytmatrix zu einer Ausdünnung von Elektrolyt und schließlich zu einer Unterbrechung der ionischen Verbindung zwischen den beiden Elektroden kommt. Aus diesem Grunde bevorzugt man für den Metallschwamm eine Korngröße zwischen ca. 3 µm und 10 µm und für die Elektrolytmatrix ca. 0,3 bis <1 µm. Die Vergrößerung der Elektronen aufnehmenden Oberfläche wird daher durch rein praktische Umstände begrenzt. Aus diesem Grunde muss die Elektrode einem sog. Aktivieirungsprozess unterzogen werden, in welchem man die Oberfläche nachträglich mit Nano-Poren vergrößert.

Schließlich ist die ionische Verbindung zwischen der Elektrolytmatrix und der beidseitig anliegenden Elektrode herzustellen. Da die Elektrolytmatrix eine sehr enge und die Elektrode eine relativ weite Porenweite aufweisen und der Elektrolyt nicht als Ausstülpung aus der Elektrolytmatrix hinausragt, sondern eingestülpt ist, muss der Metallschwamm unter hohem Druck an dieselbe angedrückt werden. Es gibt also auch noch den Aspekt der Kontaktierung zwischen dem Metallschwamm und den mit Elektrolyt gefüllten Poren in der Elektrolytmatrix. Damit trotz starker Anpressdrücke überhaupt ein Kontakt zustande kommt, darf die Korngröße zwischen der Elektrolytmatrix und dem Metallschwamm nicht zu weit auseinander liegen, damit eine Verbindung zwischen Elektrolyt und Metallschwamm mit Hilfe des metallischen Abdrucks gelingt. Durch eine derartige Verformung des Metallkorns wird die Verbindung mit dem Elektrolyten im Porenraum der Elektrolytmatrix hergestellt. Die starke Anpressung überträgt sich jedoch auch auf den übrigen Metallschwamm und bewirkt, dass sich die Porenräume in demselben verengen. Teilweise kann es zu einer Überschreitung der Elastizitätsgrenze kommen. Die Verformung setzt sich fort, sobald die Elektrode ihren betriebswarmen Zustand entgegengeht und eine weitere Erhöhung der Anpresskräfte durch die Wärmeausdehnung des Metallschwamms hinzukommen.

Es besteht daher der Bedarf nach einer Lösung, durch welche die starken Anpresskräfte an die Elektrolytmatrix und an die poröse Anoden- und Kathoden-Elektrode abgeschwächt werden. Die gestellte Aufgabe gelingt erfindungsgemäß nach Anspruch 4, indem man beidseitig an die Elektrolytmatrix Elektroden anbringt, welche über den eingefüllten Elektrolyten in der Elektrolytmatrix ionisch miteinander verbunden sind. Die Elektroden sind des Weiteren Teil von Dreiphasengrenzen "fest/flüssig/gasförmig", an welchen der Ionisierungs- und der Entladungsprozess ablaufen. Der Antrieb für die Karbonat-Ionen erfolgt durch den Ladungsunterschied zwischen der Kondensatorplatte auf der Kathodenseite und einer von außen an der Anoden-Elektrode anliegenden Kondensatorplatte.

Die Brennstoffzelle besteht also in ihrem Kern aus einem Halb-Kondensator mit einer Kondensatorplatte auf der Kathodenseite in Form eines ionisch leitenden Schichtkörpers sowie einer separaten Kondensatorplatte auf der Anodenseite. Der Halb-Kondensator setzt sich aus insgesamt drei Schichten zusammen, welche sind eine poröse Elektrolytmatrix, beispielsweise aus Aluminiumoxid, Zirkonoxid oder eine Mischung aus beiden, eine poröse gesinterte Kathoden-Elektrode aus Nickeloxid als Kathoden-Kondensatorplatte und Kathoden-Elektrode, eine Anoden-Elektrode sowie einen die Kathoden-Elektrode und die Keramikplatte durchdringenden Elektrolyten. Die Anoden-Elektrode besteht aus einer Nickelschicht, welche beispielsweise durch Aufdampfung oder Sputtern auf die Keramik aufgebracht wird.

Die Elektrolytmatrix besitzt eine Wandstärke von vorzugsweise 50 µm bis 100 µm und eine Porosität zwischen 30 und 60%. Die Kathoden-Elektrode besteht aus Nickeloxid und weist eine Schichthöhe von vorzugsweise 1.500µm bis 2.000µm und die Anoden-Elektrode weist eine Dicke von ca. 1µm bis 5 µm auf.

Die Elektrolytmatrix wird erfindungsgemäß nach Anspruch 23 während der Beschichtung der Anoden-Elektrode auf der Kathodenseite einem Überdruck und auf der Anodenseite einem Unterdruck ausgesetzt. Mit dem Überdruck auf der Kathodenseite wird ein Gas in die noch ungefüllte Elektrolytmatrix eingeleitet, welches aus der Anodenseite austritt. Mit dem Gas wird erreicht, dass der Metalldampf sich während des Aufdampfens und des Sputterns nicht in den Poreneingängen niederschlägt und die Poren auf der Anodenseite verschließt. Der Beschichtungsvorgang wird spätestens dann beendet, sobald die Poreneingänge beginnen, sich zu verengen. Dies lässt sich beispielsweise dadurch erkennen, dass der Unterdruck auf der Anodenseite zunimmt.

Je nach angewandtem Verfahren kommt das dafür am besten geeignete Prozessgas zum Einsatz. Für die Beschichtung nach der Aufdampfmethode ist dies beispielsweise der Wasserstoff oder das Kohlenmonoxid, während bei der Sputtermethode eher nur Argon als Prozessgas zum Tragen kommt.

Die Spülung der Elektrolytmatrix mit Prozessgas hat den Vorteil, dass sich die Poreneinlässe auf der Anodenseite zwar etwas verengen, aber nicht vollständig verschließen. Das Zuwachsen der Poreneinlässe bewirkt, dass die Kapillarkräfte im Porenraum weiter zunehmen, wodurch in denselben die Einstülpung des Elektrolyten schwindet und sich stattdessen eine Ausstülpung entwickelt. Durch die Ausstülpung gelingt es dem Elektrolyten, sich mit der Anoden-Elektrode zu verbinden. Gleichzeitig sind die Porengänge offen, so dass die Spaltgase Kohlendioxid und Sauerstoff den Elektrolyten bei der elektrischen Entladung der Karbonat-Ionen ungehindert verlassen können, ohne dass sie mechanische Arbeit im Elektrolyten verrichten.

Die Kathoden-Elektrode wird nach der Aufbringung der Anodenfolie als Folie nach SdT auf die poröse Keramikplatte aufgezogen, luftgetrocknet, in einem Wärmeprozess von organischen Bindemitteln befreit und anschließend unter SauerstoffAtmosphäre gesintert und oxidiert. Hierzu wird das Nickelpulver mit Bindemittel, Weichmacher, etc. zuvor zu einer pastösen Masse verarbeitet und unter Vakuum entlüftet.

Die Nickeloxidschicht besitzt eine mittlere Korngröße von vorzugsweise 0,3 µm. Durch diese Korngröße wird bereits bei einer Stärke von 2mm eine ausreichend große Gegenelektrode für die Anode bereitgestellt, ohne dass die Folienschicht aktiviert werden muss. Die gewählte Korngröße hat den Vorteil, dass es innerhalb der Folie zu starken Kapillarkräften kommt, welche ausreichen, den aufzunehmenden Elektrolyten auf Dauer in sich zu halten, wobei der die Kathoden-Elektrode durchdringende Elektrolyt als Dielektrikum auf dieselbe Ladung verstärkend wirkt.

Die Befüllung der Elektrolytmatrix mit Elektrolyt erfolgt nach SdT, indem der Elektrolyt vorzugsweise an der Stelle eingeleitet wird, welche für den Anschluss des Elektrolytkanals vorgesehen ist und von Kathodenmaterial befreit vorliegt.

Für die Herstellung der vollen Funktion zwischen der Kathoden- und Anoden-Elektrode fehlt lediglich noch die Kondensatorplatte auf der Anodenseite. Diese besteht vorzugsweise aus einem Nickelschwamm und wird durch eine Anpressung mit der Anoden-Elektrode verbunden. Die Herstellung derselben erfolgt in gleicher Weise wie die der Kathoden-Elektrode, mit der Ausnahme, dass der Sinterprozess unter Wasserstoff-Atmosphäre erfolgt, wobei die mittlere Korngröße vorzugsweise bei ca. 3 µm bis 5 µm und die Dicke der Schicht bei ca. 5mm liegt. Dieser Prozess erfolgt vorzugsweise in zusammengebauten Zustand der Brennstoffzelle. Dadurch wird erreicht, dass der noch formbare Grünling sich besser an die Anoden-Elektrode angleichen lässt und mögliche Unebenheiten und Maßtoleranzen behebt.

Der aus drei Schichten bestehende Halb-Kondensator liefert auf der Anoden - und der Kathodenseite gute Stromübergangsstellen durch direkt kontaktierbare Elektrodenanschlüsse, welche nicht versintern. Dadurch, dass sich die einzelne Elektrode mit geringem Anpressdruck mit dem Stromkollektor gut leitend verbinden lässt, sinkt die mechanische Belastung und zwar sowohl an der Elektrode als auch an der Elektrolytmatrix. Damit werden die bis dato bekannten Probleme der Kriechbildung an der Elektrode und das der Rissbildung an der Elektrolytmatrix, welche aus einer übermäßigen mechanischen und thermischen Belastung resultieren, beseitigt. Durch die Verklebung von Kathoden-Elektrode und Elektrolytmatrix durch den Elektrolyten wird sowohl die Stabilität der Elektrolytmatrix insgesamt als auch die der Kathoden-Elektrode erhöht, wodurch auch das Problem einer Verwerfung bei starken Temperatur- und Lastwechseln schwindet. Gleichzeitig wird durch die Verklebung zwischen Kathoden-Elektrode und Elektrolytmatrix erreicht, dass im Falle einer Rissbildung in derselben durch den umgebenden und in den Riss nachrückenden Elektrolyten aus der Kathoden-Elektrode der Riss selbst heilend ist. Dadurch lässt sich die Wandstärke der Elektrolytmatrix weiter auf einen Wert reduzieren, wie er bei einer herkömmlichen Ausführung aus Stabilitätsgründen nicht möglich ist. Die daraus resultierende Abstandsverringerung zwischen Anode und Kathode hat für den Transport der Carbonat-Ionen danach zweierlei Vorteil, nämlich a) dass sich die Kapazität zwischen der Anode und der Kathode durch die Abstandsverringerung der beiden anliegenden Elektroden erhöht und somit der Antrieb für die Carbonat-Ionen in der Schmelze steigt und b) die Carbonat-Ionen auf einer kürzeren Wegstrecke von der Kathode zur Anode gelangen. Beide Veränderungen a) und b) führen dazu, dass die Impedanz zwischen der Anode und der Kathode gegenüber einer herkömmlichen Elektrolytmatrix sinkt.

Die Kühlung der Anoden- und der Kathoden-Kammer und die Absenkung des Strömungswiderstandes werden nach Anspruch 5 erfindungsgemäß mit weiten Öffnungen erreicht.

Als Material kommt vorzugsweise Stahl und Aluminium zur Anwendung. Der offene Körper ist mit einer gasdurchlässigen Wand auf der der Elektrode zugewandte Seite und davon gegenüber mit einem Stromkollektor abgeschlossen. Die offenen Körper werden beispielsweise unter Federdruck an die Anoden- und die Kathoden-Elektrode angelegt. Eine vorteilhafte Ausführung eines offenen Körpers bilden Profile und offenporige Metallschwämme, welche beispielsweise in Spritztechnik herstellbar sind.

Der Profilkörper ist vorzugsweise aus einzelnen zu offenen Dreiecken gefalzten Blechen zusammengesetzt, welche beispielsweise mit ihrer Spitze auf der Gas durchlässigen Wand stehen und deren dritte Schenkelseite mittig durchtrennt und in zwei Schenkelhälften nach außen soweit umgeschlagen sind, dass sie als Stromübertragungs- und Federblech am Stromkollektor anliegen. Die Bleche und insbesondere die an die Elektrode angrenzende Wand, welche mit dem Elektrolyt in Kontakt kommt, sind - sofern sie korrodieren können - beispielsweise galvanisch vernickelt oder verchromt.

Profilkörper sind einfach und preiswert herstellbar und eignen sich gut für die Massenfertigung. Durch die auf Kante gesetzten Profilteile auf der gasdurchlässigen Wand wird erreicht, dass nur wenige Öffnungen in der Wand von dem Profilkörper abgedeckt werden und die überwiegende Elektrodenfläche für den Zu- und Abgang des Gasstroms frei bleibt. Dies hat den Vorteil, dass die Dreiphasengrenze zwischen Elektrode, Schmelze und Gas führender Kammer erhalten bleibt. Der Profilkörper kann zudem so ausgeführt werden, dass beispielsweise mehrere Profile kammartig ineinander greifen, wodurch sich die Abstände zwischen den Auflagenflächen verringern und es zu einer gleichmäßigeren Kraftverteilung auf der gasdurchlässigen Wand kommt.

Eine weitere vorteilhafte Ausführung stellen die offenporigen Metallschwämme, beispielsweise aus Stahl oder Aluminium dar, welche nach SdT in Spritztechnik hergestellt werden. Diese haben den Vorteil, dass sie gegenüber der Profiltechnik in kürzerer Zeit preiswerter herstellbar sind.

Die Verminderung der flächig auftreffenden Anpresskräfte auf die Anoden- und die Kathoden-Kammer sowie der Elektrolytmatrix und/oder Halb-Kondensator erfolgt erfindungsgemäß nach Anspruch 6 durch Körper, welche die Anoden- und die Kathoden-Kammer umfassen und die flächig auftreffenden Kräfte auf sich ziehen und adsorbieren.

Die Lösung gelingt, indem ein Zylinderring die Anoden- und die Kathoden-Kammer umfasst. Der Zylinderring besteht beispielsweise aus Stahl, Aluminium oder einer Keramik und bevorzugt aus einer Keramik und besonders bevorzugt aus Aluminiumoxid oder Zirkonoxid.

Der Zylinderring wird mit dem Halb-Kondensator auf deren äußeren Ringfläche fest verbunden und in seiner Höhe so bemessen, dass die in ihm eingebauten offenen Anoden- und Kathoden-Körper mit ihren Stromkollektoren den oberen Rand des Zylinders nicht überschreiten. Der Zylinder wird durch einen Deckel verschlossen. Die von außen auf die Deckelfläche einwirkende Kraft wird von diesem auf die Wandung des darunter befindlichen Zylinderrings übertragen und in demselben adsorbiert.

Der Zylinderring wird in einer besonders vorteilhaften Ausgestaltung aus Aluminiumoxid hergestellt. Der Zylinderkörper wird beispielsweise nach SdT als Keramik gebrannt oder nach SdT aus einer mit Bindern versetzten Gießmasse hergestellt.

Gießmassen dieser Art sind beispielsweise als Pulver mit Binder unter der Typbezeichnung RTC-60/70 als Zweikomponenten-System von der Firma Polytec erhältlich. Das Mischungsverhältnis zwischen dem Pulver und dem Binder einerseits und dem Wasser andererseits beträgt 100:10 bis 100:20 und bevorzugt 100:14. Die zweikomponentige Gießmasse wird in eine Form gefüllt, in welcher sie chemisch aushärtet. Der Härtegrad lässt sich erhöhen, wenn der Formkörper in einem Ofen einer Hitze oberhalb von 600°C bis 1.200°C ausgesetzt wird. Der gehärtete Zylinderring lässt sich mechanisch nachbearbeiten, was beispielsweise mit einer gebrannten Keramik nicht möglich ist, wodurch Abweichungen, welche durch den Schrumpfprozess entstehen, noch korrigiert werden können. Ebenso ist es möglich, die Gießtechnik auf weitere Bauteile für die Brennstoffzelle zu übertragen.

Die Verbindung zwischen dem Zylinderring und dem Halb-Kondensator einerseits und dem Deckel andererseits erfolgt erfindungsgemäß nach Anspruch 6 durch einen Kleber, vorzugsweise durch einen keramischen Hochtemperatur-Kleber, beispielsweise auf der Basis von Zirkonoxid, Glimmer, Alumosilikaten oder Aluminiumoxid, wie er beispielsweise von der Firma Polytec erhältlich ist. Diese Stoffe sind beispielsweise mit Wasser vermischt oder werden vor der Anwendung gemischt. Auch die Klebetechnik soll sich nicht auf die Zylinderringe beschränken, sondern auf weitere Bauteile der Brennstoffzelle übertragbar sein.

Die Klebung hat den Vorteil, dass die Körper miteinander fest verbunden und dicht sind und vorzugsweise gleiche Ausdehnungskoeffizienten besitzen wie die zu klebenden Körper. Dies hat den Vorteil, dass es innerhalb der Klebestelle zu keinen thermisch verursachten Spannungen kommt.

Die mittlere Kathoden-Kammer wird mit einer Elektrolytmatrix verschlossen, welche die mittlere von der äußeren Kathoden-Kammer voneinander trennt.

Dies geschieht üblicherweise nach SdT unter starker Hitze und starkem Pressdruck durch eine Verklebung mit dem Schmelzelektrolyten in der Elektrolytmatrix. Die Pressklebung verlangt jedoch, dass sehr große Kräfte aufgebracht und gehalten werden müssen, welche sich durch den Kraftschluss auf die mittlere Kathoden-Kammer und die Anoden-Kammer übertragen. Dies führt in den Zylinderringen, welche die Anoden- und die mittleren Kathoden-Kammer umschließen, dazu, dass sich sämtliche Kräfte aus dem Pressdruck in den Ringflächen konzentrieren und von Denselben adsorbiert werden müssen. Die Konzentration auf die Ringflächen bewirkt jedoch eine außerordentlich große Belastung, welche zum Bruch führen kann. Es besteht daher der Bedarf nach einer Lösung, die Kräfte nachhaltig zu reduzieren.

Die Lösung dieser Aufgabe gelingt erfindungsgemäß nach Anspruch 7 dadurch, dass der Elektrolytraum der Elektrolytmatrix die äußere Kathoden-Kammer umfasst und der Körper der Elektrolytmatrix die mittlere Kathoden-Kammer verschließt.

Die Elektrolytmatrix ist mit Kanälen für das Kohlendioxid enthaltende Gas durchzogen. Eine derartige Ausführung hat den Vorteil, dass sich die Elektrolytmatrix und die aus einzelnen Kanälen bestehende Kathoden-Kammer zu einer mit Elektrolyt durchtränkten und wabenartigen Modul-Platte vereinigt. Die Kanäle umfassenden Wände mit den von Elektrolyt gefüllten Porengängen bilden eine große Reaktionsoberfläche mit dem Kohlendioxid enthaltenden Gas. Die Elektrolytmatrix wird als poröse Keramikplatte vorzugsweise aus Aluminiumoxid hergestellt und in ihren Abmessungen so angefertigt, dass die darin befindliche Kanäle dem Stoffstrom einen möglichst geringen Strömungswiderstand entgegensetzen und diese sich gleichzeitig mit hoher Strömungsgeschwindigkeit durchströmen lassen. Der reduzierte Strömungswiderstand bewirkt einen geringeren Energiebedarf für den Gasstrom. Gleichzeitig kann bei einer geringeren Kohlendioxidkonzentration die Gasmenge in ihrem Durchsatz entsprechend gesteigert und die Elektrolytmatrix gekühlt werden. Schließlich hat das vorgeschlagene Aluminiumoxid den Vorteil, dass es gegenüber abrasiven Stoffen, wie sie beispielsweise in Rauchgasen von Kohlekraftwerken vorliegen, weitestgehend resistent ist.

Die Modul-Platte verschließt mit ihrer Fläche die mittlere Kathoden-Kammer, indem sie mit einem Hochtemperatur-Kleber mit der Ringfläche des Zylinderrings der mittleren Kathoden-Kammer verbunden wird. Durch die Klebung erfolgt eine dauerhafte Verbindung, durch welche eine weitere Pressung überflüssig ist.

Vor dem Verschluss der mittleren Kathoden-Kammer durch die Modul-Platte wird der Durchgriff des Elektrolyte durch die mittlere Kathoden-Kammer vorbereitet. Der Durchgriff des Elektrolyten durch die mittlere Kathoden-Kammer wird erfindungsgemäß nach Anspruch 8 dadurch gelöst, dass beide Elektrolytmatrizen mit mindestens einem mit Elektrolyt gefüllten Kanal miteinander verbunden werden. Ein derartiger Durchgriff kann beispielsweise aus einem Hohl-Zylinder bestehen, welcher mit seinen Enden mit den beiden Elektrolytmatrizen verklebt und im Innern mit Elektrolytmasse gefüllt ist.

Die Elektrolytmatrix im Halb-Kondensator ist hierzu von Elektrodenfläche an der Stelle freigelegt, an welcher die Klebung und die Verbindung des Durchgriffs und des die mittlere Kathoden-Kammer umfassenden Zylinderrings erfolgt.

Die freigelegte Stelle für den Durchgriff liegt beispielsweise in der Mitte des Halb-Kondensators und besteht beispielsweise aus einer kreisförmigen Fläche. Auf diese Fläche wird ein Keramik-Hohlzylinder mit Hilfe eines Klebers aufgeklebt und anschließend mit Elektrolytmasse gefüllt. Es ist auch möglich, weitere Durchgriffe am Rande der mittleren Kathoden-Kammer vorzusehen. Hierzu wird beispielsweise der die Kathoden-Kammer umfassende Zylinder-Ring mit durchgängigen Taschen versehen, in welche Elektrolyt eingefüllt wird. Der Zylinder-Ring wird mit seiner Ringflächen mit einem Kleber mit dem äußeren Rand des Halb-Kondensators verbunden. Sobald beide, der Durchgriff und der Ring mit der Keramikfläche fest verbunden sind, wird die mittlere Kathoden-Kammer durch die Modul-Platte mit Hilfe eines Klebers verschlossen.

Der Durchgriff ist in seinem Volumen so bemessen, dass er über seine Aufgabe hinaus auch als Depot für beide Elektrolytmatrizen dient. Die Befüllung des Durchgriffs erfolgt vorzugsweise durch die Modul-Platte hindurch. Hierzu befindet sich in der Modul-Platte eine durchgreifende Einfüllöffnung, welche mit dem Hohl-Zylinder und den möglichen Taschen in dem Zylinderring verbunden ist. Die Einfüllöffnung wird nach der Befüllung mit einer Keramikmasse verschlossen.

Werden zwei und mehr Zellen in Reihe geschaltet, indem man sie aufeinander stapelt, so wird die Anoden-Kammer der ersten Zelle mit einer Blind-Platte und die zweite und jede Folgende mit einer Modul-Platte verschlossen.

Der Stromkollektor in der Anoden- und der Kathoden-Elektrode ist über einen elektrischen Leiter mit einem elektrischen Verbraucher verbunden. Hierfür ist eine Verbindung vorzusehen, durch welche ein dauerhaft niedriger Kontakt mit dem Stromkollektor herstellbar ist. Damit die eingebauten Klebestellen in der Zelle nicht über Gebühr beansprucht werden, ist die Kontaktherstellung ohne großen Anpressdruck zwischen Kontakt und Stromkollektor herzustellen. Des Weiteren ist eine Verbindung vorzusehen, durch welche die Zellen auf kürzestem Wege miteinander in Reihe geschaltet werden können.

Diese Aufgabe gelingt erfindungsgemäß nach Anspruch 9 mit Kontaktstiften, welche die Abdeckung der Anoden- und der mittleren Kathoden-Kammer durchgreifen.

Die Kontaktstifte werden in speziell vorgesehene Öffnungen in der Blind-Platte und der Modul-Platte eingeführt und mit einem Hochtemperatur-Kleber gasdicht verklebt. Die Länge der Kontaktstifte ist so bemessen, dass sie in die Anoden- und die Kathoden-Kammer hineinreichen und auf die Stromkollektoren einen Druck ausüben, durch welchen der Kontakt zwischen Kontaktstift und Stromkollektor zustande kommt.

Die Kontaktstifte bestehen vorzugsweise aus verchromtem Stahl und sind vorzugsweise an ihrer gegenüber den Stromkollektoren angebrachten Kontaktstelle mit Aluminium beschichtet. Der Kontakt wird dadurch nicht nur durch den Andruck, sondern gleichzeitig auch durch eine metallische Verklebung dauerhaft hergestellt. Die Verklebung kommt zustande, indem der Kontaktstift soweit erhitzt wird, dass die Aluminiumschicht in Schmelze geht. Die Verklebung hat den Vorteil, dass der Kontakt durch eine Korrosion der Oberfläche nicht nachteilig verändert wird und die Klebung Änderungen in der Ausdehnung ausgleicht. Somit sorgt sie dafür, dass der Kontakt schon bei niedrigem Anpressdruck vollflächig erfolgt und die eingebauten mechanischen Verbindungen vor einer übermäßigen Druckspannung bewahrt bleiben.

Dadurch, dass die Kontaktstifte in die Anoden- und die mittlere Kathoden-Kammer hineinreichen, wird eine direkte Verbindung zwischen der mittleren Kathoden-Elektrode der ersten Zelle mit der Anoden-Elektrode der Zweiten Zelle und umgekehrt erreicht, während der Plus-Pol des Zellenstapels durch den Kontaktstift aus der Anoden-Kammer der ersten Zelle und der Minus-Pol des Zellenstapels durch den Kontaktstift aus der Kathoden-Kammer der zweiten Zelle für einen äußeren Verbraucher bereitgestellt wird.

Sowohl um die einzelne Zelle als auch um die zu einem Stapel gestapelten Zellen herum, werden erfindungsgemäß nach Anspruch 10 Räume an dieselbe und an dieselben angebaut, durch welche die Ein- und die Auslässe der Zelle und des Zellenstapels mit den Zu- und den Ableitungen verbunden werden.

Die Zellen sind vorzugsweise zylindrisch ausgeführt, so dass der Zellenstapel einen Zylinder bildet, welcher vorzugsweise mit einer Isolatorplatte beginnt und mit einer eben solchen endet. Die Ein- und die Auslässe der Anoden-, der mittleren Kathoden- und der äußeren Kathoden-Kammern treten am Zylinderumfang zueinander um jeweils 60° versetzt ein und aus. In axialer Richtung um den Zellenstapel herum werden die Ein- und die Auslässe der Zellen untereinander parallel geschaltet derart, dass sie für die Zellen gemeinsame Zu- und Ableitungen bilden.

Eine vorteilhafte Ausführung gelingt erfindungsgemäß nach Anspruch 11 dadurch, dass in axialer Richtung zwischen den Ein- und den Auslässen der Zellen Raumteiler am Umfang des Zellenstapels angebracht werden. Der Zellenstapel mit den Raumteilern steht auf einer Bodenplatte, die Zwischenräume zwischen den einzelnen Raumteilern sind durch Schalenkörper überbrückt und der Kopfraum ist mit der Deckplatte verschlossen, in welcher sich die Ein- und die Auslässe der gemeinsamen Leitungen befinden. Die Raumteiler, die Schalenkörper sowie die Boden- und die Deckplatte werden beispielsweise aus einem Guss aus Aluminiumoxid hergestellt. Vorteilhafterweise sind die einzelnen Komponenten zusätzlich in Fügetechnik miteinander verbunden und werden anschließend verklebt. Am äußeren Umfang der geschaffenen gemeinsamen Leitungen befinden sich in axialer Richtung am Ende der Raumteiler Fixierstangen, welche auf die Raumteiler und die Schalenkörper einwirken und die Schalenkörper auf den Raumteilern festhalten. Die Fixierung erfolgt durch einen Andruck, welcher dadurch gelingt, dass Spannbänder, beispielsweise aus Stahl, die Fixierstangen, welche vorzugsweise aus Aluminium oder Stahl bestehen, umfassen. Der hieraus entstandene Zylinder-Körper bildet einen betriebsbereiten Zellenblock.

In die gemeinsamen Zuleitungen werden vorzugsweise Diffusoren eingebaut. Diese besitzen eine Perforation, welche vorzugsweise in Richtung der Schalenkörperwand gerichtet ist und an welcher der Stoffstrom zu den Einlässen der Zellen hin reflektiert wird. Dies hat den Vorteil, dass auch bei höherer Strömungsgeschwindigkeit eine Vergleichmäßigung des Stoffstroms über den gesamten Zellenstapel erfolgt. Des Weiteren bewirkt die höhere Strömungsgeschwindigkeit eine effektivere Kühlung der Zellen, wodurch die Zellen mit einer höheren Eintrittstemperatur betrieben werden können.

Der Zellenblock gibt über die Fläche seiner Außenwand ständig Wärme an die Umgebung ab. Aufgrund des großen Temperaturgefälles zwischen dem Innen- und dem Außenraum wird, um unerwünschte Spannungen in der Außenwand zu vermeiden, der Zellenblock zusätzlich gegen unkontrollierte Zugluft geschützt und gekühlt.

Der Schutz vor Zugluft wird erfindungsgemäß nach Anspruch 12 dadurch gelöst, dass der Zellenblock in einem Metall-Zylinder mit einer Öffnung für die Zu- und die Abführung des Kühlmediums eingehaust wird. Der Metall-Zylinder schließt auf der einen Seite mit einer Bodenplatte und auf der anderen Seite mit einer Deckplatte ab. Im Metall-Zylinder sind zwei Führungsschienen eingezogen, auf welchen der Zellenblock mit seinen Fixierstangen aufsitzt. Damit die den Zellenblock umschließenden Spannbänder nicht die Auflage der Fixierstangen auf den Führungsschienen behindern und die Spannbänder an denselben hängen bleiben, sind in den Fixierstangen Spurrillen eingearbeitet, in welchen die Spannbänder von den Führungsschienen beabstandet ruhen.

Die äußere Kühlung des Zellenblocks erfolgt vorzugsweise durch vorbeiströmende Luft. Die Frischluftmenge wird beispielsweise so eingestellt, dass die Oberfläche des Zellenblocks noch mit der Hand berührt werden kann. Dies hat den Vorteil, dass die Spannbänder keiner übermäßigen thermischen Belastung ausgesetzt sind und nicht übermäßig stark gespannt werden müssen, um die Wärmeausdehnung des Zellenblocks ausgleichen zu können.

Des Weiteren sind in der Deckplatte Öffnungen vorgesehen, durch welche die Zu- und Ableitungen für die unterhaltenden Gasströme zum Zellenblock hindurchgeführt werden.

Der Zusammenhalt von aufeinander zu einem Brennstoffzellenstapel geschichteten Brennstoffzellen erfolgt bis dato mit Hilfe von Zugstangen, welche über dem Umfang der Zelle verteilt, durch sie hindurch greifen und von außen beidseitig mit Zugkräften auf denselben einwirken. Die exakte Einstellung der Vorspannung mit Hilfe einer Sprungfeder und einer Mutter ist hierbei nicht ganz unproblematisch. Insbesondere deshalb, da beachtliche Kräfte durch die einzelne Zugstange herrschen und die Gewindegänge von Zugstange und Mutter entsprechend vorbehandelt werden müssen, damit die Reibwirkung bei allen Zugstangen annähernd gleich ist und somit eine gleichmäßige Kräfteverteilung auf den Zellenstapel erreicht wird. Die Zugstangen müssen nämlich soweit vorgespannt sein, dass sie auch im betriebswarmen Zustand noch mit ihrer Vorspannung den Zellenstapel ausreichend spannen können. Dazu müssen die unterschiedlichen Materialeigenschaften, wie beispielsweise der Längenausdehnungskoeffizient, die Wärmeleitfähigkeit und die spezifische Wärmekapazität eines jeden verwendeten Bauteils berücksichtigt werden. Diese Parameter führen bei dem vorhandenen Mix an Materialien, wie er in Zellenstapeln nach SdT üblich ist, sehr schnell zu Instabilitäten, insbesondere während des An- und des Abfahrens des Zellenstapels sowie bei Lastwechseln, da die unterschiedlichen Materialien unterschiedlich schnell auf einen Temperaturwechsel reagieren. Durch die unterschiedlichen Trägheiten der beteiligten Materialien kommt es sowohl zu einzelnen lokalen als auch zu einer insgesamt über alle Verbindungen hinweg greifende Phasenverschiebung. Die Phasenverschiebungen äußern sich in mechanischen Spannungen und Verwerfungen sowohl an dem einzelnen Bauteil als auch am Zellenstapel insgesamt, welche auf Dauer durch die wechselnde Belastung zu Undichtigkeiten und Brüchen an den unterschiedlichsten Stellen führen und daher eine potenzielle Gefahr für die Lebensdauer des Zellenstapels darstellen. Die Zugstange stellt daher eine ganz und gar unbefriedigende Lösung dar, die es gilt zu verbessern.

Das Zusammenhalten des Zellenstapels wird daher erfindungsgemäß nach Anspruch 13 durch eine Konstruktion gelöst, in der die auf Zug ausgerichteten Zugstangen durch eine auf beidseitigen Druck ausgelegte Lösung ersetzt wird. Dies gelingt durch eine Tellerfeder, welche den Zellenblock in axialer Richtung gegen einen Anschlag drückt und somit den dazwischen geschalteten Zellenblock durch den durch die Tellerfeder erzeugten Anpressdruck zusammenhält. Dies hat den Vorteil, dass die Tellerfeder nicht mehr Teil des Zellenstapels ist und somit mit ihrer Materialeigenschaft nicht mehr in denselben eingreift. Gleichzeitig ist für den Druckaufbau, wie er für die Kontaktherstellung zwischen der Anoden- und Kathoden-Elektrode einerseits und den Stromkollektoren andererseits notwendig ist, nur noch eine wesentlich geringere Federkraft erforderlich. Diese greift mit ihrem Tellerrand an die Stirnfläche des Zellenblocks an und sorgt somit dafür, dass die Kraftverteilung gleichmäßig verteilt in die Stirnfläche desselben eintritt. Gleichzeitig wirkt der Tellerboden durch seine punktuelle Auflage an seinem Anschlag als Ausgleichsgelenk gegenüber dem Zellenblock derart, dass unterschiedlich stark verlaufenden axialen Ausdehnung des Zellenblocks an der Stelle, an welcher der Tellerrand mit dem Zellenblock verbunden ist, durch eine Kippbewegung der punktuellen Auflage ausgeglichen wird. Übrig bleiben im Zellenblock die Phasenverschiebungen, welche allein durch den Material-Mix der einzelnen Brennstoffzellen erzeugt werden.

Die Lebensdauer der Brennstoffzelle wird neben der Konstruktion derselben maßgeblich durch die Fahrweise beeinflusst. Aus diesem Grunde gibt es einen Bedarf, die Fahrweise der Brennstoffzelle zu optimieren.

Bekanntlich ist die Elektrolytmatrix, welche die Anode von der Kathode beabstandet, zwecks besserer Ionisierung an der Kathoden-Elektrode und der besseren Elektronenabgabe an der Anoden-Elektrode mit lithiiertem Elektrolyt getränkt. Das Lithium reagiert in Gegenwart von Wasserdampf und Wasserstoff jedoch im Laufe der Zeit. Der Wirkungsgrad und die Lebensdauer der Anoden-Kammer leiden daher unter dem Verlust von Lithium. Die Reaktion zwischen Lithium und Wasserdampf läuft nach der Reaktionsgleichung

2Li + 2H₂O → 2LiOH + H₂

ab und wird zu Lithiumhydroxid und Wasserstoff. Da der Wasserstoff bei einer Temperatur zwischen 600°C und 700°C in der Anodenkammer vorliegt, kommt es noch zu einer zweiten Reaktion, welche zwischen dem Lithium und dem Wasserstoff nach der Reaktionsgleichung

2Li + H₂ → 2LiH

abläuft und Lithiumhydrid bildet. Durch diese beiden Reaktionen verliert die Elektrolytmatrix auf der Anodenseite ständig Lithium, wodurch der Wirkungsgrad der Anoden-Elektrode allmählich nachlässt.

Erfindungsgemäß wird nach Anspruch 15 vorgeschlagen, in der Anoden-Kammer keinen Wasserstoff zu verstromen und solchen von ihr fernzuhalten, indem die Anoden-Kammer nur mit Kohlenmonoxid (CO) als Brenngas gespeist wird.

Die Aufgabe wird erfindungsgemäß dadurch gelöst, dass zwischen den Einlass der Anoden-Kammer und der Brenngas-Quelle eine Vorrichtung geschaltet wird, welche den Wasserstoff in dem enthaltenden Brenngas zurückhält. Eine solche Vorrichtung kann beispielsweise eine Gastrenn-Anlage, wie beispielsweise eine PSA-Anlage, eine Membran- oder eine Kryogen-Anlage sein, in welcher der Wasserstoff selektiv abgetrennt wird. Mit einer solchen Trennanlage kann das in einem Synthesegaserzeuger erzeugte Synthesegas, wie beispielsweise aus einem Dampf-Reformer oder einem Kohlevergaser, sowohl auf die Brennstoffzelle als auch für einen weiteren Prozess, in welchem Wasserstoff verbraucht wird, wie beispielsweise eine PEM-Brennstoffzelle, verteilt werden. Auch ist es möglich, Wasserstoff-Netze damit zu unterhalten, welche aus unterschiedlichen Einspeisepunkten mit Wasserstoff versorgt werden. Hierdurch erfährt beispielsweise die Kohle, welche die größte Energiereserve auf der Erde darstellt und auf allen Kontinenten verfügbar ist, für die Energieerzeugung eine noch nachhaltigere Bedeutung derart, dass sie mit wieder erstarkter Bedeutung in den Energiemarkt eintritt und aus ihr in Vergasungs-Prozessen ein Mischgas aus Kohlenmonoxid und Wasserstoff durch Reformierung hervorgeht. Während das Kohlenmonoxid in der Schmelzkarbonat-Brennstoffzelle verstromt wird, wird der Wasserstoffwirtschaft der erforderliche Wasserstoff in ausreichender Menge zur Verfügung gestellt, durch welche beispielsweise Kraftfahrzeuge umweltfreundlich betrieben werden können.

Wird die Anode in Abwesenheit von Wasserstoff nur mit Kohlenmonoxid als Brenngas gespeist, so ergibt sich noch ein weiterer lebensverlängernder Vorteil derart, dass in der Anoden-Kammer die ansonsten ablaufende chemische Reaktion

K₂CO₃ + H₂O ↔ 2 KOH + CO₂

welche den Elektrolyten zersetzt, durch das Fehlen von Wasser nicht stattfindet. In diesem Falle wird die Anode keinem feuchten Gas mehr ausgesetzt, durch welches das KOH, das bei 650°C schon eine merkliche Flüchtigkeit aufweist, nicht mehr aus der Anoden-Kammer ausgetragen wird.

Neben der Anoden-Kammer unterlieg auch die mittlere Kathoden-Kammer einer Lebensverkürzenden Belastung. An das Kathoden-Material wird daher die Anforderung gestellt, dass es ausreichend elektrisch leitfähig, mechanisch stabil und chemisch inert gegenüber dem Elektrolyten ist. Lithiiertes Nickeloxid hat die geforderten Eigenschaften, mit Ausnahme der chemischen Stabilität. Es ist dem Fachmann bekannt, dass sich die Nickeloxid-Kathoden unter dem Einfluss von Kohlendioxid allmählich auflösen, wodurch es in der Elektrolytmatrix zu einer Anhäufung von Ni-Ionen kommt, welche ihrerseits die Diffusion und die Auflösung weiter begünstigen. Die Ni-Ionen diffundieren in Richtung Anode, wo sie durch das negative elektrochemische Potenzial, das durch den gelösten Wasserstoff gebildet wird, zu elementarem Nickel reduziert werden. Die sich bildenden Nickelkörner können elektrisch leitfähige Brücken herstellen, durch welche es innerhalb der Elektrolytmatrix zu Kurzschlüssen kommen kann. Bei hohem Partialdruck von Kohlendioxid wird der Effekt noch verstärkt, da die Auflösung des Nickeloxids nach folgendem Mechanismus abläuft:

NiO + CO₂ ↔ Ni²⁺ + CO₃²⁻.

Es besteht daher ein Bedarf nach einer Lösung, welche den beschriebenen Mechanismus aufhält und durchbricht.

Die Aufgabe wird erfindungsgemäß nach Anspruch 16 dadurch gelöst, dass die mittlere Kathoden-Kammer unter der Abwesenheit von Kohlendioxid nur mit einem Sauerstoff enthaltendem Gas gespeist wird.

Das durch die Kathoden-Kammer herkömmlicher Brennstoffzellen geführte Anodenabgas, welches bei der Anwesenheit von Wasserstoff (H₂) in der Anoden-Kammer zuvor zu Wasserdampf oxidiert wurde, führt in einer derartigen Kathoden-Kammer in gleicher Weise wie in der Anoden-Kammer zu einem Verlust von Lithium und Elektrolyt. Dieser Verlust entsteht bei der neuen Brennstoffzelle nicht mehr, da vorzugsweise das Anoden-Abgas von der mittleren Kathoden-Kammer ferngehalten und stattdessen der äußeren Kathoden-Kammer zugeführt wird. Es kommt daher in der mittleren Kathoden-Kammer zu keinem nennenswerten Verlust an Elektrolyt und Lithium. Gleichzeitig entsteht durch das Fehlen von Wasser an der Kathoden-Elektrode keine korrodierende Reaktion mit dem Elektrolyten und dem Lithium, welche im Gegensatz zu Kohlendioxid nicht sauer sondern basisch abläuft.

Es verbleibt lediglich noch die Feuchte in der Luft, durch welche die mittlere Kathoden-Kammer einer basischen Reaktion ausgesetzt wird. Um eine derartige Reaktion auszuschließen wird erfindungsgemäß nach Anspruch 17 vorgeschlagen, bei zu hoher Luftfeuchte den Luftsauerstoff vor dem Eintritt in die mittlere Kathoden-Kammer zu trocknen und somit den Reaktionspartner H₂O für das Lithium und das K₂CO₃ zu entzieht. Dies geschieht beispielsweise durch einen Trockner, vorzugsweise einem Absorptions- oder Adsorptionstrockner, welcher sich zwischen der Atmosphäre und dem Einlass der mittleren Kathoden-Kammer befindet.

Die mittlere Kathoden-Kammer wird daher bevorzugt mit Sauerstoff enthaltendem Gas gespeist. Gleichzeitig besteht in der Anoden- und der äußeren Kathoden-Kammer noch immer das Problem der Kühlung. Die Kühlung der Anoden-Kammer erfolg bereits zu einem Teil zuverlässig und lässt sich in begrenztem Umfang auch in allen Betriebszuständen aufrechterhalten, indem der austretende Brenngasschlupf und das Kohlendioxid als Kühlmittel verwendet wird. Anders hingegen bei der äußeren Kathoden-Kammer. Hier setzt die Kühlung aus, sobald das Kohlendioxid enthaltende Gas keine Fremdgase mehr besitzt und das Kohlendioxid komplett durch den Elektrolyten absorbiert wird. Für die Lösung dieser Aufgabe gibt es daher den Bedarf nach einer wirksamen Kühlvorrichtung, durch welche sowohl der Anoden- als auch der äußere Kathoden-Kammer die überschüssige Wärme entzogen wird.

Diese Aufgabe wird erfindungsgemäß nach Anspruch 18 gelöst, indem die mittlere Kathoden-Kammer mit einem Kreislaufgas gekühlt wird, welches die in der mittleren Kathoden-Kammer aufgenommene Wärme an einem äußeren Wärmetauscher ablädt. Die Umsetzung der Lösung gelingt mit einer Sauerstoff-Anreicherungs-Anlage, welche das Kreislaufgas mit Luftsauerstoff speist, welcher mit seiner Sauerstoffkonzentration über der des Kreislaufgases liegt. Dies kann mit einer Sauerstoffgewinnungsanlage, beispielsweise einer PSA- oder einer Membran-Anlage erfolgen. Mit einer derartigen Vorrichtung kann der aufgezehrte Sauerstoff in der mittleren Kathode kontinuierlich nachgeführt werden, ohne dass am Austritt übermäßig viel Abluft entsteht, welche von Sauerstoff abgereichert in die Atmosphäre entlassen wird. Durch die Nachführung von sauerstoffreicher Luft, deren Sauerstoffkonzentration höher ist als die für die Kühlung im Kreislauf geführte Luft, wird die Sauerstoffkonzentration im Kreislaufgas konstant gehalten. Dies hat den Vorteil, dass das Kreislaufgas wesentlich öfter durch die Kathoden-Kammer geleitet und die Abwärme durch den höheren Luftmengenumsatz schneller aufgenommen und abgeführt werden kann. Die so abgeführte Wärme aus der Kathoden-Kammer wird an einem den Ein- und den Ausgang der Kathoden-Kammer kurzschließenden Wärmetauscher abgereichert. Mit einem in Reihe mit dem Wärmetauscher geschalteten Gebläse wird hierzu die Strömungsgeschwindigkeit so eingestellt, dass sich die Werte der Eintrittstemperatur und die der Austrittstemperatur derart annähern, dass die durch Temperaturunterschied sich einstellende Materialspannung in der mittleren Kathoden-Kammer auf ein Minimum sinkt. Die Angleichung der beiden Temperaturwerte hat darüber hinaus den Vorteil, dass die mittlere Kathoden-Kammer mit einer höheren Eintrittstemperatur betrieben werden kann. Mit dem im Kreislauf mit der mittleren Kathoden-Kammer betriebenen Wärmetauscher steht somit eine Wärmequelle mit hohem Temperaturgefälle zur Verfügung, während über eine Ableitung die von Sauerstoff abgereicherte Luft aus dem Kreislaufgas ausgekoppelt wird. Die Enthalpie in der Abluft reicht aufgrund des hohen Temperaturgefälles jedoch noch aus, um einen weiteren Wärmetauscher mit Wärme zu speisen, so dass eine nahezu vollständige Nutzung der Abwärme aus der mittleren Kathoden-Kammer erreicht wird. Außerdem kann die in der Brennstoffzelle erzeugte Abwärme schwerpunktmäßig, vorzugsweise zwischen 30% und 70%, mit dem Kreislaufgas derart konzentriert am Wärmetauscher abgeladen werden, dass sich hierdurch die Strömungsgeschwindigkeiten in der angrenzenden Anoden-Kammer und der äußeren Kathoden-Kammer in einem größeren Bereich variieren lassen. Die Kreislaufführung des Luftsauerstoffs hat schließlich für den elektrischen Wirkungsgrad der Brennstoffzelle den Vorteil, dass es innerhalb der mittleren Kathoden-Kammer durch den permanenten Sauerstoffüberschuss zu einer vergleichmäßigten Sauerstoffkonzentration auf hohem Niveau kommt. Durch die Abwesenheit von Kohlendioxid ergibt sich noch ein weiterer Vorteil derart, dass die Bildung von Peroxid an der Kathoden-Elektrode nach der Reaktion

O₂²⁻ + 2e → 2O²⁻

begünstigter abläuft, was eine Verminderung der elektrochemischen Polarisationsverluste und somit eine Wirkungsgradverbesserung bewirkt. Das O²⁻ Ion reagiert dabei mit dem in Schmelze befindlichen CO₂ nach der Reaktion

O²⁻ + CO₂→ CO₃²⁻.

Der Elektrolyt der äußeren Kathoden-Kammer kommt im Gegensatz zur Anoden- und der mittleren Kathoden-Kammer ohne die Zugabe von Lithium aus, da er an der Auf- und der Abgabe von Elektronen nicht beteiligt ist. Es entsteht im Gegensatz zur Elektrolytmatrix zwischen der Anoden- und der mittlerer Kathoden-Kammer in dem Elektrolytraum der äußeren Kathoden-Kammer lediglich ein Verlust an Elektrolyt durch die vorhandene Feuchte im Kathodengas, welcher auszugleichen ist. Dies geschieht in schon beschriebener Weise durch die Verbindung mit einem Depot.

Durch die Drei-Kammer-Technik ist die Brennstoffzelle besonders bevorzugt geeignet für die Sequestrierung von Kohlendioxid aus Kohlendioxid enthaltenden Gasmischungen. Eine besonders vorteilhafte Ausgestaltung gelingt, wenn die Brennstoffzelle unter der Abwesenheit von Wasserstoff als Brenngas betrieben wird. In diesem Falle entsteht am Ausgang der Anoden-Kammer nach der Verstromung des Brenngases kein Wasserdampf. Wird dem Abgas anschließend das Kohlendioxid entzogen, so kann das darin enthaltene und nicht verstromte Brenngas zum Einlass der Anoden-Kammer vollständig zurückgeführt werden, ohne dass es in der Anoden-Kammer zu einer Kumulierung durch Fremdgase kommt. Dies gelingt erfmdungsgemäß nach Anspruch 19 dadurch, dass das Spaltgas aus dem ionischen Strom und das Kohlendioxid aus der kalten Verbrennung sowie das nicht zu Kohlendioxid umgesetzte Brenngas in einem Druckerhöhungsprozess eine Druckbeladung erfährt derart, dass der erreichte Wert der Druckbeladung über dem kritischen Druck des Kohlendioxids liegt. Daran anschließend wird dem druckbeladenen Gas in einem Kühlprozess die Enthalpie in dem Umfang entzogen, dass die im Kohlendioxid noch verbleibende Enthalpie die kritische Temperatur unterschreitet und das Kohlendioxid seinen Aggregatzustand von gasförmig nach flüssig wechselt. Hierzu ist der Auslass des Kühlprozesses mit dem Einlass eines Druckspeicher verbunden, in welchem sich eine Flüssigkeitssäule aus Kohlendioxid aufbaut, über welcher sich das nicht verflüssigte Brenngas befindet und welches über den Kopfraum des Druckspeichers abgezogen und der Anoden-Kammer als Brenngas erneut zugeführt wird. Dies hat den Vorteil, dass aus dem Druckspeicher heraus mit einem Brenngas-Überschuss gearbeitet und die Anoden-Kammer damit zusätzlich gekühlt werden kann. Gleichzeitig wird der äußeren Kathoden-Kammer ein Kohlendioxid enthaltendes Gas und der mittleren Kathoden-Kammer ein Sauerstoff enthaltendes Gas zugeführt, durch welche der ionische Strom zwischen der Kathode und der Anode unterhalten wird. Die gefundene Lösung hat den Vorteil, dass mit dem Verfahren fünf Aufgaben innerhalb eines Kreislaufes in einem gelingen, die sind a) Abtrennung von Kohlendioxid aus einem Kohlendioxid enthaltenden Gas, b) die Verflüssigung des abgetrennten Kohlendioxids, c) die vollständige Verstromung des Brenngases, d) die Kühlung der Anoden-Kammer und e) die Gewinnung von Wasserstoff, wobei weder für die Abtrennung extra Energie aufzuwenden ist noch durch den Sequestrier-Prozess weiteres Kohlendioxid entsteht.

Über den Bodenraum des Druckspeichers lässt sich zeitgleich kontinuierlich das flüssige Kohlendioxid abziehen und über eine Pipeline, beispielsweise zu einer Lagerstätte oder einem Kohlendioxid unterhaltenden Betrieb, abtransportieren. Bei den Lagerstätten kann es sich beispielsweise um Erdölfelder, Kohleflöze, Kavernen und Aquiferen handeln. Mit dem Eintrag des Kohlendioxids in Erdöllagerstätten lässt sich beispielsweise die Fördermenge an Öl steigern. Wird es in Kohleflöze eingepresst, so lässt sich das an der Kohle angelagerte Methan exploitieren, während das Kohleflöz das Kohlendioxid durch Adsorption an sich bindet. Des Weiteren lassen sich mit dem Kohlendioxid chemische Prozesse, wie beispielsweise der Methanol-Prozess, in ihrem Ertrag steigern. Beispielsweise können die überschüssigen Mengen an Kohlendioxid auch in ausgebeuteten Salzbergstöcken und Erdgasfelder endgelagert und die Atmosphäre durch die entstandenen Fehlmengen im Abgas entlastet werden.

Des Weiteren hat die Verstromung des Kohlenmonoxids unter der Abwesenheit von Wasserstoff den Vorteil, dass das die Anoden-Kammer verlassende Kohlendioxid trocken und nicht feucht ist. Dies ist insbesondere dann von Bedeutung, wenn das Kohlendioxid anschließend durch eine Pipeline zu transportieren ist. Um eine Korrosion der Pipeline zu verhindern, muss dem Kohlendioxid nämlich zuvor die Feuchte weitestgehend entzogen werden. Die Trocknung von Gasen erfolgt üblicherweise durch Adsorption in einem Adsorptionstrockner, indem das Adsorbens die Feuchte adsorbiert. Eine derartige Trocknung scheitert jedoch bei der Anwesenheit von Wasserstoff als Brenngas daran, dass die anfallende Wassermasse durch die Verbrennung des Wasserstoffs durch eine Adsorptionstrocknung alleine nicht zu bewältigen ist.

Durch das aus der Kohlendioxid enthaltenden Gasmischung abgetrennte Kohlendioxid und dem freigestellten Wasserstoff entsteht eine Emissionsgutschrift für den Betreiber, wenn er das abgetrennte Kohlendioxid nicht wieder in die Atmosphäre entlässt. Derartige Emissionsgutschriften stellen im Wirtschaftsleben nach den "Nationalen Allokationsplänen" ein geldwertes Wirtschaftsgut dar. Nach deren Regeln ist festgelegt, nach welchem Schlüssel welche Anlage wie viele Emissionsrechte bekommt. Werden die zugeteilten Werte überschritten, so muss der Betreiber sich zusätzliche Verschmutzungsrechte kaufen. Wer hingegen die Emission an Kohlendioxid abbaut und dadurch Fehlmengen im Abgas erzeugt, indem er das Kohlendioxid sequestriert und der Atmosphäre auf Dauer vorenthält, kann die ihm zugeteilten Verschmutzungsrechte verkaufen. Es besteht daher der Bedarf nach einem Verfahren, mit welchem man derartige Rechte erlangen kann.

Die Aufgabe wird erfindungsgemäß nach Anspruch 20 derart gelöst, dass die Verbindung zwischen Atmosphäre und der mit der Atmosphäre verbundenen Kohlendioxid enthaltende Quelle unterbrochen und die Enden der Unterbrechung mit einem Kohlendioxid-Abtrennungs-Prozess, beispielsweise in der Ausführung mit einer Brennstoffzelle verbunden werden und der Sequestrierungs-Prozess das für die Atmosphäre bestimmte Kohlendioxid aus einer Kohlendioxid enthaltenden Gasmischung entzieht und das entzogene Kohlendioxid in einen anderen Stoff umwandelt oder einem aufnehmenden Ort auf Dauer zuführt.

Die Abtrennung gelingt erfindungsgemäß nach Anspruch 21 mit einer Brennstoffzelle derart, dass die Kohlendioxid enthaltende Quelle mit dem Einlass der äußeren Kathoden-Kammer und die Atmosphäre mit dem Auslass derselben; der Einlass der Anoden-Kammer mit einer Brenngas-Quelle und der Auslass derselben mit einer Ableitung für das Kohlendioxid aus der Abtrennung; der Einlass der mittleren Kathoden-Kammer mit einer Sauerstoff enthaltenden Quelle und der Auslass derselben mit der Atmosphäre verbunden wird.

Die Kohlendioxid enthaltende Gasmischung wird vor dem Austritt in die Atmosphäre der äußeren Kathoden-Kammer der Brennstoffzelle über deren Einlass zugeführt, in welcher es von Kohlendioxid abgereichert wird. Die von Kohlendioxid abgereicherte Gasmischung verlässt die äußere Kathoden-Kammer über deren Auslass und gelangt über eine Verbindung, beispielsweise den Kamin, in die Atmosphäre. Gleichzeitig wird die mittlere Kathoden-Kammer über deren Einlass aus einer Sauerstoff enthaltenden Quelle mit Sauerstoff gespeist. Zusammen generieren beide Kathoden-Kammern im Elektrolyten der Brennstoffzelle einen Carbonat-Ionenstom, welcher von der Kathode zur Anode fließt und in der Anoden-Kammer entladen wird. Hierzu wird die Anoden-Kammer über deren Einlass mit Brenngas gespeist, welches in der Anoden-Kammer durch die Entladung der Carbonat-Ionen verstromt wird. Die Anoden-Kammer verlässt daraufhin über deren Auslass eine Gasmischung aus Kohlendioxid und Teilen unverbrauchtem Brenngas. Während das Kohlendioxid vom Auslass der Anoden-Kammer zu einer Transportvorrichtung und über eine Verbindung zu einem Kohlendioxid aufnehmenden Ort gelangt, wird das unverbrauchte Brenngas dem Einlass der Anoden-Kammer erneut zugeführt.

Die Kohlendioxid enthaltende Gasmischung in der äußeren Kathoden-Kammer der Brennstoffzelle von Kohlendioxid abzureichern hat den Vorteil, dass in der Gasmischung beliebig hohe Feuchte enthalten sein darf, welche beispielsweise aus einer Entschwefelungs-Anlage resultiert, ohne dass es zu einer Beeinträchtigung kommt. Außerdem sind in der die äußere Kathoden-Kammer durchströmenden Gasmischung Restmengen an Schwefel tolerierbar, da die Gas berührenden Teile in der äußeren Kathoden-Kammer bevorzug aus Keramik bestehen. Und schließlich hat die Lösung den Vorteil, dass mit Ausnahme der CO₂-Verflüssigung und dem Transport desselben, der Prozess durch das Kohlendioxid selbst angetrieben wird, wodurch weder erneutes CO₂ entsteht noch für den Abtrenn-Prozess Energie notwendig ist.

Mit dem Kohlendioxid aus dem Abtrennungs-Prozess lassen sich weitere Prozesse, wie beispielsweise solche mit chemoautotrophen Bakterien oder Algen betreiben, indem diese in Verbindung mit Schwefelwasserstoff (H₂S) über eine Verbindung mit Kohlendioxid gespeist werden. Derartige Bakterien haben den Vorteil, dass sie im Wasser bei ca. 100°C und einem Druck von vorzugsweise 200 bis 250 bar ohne Licht das Kohlendioxid verstoffwechseln können, so dass tageszeitunabhängig ein kontinuierlicher Prozess in Druckreaktoren durchführbar ist. Derartige Lebewesen finden sich in unmittelbarer Nähe von hydrothermalen Schloten am Meeresgrund von ca. 2.500m Tiefe.

Günter Wächtershäuser berichtet im Science [289(5483): 1307] unter dem Titel "Origin of life: Life as We Don't Know It" über den Stoffwechsel dieser Lebewesen. Überträgt man den vorgefundenen Lebensraum auf einen Bioreaktor, so wird das Kohlendioxid in Proteine, Eisweis, etc. umgewandelt, welches man dem Stoffwechselkreislauf zuführt. Da sehr viele Prozesse in der Petro- und der chemischen Industrie mit einem Überschuss an Wärme betrieben werden, wird erfindungsgemäß nach Anspruch 22 vorgeschlagen, den Wärmeprozess zusammen mit einer H₂S- und einer CO₂- Quelle, beispielsweise in einem Kraftwerk, einer Raffinerie, einer Methanol-Anlage, einem Zement-Werk, etc. mit einem derartigen Reaktor zu verbinden.

Anhand der beiliegenden Figur 1 wird die vorliegende Erfindung näher erläutert. Die Figur 2 zeigt einen Kondensator in einer Brennstoffzelle nach SdT. Im Vergleich dazu wird in Figur 3 ein neuer, Halb-Kondensator beschrieben. Die Figuren 4 bis 9 zeigen schematisch in Einzelschritten den Zusammenbau der einzelnen Bauteile einer Zelle bis zum betriebsbereiten Zellenblock. Die Figur 10 zeigt die Brennstoffzelle in Verbindung mit einem Kohlekraftwerk als Sequestrier-Anlage, in welcher sie das Kohlendioxid aus dem Rauchgas entzieht und in einer Verflüssigungs-Anlage verflüssigt. Die Abwärme aus dem Brennstoffzellen-Prozess wird hierzu durch eine Kühlvorrichtung abgeführt, wie sie in der Figur 11 dargestellt ist und bei welcher der im Kreislauf geführte Luftsauerstoff als Kühlmedium dient. Die Figur 12 zeigt schließlich die Brennstoffzelle in Verbindung mit einer Erdgasförderstätte, auf der das Erdgas durch die Brennstoffzelle gereinigt wird, indem dem Erdgas durch den Brennstoffzellen-Prozess das Kohlendioxid entzogen wird, welches in einer Verflüssigungs-Anlage verflüssigt und in einer Aquifere endgelagert wird, während das gereinigte Erdgas über eine Pipeline zum Verbraucher gelangt. Die Beschichtung der Elektrolytmatrix mit einer elektrisch leitenden Anoden-Elektrode wird in den Figuren 13 und 14 dargestellt.

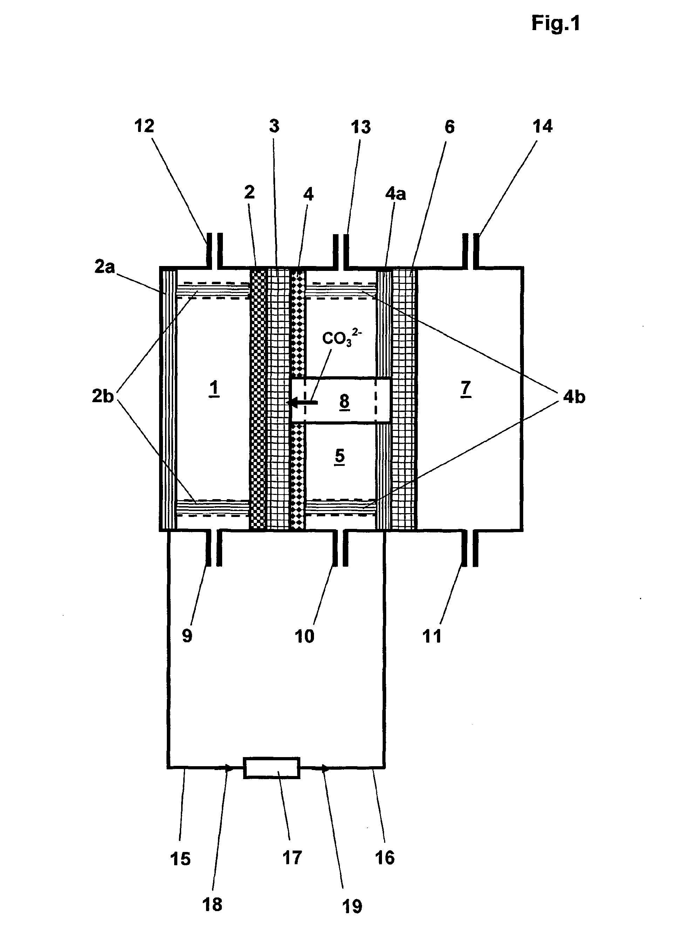

**Figur1** zeigt die Brennstoffzelle, die im Innern aus der Anoden-Kammer, zweier Kathoden-Kammern, zweier Elektrolytmatrizen sowie dem Elektrolytkanal besteht, welcher die beiden Elektrolytmatrizen miteinander verbindet.

Der Einlass der Anoden-Kammer (1) wird über die Leitung (9) mit Brenngas (H₂ und/oder CO) gespeist, welches in der Anodenkammer (1) durch den Sauerstoff aus dem CO₃²⁻ -Ionenstrom in einer kalten Verbrennung zu H₂O und CO₂ oxidiert wird. Die aus der Oxidation resultierenden Komponenten verlassen daraufhin, zusammen mit dem Spaltgas CO₂ aus dem CO₃²⁻ -Ionenstrom über den Auslass (12) die Anoden-Kammer (1).

Der Einlass der Kathoden-Kammer (5) wird über die Leitung (10) mit Sauerstoff aus der Luft gespeist. In der Kathoden-Kammer (5) wird der Sauerstoff an der Kathoden-Elektrode (4) durch die gleichzeitige Zuführung von Elektronen ionisiert. Der ionische Sauerstoff (2O²⁻) dringt in den Elektrolyten (3) ein und bildet mit dem in der Schmelze gelösten Kohlendioxid Carbonat-Ionen. Die von Sauerstoff abgereicherte Luft verlässt daraufhin über den Auslass (13) die Kathoden-Kammer (5).

Der Einlass der Kathoden-Kammer (7) wird über die Leitung (11) mit einem mit Kohlendioxid angereichertem Gas gespeist. Das im Gas enthaltene Kohlendioxid wird in der Kathoden-Kammer (7) von dem Elektrolyten (6) absorbiert. Das absorbierte Kohlendioxid geht im Elektrolyten (6) in Lösung und fließt als Karbonat über den Elektrolytkanal (8) in Richtung Kathoden-Elektrode (4) und Elektrolyt (3), während das von Kohlendioxid abgereicherte Gas die Kathoden-Kammer (7) über den Auslass (14) verlässt.

Die Anoden-Elektrode (2) ist in der Anoden-Kammer (1) über eine elektrische Verbindung (2b) mit dem Stromkollektor (2a) verbunden, an welchem ein elektrischer Anschlussdraht (15) angeschlossen ist. Dieser Anschlussdraht (15) ist mit seinem anderen Ende mit dem Eingang eines elektrischen Verbrauchers (17) verbunden. Über diesen Draht werden die an der Anoden-Elektrode (2) abgestreiften Elektronen (18) des Elektronen abführenden Mediums Wasserstoff (H₂) und/oder Kohlenmonoxid (CO) in den elektrischen Verbraucher (17) eingespeist, in welchem sie Arbeit verrichten.

Die Kathoden-Elektrode (4) ist in der Kathoden-Kammer (5) über eine elektrische Verbindung (4b) mit dem Stromkollektor (4a) verbunden, an welchem ein elektrischer Anschlussdraht (16) angeschlossen ist. Dieser Anschlussdraht (16) ist mit seinem anderen Ende mit dem Ausgang eines elektrischen Verbrauchers (17) verbunden. Über diesen Draht werden die im elektrischen Verbraucher abgereicherten Elektronen (19) in die Kathoden-Elektrode (4) eingespeist, durch welche der Ionisierungsprozess an der Kathoden-Elektrode (4) angetrieben wird. Die Bildung des einzelnen CO₃²⁻-Ions im Elektrolyten (3) erfolgt sodann durch die Speisung von jeweils einem halben O₂-Molekül durch die Kathoden-Elektrode (4) und einem ganzen CO₂-Molekül durch den Elektrolytkanal (8) sowie von zwei zugeführten Elektronen aus dem elektrisch leitenden Draht (16).

Die an der Grenzfläche von Kathoden-Kammer (5), Kathoden-Elektrode (4) und Elektrolyt (3) durch den Ionisierungsprozess erzeugten Carbonat-Ionen (CO₃²⁻) fließen von der Grenzfläche von Kathoden-Elektrode (4) und Elektrolyt (3) in Richtung Anoden-Elektrode (2) und werden an derselben entladen, indem das einzelne CO₃²⁻ - Ion in ein halbes O₂ - und ein CO₂-Molekül aufgespaltet werden.

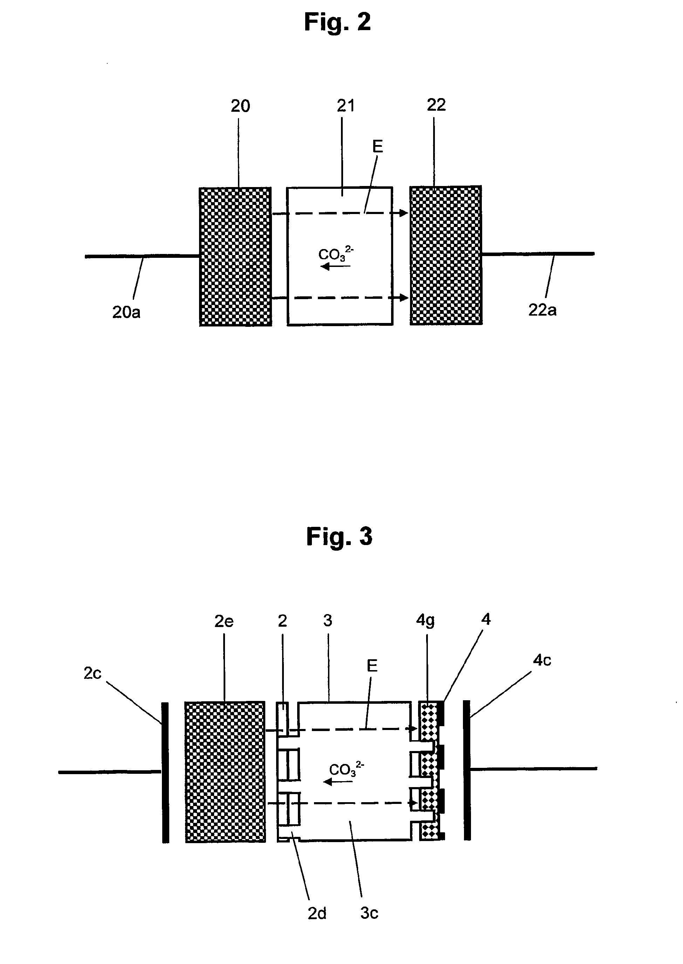

Die **Figur 2** zeigt schematisch den Aufbau eines Kondensators, wie er nach SdT in Brennstoffzellen verwandt wird. Die beiden Kondensatorplatten (20) und (22) sind als Metallschwamm ausgeführt und bilden für den Brennstoffzellen-Prozess die Anode (20) und Kathode (22). Beide sind durch das mit Elektrolyt gefüllte Elektrolytgehäuse (21) voneinander beabstandet. Das elektrische Feld (E), welches zwischen den beiden Kondensatorplatten herrscht und den Elektrolyten durchdringt, wird durch den als Dielektrikum wirkenden Elektrolyten (21) nur an der Grenzfläche zwischen Kondensatorplatte und Elektrolyt geschwächt. Die Kapazität, welche die Anoden-und die Kathoden-Elektrode als Metallschwamm in der Lage ist zu liefern, kann daher weder auf der einen noch der anderen Seite genutzt werden, da eine den Metallschwamm umfassende, die Ladung verstärkende Schicht - nämlich das Dielektrikum in Form des Elektrolyten - um die Oberfläche herum fehlt. Die Karbonat-Ionen (CO₃²⁻) im Elektrolyten (21) werden daher durch das Fehlen von weiteren Polarisationsladungen und durch das dadurch minder geschwächte elektrische Feld (E) in ihrem Fluss von der Kathode (22) zur Anode (20) in ihrer Bewegung gehemmt. Über die Verbindungen (20a) und (22a) kann daher bei gleicher Spannung zwischen den beiden Kondensatorplatten (20) und (22) nur ein verminderter Strom im Kreis fließen.

Die Weiterentwicklung des Kondensators ist in **Figur 3** dargestellt, welcher anstelle aus drei Teilen nur noch aus zwei Teilen modular aufgebaut ist und einerseits aus einem ionisch leitenden Halb-Kondensator mit einer Kathoden-Elektrode, einer Elektrolytmatrix, einer Kathoden-Kondensatorplatte und einer ionisch durchlässigen Anoden-Elektrode sowie andererseits aus einer separaten Anoden-Kondensatorplatte besteht, welche mit der Anoden-Elektrode durch Andruck verbunden ist.

Die Figur 3 zeigt schematisch den Kondensator in seinem Aufbau. Dieser besteht anodenseitig aus der elektrischen Verbindung (2c) für die Anoden-Kondensatorplatte (2e) und der ionisch durchlässigen Anoden-Elektrode (2). Auf der Kathodenseite befindet sich die Kathoden-Kondensatorplatte (4g) mit der Kathoden-Elektrode (4), welche mit der elektrischen Verbindung (4c) verbunden ist. Beabstandet sind beide Kondensatorplatten durch die Elektrolytmatrix (3) und die Anoden-Elektrode (2). Die Elektrolytmatrix (3) und der Kathoden-Kondensator (4g) sind von dem gemeinsamen Elektrolyten (3c) durchdrungen und reichen bis an den Durchgang (2d) der Anoden-Elektrode (2) heran, mit welchem sie sich verbinden und damit eine Verbindung mit der Kathoden-Elektrode (4) herstellen.

Die Anoden-Elektrode (2) ist als dichte Metallschicht ausgebildet und mit der Elektrolytmatrix (3) fest verbunden. Diese ist an den Stellen, unter welchen sich Porenräume der Elektrolytmatrix (3) befinden, mit Durchlässen (2d) versehen, durch welche die Spaltgase Kohlendioxid und Sauerstoff nach der elektrischen Entladung der Karbonat-Ionen (CO₃²⁻) aus dem Elektrolyten (3c) austreten. Das elektrische Feld (E) herrscht zwischen den beiden Kondensatorplatten (2e) für den Plus-Pol und (4g) für den Minus-Pol. Dieses liegt vor, sobald die poröse Anoden-Kondensatorplatte (2e) mit der Anoden-Elektrode (2) verbunden ist. Der Elektrolyt (3c) durchdringt den Metallschwamm der Kathoden-Kondensatorplatte (4g) vollständig und dringt auf der Anodenseite bis in die Durchlässe (2d) der Anoden-Elektrode (2) vor, wodurch eine ionische Verbindung zwischen den Elektroden (2), (4) entsteht. Der Elektrolyt wirkt in der Kathoden-Kondensatorplatte (4g) als Dielektrikum ladungsverstärkend, wodurch bei der Kathoden-Kondensatorplatte eine Verkleinerung der Bauform eintritt.

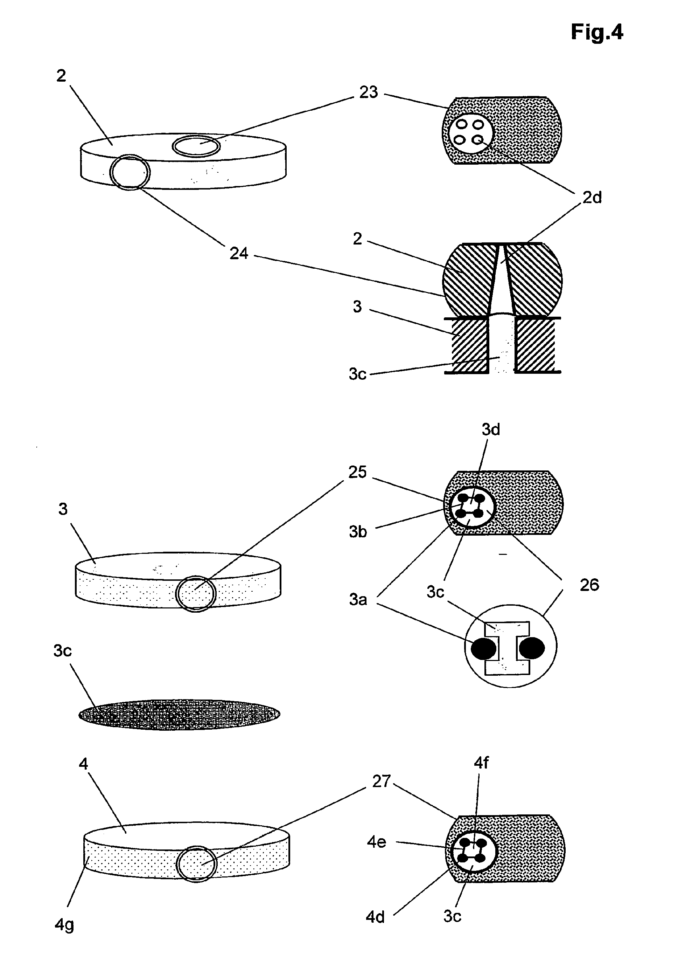

Die **Figur 4** zeigt schematisch den Halb-Kondensator als Explosionszeichnung. Im Einzelnen zeigt die Figur 4 die Anoden-Elektrode (2), die Elektrolytmatrix (3) und die Kathoden-Kondensatorplatte (4g).

Die Oberfläche der Anoden-Elektrode (2) ist durch die Lupe (23) vergrößert dargestellt und zeigt dieselbe mit den Durchlässen (2d), wobei der Elektrolyt (3c), wie die Lupe (24) zeigt, sich am Durchlass (2d) mit der Anoden-Elektrode (2) verbindet.

Der Aufbau der Elektrolytmatrix (3) ist schematisch durch die Lupe (25) dargestellt. Das einzelne Keramikkorn (3a) ist über die Verbindung (3b) mit einem benachbarten Keramikkorn verbunden, während der Elektrolyt (3c) die Porenräume (3d) der Elektrolytmatrix (3) durchdringt. Der Lupenausschnitt (25) ist durch die Lupe (26) nochmals vergrößert dargestellt, durch welche schematisch der Elektrolyt (3c) dargestellt ist, wie er zwischen zwei Keramikkörnern (3a) hindurch greift.

Die Kathoden-Elektrode (4) ist durch die Lupe (27) vergrößert dargestellt und zeigt schematisch die poröse Struktur der Elektrode. Das einzelne Metallkorn (4d) ist über die Verbindung (4e) mit einem benachbarten Metallkorn verbunden und der Porenraum (4f) ist mit Elektrolyt (3c) aufgefüllt. Der Elektrolyt (3c) füllt die Porenräume (3d) und (4f) und verklebt die Elektrolytmatrix (3) mit der Kathoden-Kondensatorplatte (4g). Die der Klebestelle gegenüber liegende Seite der Kathoden-Kondensatorplatte (4g) dient als Kathoden-Elektrode (4).

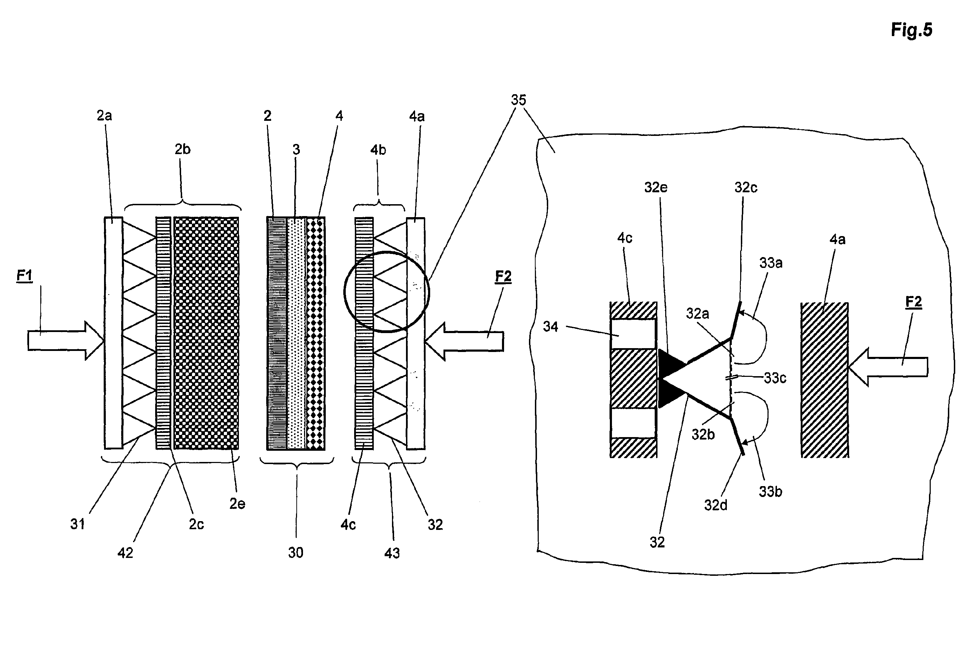

Die **Figur 5** zeigt schematisch den Aufbau einer gegenüber einem Metallschwamm weiterentwickelten Anoden- und Kathoden-Kammer als Explosionszeichnung. Im Einzelnen zeigt die Figur 5 den Stromkollektor (2a) mit der elektrischen Verbindung (2b) zur Anoden-Elektrode (2), welche aus dem Dreieckprofil (31) und dem gelochten Blech (2c) und der Anoden-Kondensatorplatte (2e) als porösen Schwamm besteht. Des Weiteren zeigt sie den Stromkollektor (4a) mit der elektrischen Verbindung (4b) zur Kathoden-Elektrode, welche aus dem Dreieckprofil (32) und dem gelochten Blech (4c) besteht. Zwischen beiden befindet sich der aus den Schichten Anoden-Elektrode (2), poröse Elektrolytmatrix (3) und Kathoden-Elektrode (4) bestehende Halb-Kondensator (30). Auf die Stromkollektoren (2a) und (4a) wirkt die Andruckkraft F1 und F2 in der bezeichneten Richtung. Die Stromkollektoren legen sich über die Verbindungen (2b) und (4b) an die Elektroden (2) und (4) des Halb-Kondensators (30) an.

Mit der Lupe (35) ist der Profilkörper (32) mit dem angrenzenden Gitterblech (4c) und dem Stromkollektor (4a) vergrößert dargestellt. Dieser steht mit seiner Spitze auf dem gelochten Blech (4c) mit seinen Lochdurchgängen (34). Der gleichschenkelig ausgebildete Profilkörper (32) ist mit Schweißnähten (32e) auf dem gelochten Blech fest verbunden. Der parallel zum Gitterblech (4c) gedanklich liegende Dreieckschenkel, welcher gestrichelt dargestellt ist, ist ebenfalls gedanklich mittig durch die eingezeichnete Trennlinie (33c) in die Schenkelhälften (32a) und (32b) geteilt. Durch eine Umklappung (33a) und (33b) werden die Schenkelhälften zur Feder (32c) und (32d).

Der Stromkollektor (4a) wird schließlich durch die einwirkende Kraft F2 an die Feder (32c) und (32d) angedrückt, wodurch die Verbindung (4b) an die Kathoden-Elektrode (4) des Halb-Kondensators (30) angedrückt und der Kontakt hergestellt wird. Sinngemäß geschieht dies auf der gegenüberliegenden Seite zwischen dem Stromkollektor (2a) durch die Kraft F1, durch welche die Verbindung (2b) den Kontakt mit der Anoden-Elektrode (2) des Halb-Kondensators (30) herstellt.

Der Stromkollektor (2a), der Profilkörper (31), das gelochte Blech (2c) und die Anoden-Kondensatorplatte (2e) füllen den Anodenraum (1) aus und bilden eine Funktionseinheit (42).

Der Stromkollektor (4a), der Profilkörper (32) und das gelochte Blech (4c) füllen den Kathodenraum (5) aus und bilden eine Funktionseinheit (43).

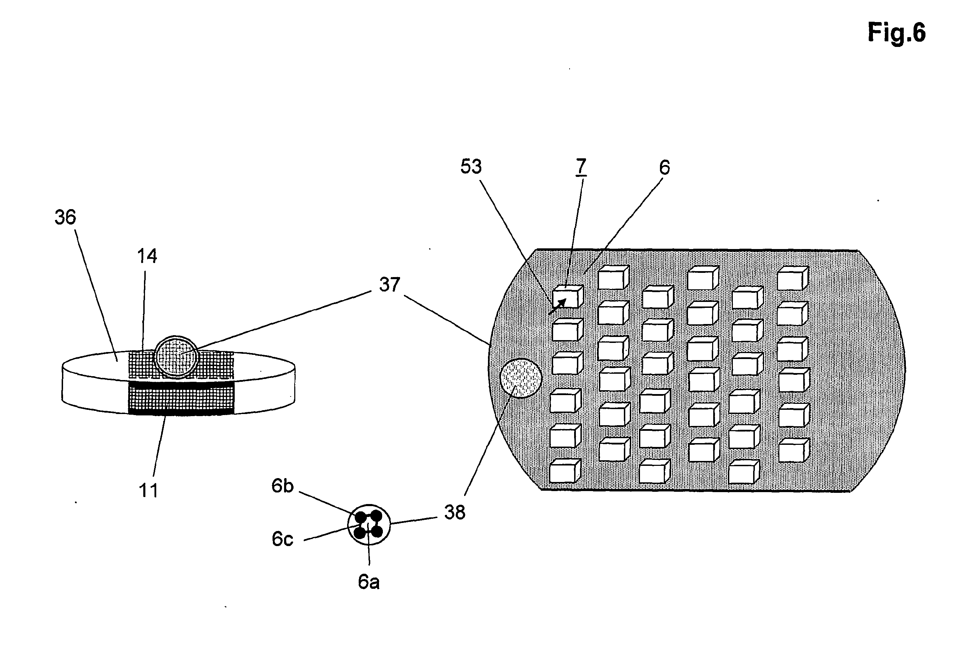

Die **Figur 6** zeigt schematisch eine Modul-Platte, welche die Kathoden-Kammer (7) und den die Kathoden-Kammer umfassende Elektrolytmatrix (6) beinhaltet, wobei es sich bei der Kathoden-Kammer um eine Vielzahl von Kanälen handelt. Diese durchziehen die Elektrolytmatrix (6). Im Querschnitt können die durchziehenden Kanäle rund, dreieckig, rechteckig und quadratisch sein.

Im Einzelnen zeigt die Figur 6 die Modul-Platte (36) mit einem Einlass (11) und einem Auslass (14). Über dem Auslass (14) befindet sich eine Lupe (37). Mit dieser sind vergrößert die Gasdurchgänge (7) als äußere Kathoden-Kammer sichtbar, welche von dem Kohlendioxid enthaltendem Gasstrom in der eingezeichneten Richtung (53) durchströmt werden. Die Darstellung mit der Lupe (37) ist so gewählt, dass die Gasdurchgänge (7) von der sie umgebenden Elektrolytmatrix (6) freigelegt, als Säulen von einer aus nur noch einer Schicht dicken Auflagefläche aufsteigen, welche gleichzeitig die der Einlassseite (11) gegenüber liegende Auslassseite (14) bildet. Diese Schicht ist unter der Lupe (38) nochmals vergrößert dargestellt. Die Vergrößerung unter der Lupe (38) zeigt die Keramik-Körner (6b) der Elektrolytmatrix (6), welche über die Verbindung (6c) miteinander verbunden sind und die Porenräume (6a), welche mit Elektrolyt gefüllt sind.

Der im Elektrolytraum (6a) der Elektrolytmatrix (6) eingeschlossene Elektrolyt geht über die durchgängig verbindenden Porenräume eine Verbindung mit der Außenwand der Kathoden-Kammer (7) ein, über welche der Elektrolyt der Gasmischung das Kohlendioxid entzieht. Gleichzeitig stellen die Porenräume über die Außenwand des Elektrolytraums eine Verbindung zu dem nicht näher dargestellten Durchgriff (8) her.

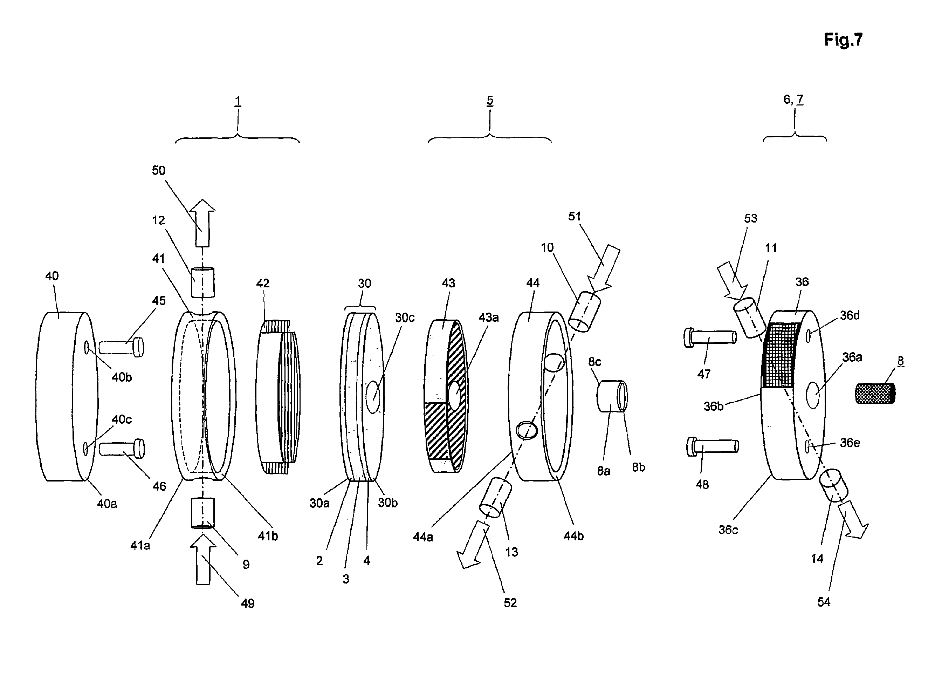

Die **Figur 7** zeigt schematisch den Zusammenbau einer kompletten Brennstoffzelle mit den Bauteilen gemäß den Ausführungsbeschreibungen der Figuren 4 bis 6 als Explosionszeichnung.

Im Einzelnen zeigt die Figur 7 die Anoden-Kammer (1) mit einem die Funktionseinheit (42) umfassenden Zylinderring (41) nebst Funktionseinheit, einen Halb-Kondensator (30) mit Elektroden (2) und (4) sowie einer Elektrolytmatrix (3), die Kathoden-Kammer (5) mit einem die Funktionseinheit (43) umfassenden Zylinderring (44) nebst Funktionseinheit, den mit Elektrolyt gefüllten Zylinder-Hohlkörper (8a) für den Durchgriff (8), eine Modul-Platte (36) sowie diverse Zu- und Ableitungen (9), (12), (10), (13), (11) und (14), welche mit den Kammer-Ein- und Auslässen verbunden sind und durch welche die Kammern mit Brenngas (49), Luftsauerstoff (51) und Kohlendioxid (53) gespeist und das Anoden-Abgas (50), die Abluft (52) und das Rest-Kohlendioxid (54) abgeführt werden. Die Anoden-Kammer (1) ist mit einer Blind-Platte (40) verschlossen. Des Weiteren zeigt sie die Kontaktstifte (45), (46), (47) und (48), welche die Funktionseinheiten (42), (43) gegen die Anoden- und die Kathoden-Elektrode (2), (4) andrücken und den elektrischen Kontakt herstellen. Diese durchgreifen die Blind-Platte (40) an den Durchlässen (40b) und (40c) sowie und die Elektrolytmatrix (6) die äußere Kathoden-Kammer (7), welche in der Modul-Platt (36) zusammengefasst sind an den Durchlässen (36d) und (36e) und bilden nach außen die Anschlussstellen für weitere Zellen innerhalb eines Zellenstapels sowie die des äußeren Anschlusses eines Zellenblocks.

An dem Zylinderring (41) befinden sich die Ein- und Auslässe (9) und (12) der Anoden-Kammer. Der Zylinderring (41) umfasst die im Innern der Anoden-Kammer befindliche Funktionseinheit (42). Der Halb-Kondensator (30) wird an die Stirnfläche des Zylinderrings (41) herangeführt und über die deckungsgleichen Ringflächen (41b) und (30a) miteinander kraftschlüssig verbunden. Die Kontakt-Stifte (45) und (46) in der Blind-Platte (40) reichen in die Anoden-Kammer (42) hinein. Durch diese Stifte wird die Funktionseinheit (42) in der Anoden-Kammer (42) an die Anoden-Elektrode (2) angedrückt, wodurch ein elektrischer Kontakt zwischen beiden hergestellt wird. Die Verbindung zwischen der Stirnfläche des Zylinderrings (41) und der Blind-Platte (40) findet zwischen den Ringflächen (41a) und (40a) statt, während die Kontaktstifte (45) und (46) in den Durchgangslöchern (40b) und (40c) fixiert werden.

Auf der Elektrolytmatrix (3) des Halb-Kondensators (30) wird auf der Fläche (30c) der Hohlzylinder (8a) mit seiner ringförmigen Stirnfläche (8c) befestigt. Die Funktionseinheit (43) der mittleren Kathoden-Kammer wird mit ihrem Durchgang (43a) über den Hohlzylinder (8a) gestülpt und mit der Kathoden-Elektrode (4) des Halb-Kondensators (30) verbunden. Umschlossen wird die Funktionseinheit (43) durch den Zylinderring (44) mit seinen Ein- und Auslässen (10) und (13). Die Stirnfläche (8c) von dem Hohl-Zylinder (8a) und die Stirnfläche (44a) des Zylinderrings (44) werden mit den deckungsgleichen Ringflächen (30b) und (30c) von dem Halb-Kondensator (30) kraftschlüssig verbunden.

Die mittlere Kathoden-Kammer mit der darin befindlichen Funktionseinheit (43) wird verschlossen, indem die Stirnflächen (8b) und (44b) von dem Hohl-Zylinder (8a) und dem Ringzylinder (44) mit den Ringflächen (36b) und (36c) der Modul-Platte (36) miteinander verbunden werden. Die Funktionseinheit (43) der mittleren Kathoden-Kammer wird dabei durch die in der Modul-Platte (36) fixierten und in den mittleren Kathodenraum hineinreichenden Kontaktstifte (47) und (48) gegen den Halb-Kondensator (30) gedrückt, wodurch ein elektrischer Kontakt mit der Kathoden-Elektrode (4) hergestellt wird.

Die Modul-Platte (36) ist mit einem Durchgangsloch (36a) versehen, welches einen Zugang zu dem Innenraum des Hohlzylinders (8a) herstellt. Durch dieses Durchgangsloch wird der Hohlzylinder (8a) mit Elektrolyt (8) gefüllt. Der Füllvorgang wird beendet und das Durchgangsloch verschlossen, sobald der Elektrolyt in der Modul-Platte (36) eine Höhe von ca. ½ bis ²/₃ der Dicke des Modul-Körpers erreicht hat.

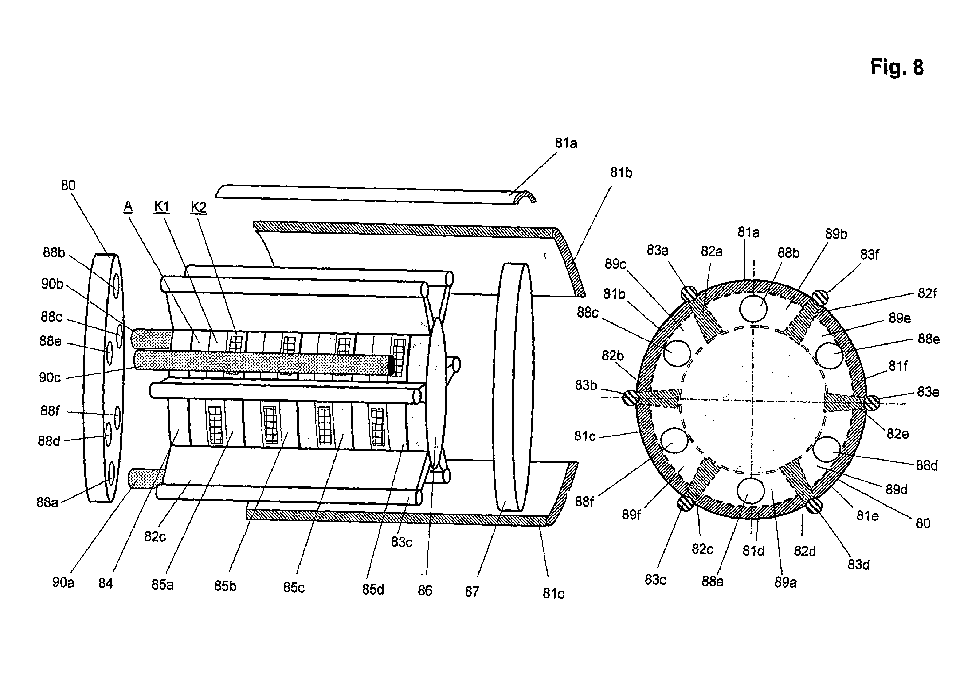

Die **Figur 8** zeigt einen im Innern aus vier Zellen bestehenden zylindrischen Zellenstapel, welcher durch räumliche Anbauten einen Zellenblock bildet. Der linke Teil der Figur stellt schematisch den Zellenblock als Explosionszeichnung liegend dar, während der Teil rechts davon in einer Draufsicht die geometrische Form darstellt.

Im Einzelnen zeigt die Figur 8 den aus vier Brennstoffzellen (85a), (85b), (85c) und (85d) bestehenden Zellenstapel, welcher an beiden Enden mit einer Isolatorplatte (84) und (86) abgeschlossen ist. Der aus Zellen und Isolatorplatten bestehende Stapel ist von insgesamt sechs angebauten Raumteilern (82a), (82b), (82c), (82d), (82e) und (82f) umgeben. Diese sind gegenüber den Zellen und den Isolatorplatten durch Schalenkörper (81a), (81b), (81c), (81d), (81e) und (81f) miteinander verbunden, welche durch die von außen anliegenden Zylinderkörper (83a), (83b), (83c), (83d), (83e) und (83f) mit den Raumteilern fixiert sind. Des Weiteren sind die Raumteiler, die Schalenkörper und die Isolatorplatten an den Stirnseiten mit den beiden Deckplatten (80) und (87) verbunden, wodurch die angebauten Räume (89a), (89b), (89c), (89d), (89e) und (89f) als gemeinschaftliche Zu- und Ableitungen entstehen. Die Räume sind über die Einlässe (88a), (88b), (88c), (88d), (88e) und (88f) von außen zugänglich. Des Weiteren befinden sich in den Räumen (89a), (89c) und (89e) Diffusoren in Form von perforierten Rohren (90a), (90b) und (90c), welche am einen Ende mit den Lochdurchgängen (88a), (88c) und (88e) in der Deckplatte (80) verbunden und am anderem Ende verschlossen sind.

Die angebauten Räume (89a) bis (89f) bilden für die Anoden-Kammer (A), die mittlere Kathoden-Kammer (K1) und die äußere Kathoden-Kammer (K2) Knotenpunkte. Diese Knotenpunkte sind mit den Ein- und den Auslässen der Zellen im Zellenstapel verbunden und es entsteht durch die angebauten Räume eine Parallelschaltung der Zellen. Somit ist der Einlass der Anoden-Kammer (A) mit dem Raum (89a), der Einlass der mittleren Kathoden-Kammer (K1) mit dem Raum (89e), der Einlass der äußeren Kathoden-Kammer (K2) mit dem Raum (89c), der Auslass der Anoden-Kammer (A) mit dem Raum (89b), der Auslass der mittleren Kathoden-Kammer (K1) mit dem Raum (89f) und der Auslass der äußeren Kathoden-Kammer (K2) mit dem Raum (89d) verbunden.

Die gleichmäßige Verteilung des Eintrittsgases in den Räumen (89a), (89c) und (89e) auf die Einlässe der Anoden-Kammer (A), der mittleren Kathoden-Kammer (K1) und der äußeren Kathoden-Kammer (K2) geschieht durch die vorherige Verwirbelung der Gasströme durch die Perforation in den Diffusoren (90a), (90b) und (90c). Die Perforation ist vorzugsweise auf die äußeren Schalenkörper (81d), (81b) und (81f) gerichtet, von welcher die Gasströme in Richtung Einlass der Anoden-Kammer (A), dem Einlass der mittleren Kathoden-Kammer (K1) und dem Einlass der äußeren Kathoden-Kammer (K2) verwirbelt werden und sich der zugeführte Stoffstrom in den angebauten Zuleitungen vergleichmäßigt.

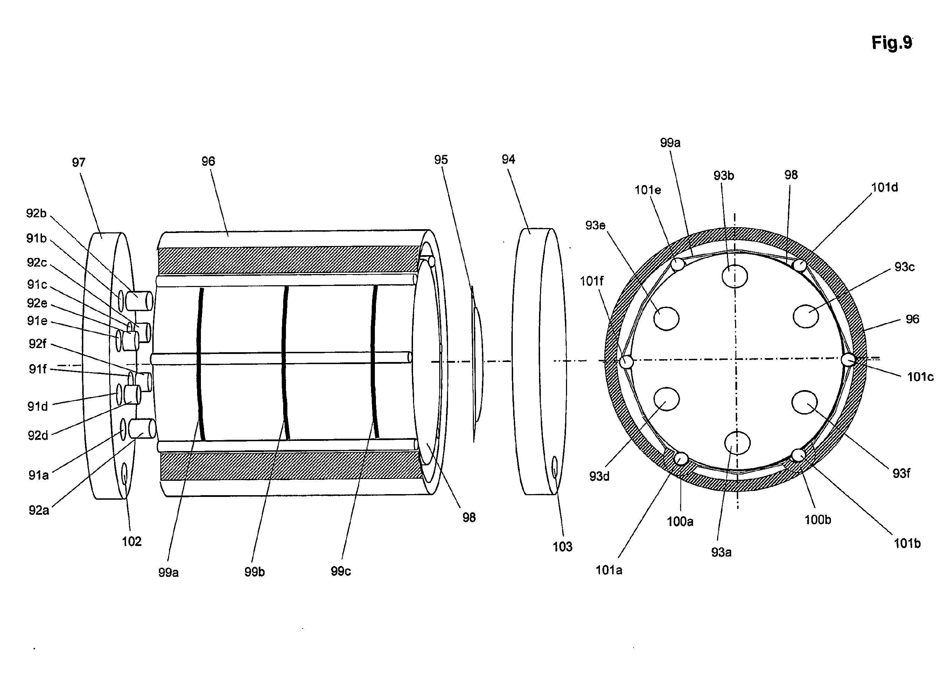

Die **Figur 9** zeigt die in einem Zylindermantel eingehauste betriebsbereite Brennstoffzelle mit einer eingebauten Tellerfeder. Der linke Teil der Figur stellt schematisch den Zellenblock mit der Einmantelung als Explosionszeichnung liegend dar, während der Teil rechts davon in einer Draufsicht die geometrische Form der Brennstoffzelle insgesamt sowie die Führung des Zellenblocks innerhalb der Einmantelung darstellt.

Im Einzelnen zeigt die Figur 9 den Zellenblock (98) und seine Einhausung. Die Einhausung besteht aus einer Bodenplatte (94), dem den Zellenblock (98) umschließenden Zylinder (96) und die Deckplatte (97). Im Innern des Zylinders befinden sich die Führungsschienen (100a) und (100b), auf welchen der Zellenblock (98) durch die Zylinderkörpern (101a) und (101b) beabstandet, ruht. Gleichzeitig dienen die zwei Schienen dazu, die thermisch bedingte Ausdehnung des Zellenblocks (98) in axialer Richtung zuzulassen. Die drei Spannbänder (99a), (99b) und (99c) umspannen den Zellenblock (98) mit den dazwischen liegenden Zylinderkörpern (101a), (101b), (101c), (101d), (101e) und (101f). Durch die Spannbänder wird die aus Schalen zusammengesetzte Außenwand des Zellenstapels zusammengehalten. Der Zellenblock (98) wird von der Bodenplatte (94) ausgehend durch die Federkraft der Tellerfeder zusammengepresst, wobei die Deckplatte (97) den Anschlag für den Zellenblock (98) bildet. Durch die Federkraft der Tellerfeder wird der Zellenstapel (98) in axialer Richtung in der Einhausung so eingespannt, dass er die Ausdehnungsbewegung in eine Federspannung umsetzen muss und die Ausdehnungsbewegung gleichzeitig auf den Führungsschienen (100a) und (100b) stattfindet, während die radiale Ausdehnungsbewegung des Zellenblocks (98) in den Spannbändern (99a), (99b) und (99c) in eine Federspannung umgesetzt wird.

Die Zu- und die Ableitungen (92a), (92b), (92c), (92d), (92e) und (92f) für die Gasströme sind mit den Ein- und Auslässen ((93a), (93b), (93c), (93d), (93e) und (93f) des Zellenblocks (98) fest verbunden und führen von diesen durch die Durchgänge (91a), (91b), (91c), (91d), (91e) und (91f) der Deckplatte (97) aus dem den Zellenblock (98) umschließenden Zylinderkörper, bestehend aus Zylinder (96), Bodenplatte (94) und Deckplatte (97), heraus. Die vom Zellenblock (98) abgegebene Abwärme wird durch vorbeiströmende Luft von der Oberfläche desselben abgeführt. Hierzu befinden sich in der Bodenplatte (94) und der Deckplatte (97) jeweils ein Ein- und ein Auslass (102) und (103), durch welche der innere Zellenstapel (98) auf seiner Außenwand mit Luft gekühlt wird.

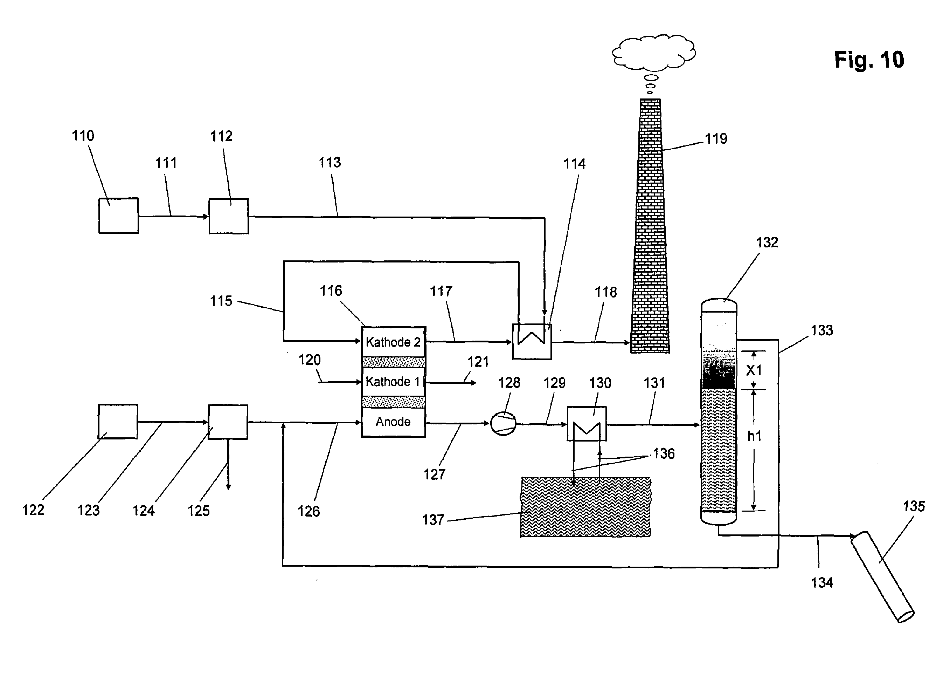

Die **Figur 10** zeigt eine Brennstoffzelle, welche zwischen einer Rauchgasreinigungs-Anlage eines Kohlekraftwerkes und dem Kamin geschaltet ist und welche das im Rauchgas enthaltene Kohlendioxid entfernt, verflüssigt und über eine Pipeline zu einem Endlager transportiert, während das von Kohlendioxid befreite Rauchgas durch den Kamin in die Atmosphäre gelangt.

Im Einzelnen zeigt die Figur 10 einen Kohle betriebenen Dampfererzeuger (110), eine Entstaubungs-, Entschwefelungs- und Entstickungs-Anlage (112), nachfolgend kurz 3E-Anlage genannt, einen Wärmetauscher (114), eine Brennstoffzelle (116), einen Kamin (119), einen Synthesegas-Erzeuger (122), eine PSA-Anlage (124), einen Kompressor (128), einen Wärmetauscher (130), einen Druckbehälter (132) und eine Pipeline (135).

Die äußere Kathoden-Kammer, Kathode 2 der Brennstoffzelle (116) ist mit ihrem Einlass über die Verbindungen (111) und (113) mit der 3E-Anlage (112) und dem Kohle betriebenen Dampferzeuger (110) sowie mit ihrem Auslass über die Verbindungen (117) und (118) mit dem Wärmetauscher (114) und dem Kamin (119) verbunden. Das Kohlendioxid enthaltende Rauchgas aus dem Dampferzeuger (110) wird in der 3E-Anlage (112) von Staub, Schwefel und Stickoxiden befreit, bevor es in die Kathoden-Kammer von Kathode 2 der Brennstoffzelle (116) gelangt. Dort wird das Kohlendioxid von dem Rauchgas abgereichert. Über den Auslass der Kathoden-Kammer 2 und der bezeichneten Verbindungen gelangt das Kohlendioxid-arme Rauchgas zum Kamin, von welchem es in die Atmosphäre gelangt, nachdem ihm zuvor durch den Wärmetauscher (114) ein wesentlicher Teil an enthaltener Enthalpie entzogen wurde. Mit der auf den Sekundärkreis übertragenen Enthalpie wird das Kohlendioxidreiche Rauchgas aus der 3E-Anlage im Wärmetauscher (114) so weit erhitzt, dass es die zulässige Betriebstemperatur für den Eintritt in die Kathoden-Kammer von Kathode 2 erreicht.

Die Anoden-Kammer der Brennstoffzelle (116) ist mit ihrem Einlass über die Verbindungen (126) und (123) mit der PSA-Anlage (124) und dem Synthesegas-Erzeuger (122) sowie über die Verbindung (133) mit dem Kopfraum des Druckbehälters (132) verbunden. Des Weiteren ist die Anoden-Kammer mit ihrem Auslass über die Verbindungen (127), (129) und (131) mit dem Kompressor (128), dem Wärmetauscher (130) und dem Druckbehälter (132) verbunden.

In der PSA-Anlage (124) wird das im Synthesegas-Erzeuger (122) erzeugte Synthesegas, welches aus Kohlenmonoxid und Wasserstoff besteht, selektiv in die Komponenten Kohlenmonoxid und Wasserstoff gespalten. Über die Verbindung (125) wird der Wasserstoff einer nicht näher beschriebenen Verwendung zugeführt, während das Kohlenmonoxid als Brenngas über die Verbindung (126) in die Anoden-Kammer der Brennstoffzelle (116) gelangt, in welcher es verstromt wird. Das Abgas aus der Verstromung, welches aus Kohlendioxid und Brenngasschlupf besteht, verlässt die Anoden-Kammer über ihren Auslass und wird im Kompressor (128) durch eine Druckbeladung über den kritischen Wert des Kohlendioxids hinaus komprimiert und im Wärmetauscher (130) so weit herabgekühlt, dass sich das Kohlendioxid verflüssigt, welches daraufhin im Druckbehälter (132) zwischengespeichert wird.

Der Sekundärkreis des Wärmetauschers (130) ist über die Verbindung (136) mit einem Gewässer (137) verbunden. Über diese Verbindung wird die aus dem Primärkreis des Wärmetauschers (128) abgegriffene Enthalpie abgeführt.

Der Druckbehälter (132) verfügt über einen Einlass und zwei Auslässe. In seinem Innern herrscht eine Flüssigkeitssäule mit der Höhe (h1), welche vom Bodenraum aus aufsteigt und aus Kohlendioxid besteht. Über dieser Säule befinden sich nicht verflüssigte und nicht verflüssigbare Stoffe. Zwischen beiden Aggregatzuständen "flüssig und gasförmig" herrscht eine Übergangszone mit der Höhe (X1) aus flüssigen und gasförmigen Stoffen. Der Einlass ist daher in seiner Höhe so gewählt, dass das in flüssiger Form zugeführte Kohlendioxid in die Flüssigkeitssäule und zwar deutlich unterhalb der Höhe (h1) eintaucht und die nicht verflüssigten Stoffe innerhalb der Flüssigkeitssäule zur Oberfläche als Gasblasen aufsteigen. Über den kopfseitigen Auslass wird das Gemisch aus vornehmlich Kohlenmonoxid und nur noch Resten von Kohlendioxid aus dem Druckbehälter abgezogen und über die Verbindung (133) in die Anoden-Kammer der Brennstoffzelle (116) eingespeist, in welcher das Kohlenmonoxid verstromt wird. Über den bodenseitigen Ablass wird kontinuierlich flüssiges Kohlendioxid abgezogen und über die Verbindung (134) in eine nicht näher beschriebene Pipeline (135) abgeführt.

Die Kathoden-Kammer 1 der Brennstoffzelle (116) ist mit ihrem Einlass mit der Verbindung (120) und mit ihrem Auslass mit der Verbindung (121) verbunden. Über den Einlass wird die Brennstoffzelle mit Luftsauerstoff für die Verstromung in der Anoden-Kammer gespeist, während die von Sauerstoff abgereicherte Luft die Kathoden-Kammer über die Verbindung (121) verlässt.

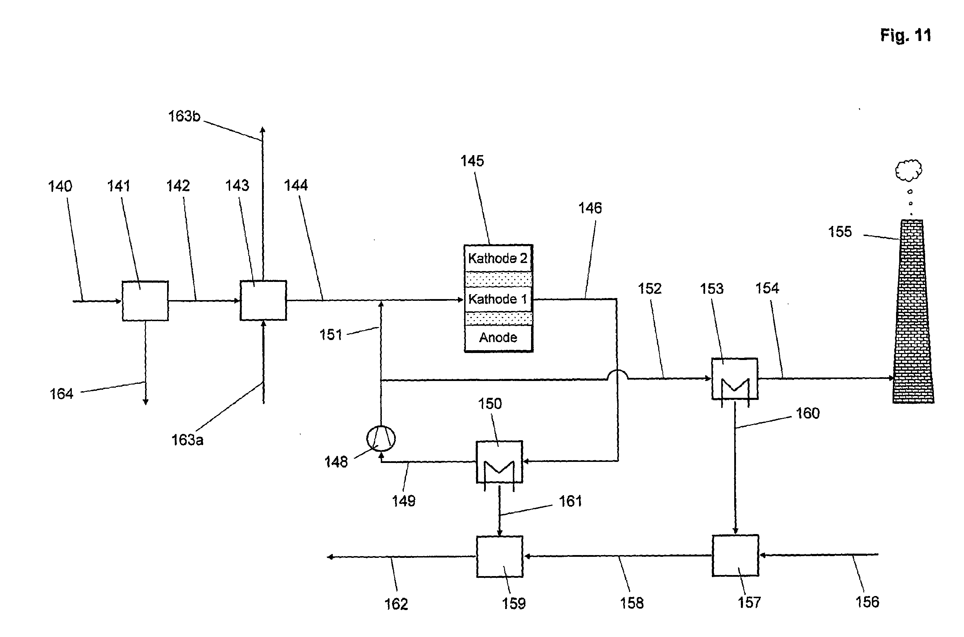

Die **Figur 11** zeigt eine Brennstoffzelle, welche zwischen einer SauerstoffQuelle und einem Kamin geschaltet ist und in welcher der Sauerstoff einerseits für die Verstromung und andererseits für die Kühlung der Brennstoffzelle verwandt wird, während die von Sauerstoff abgereicherte Luft über den Kamin in die Atmosphäre gelangt.

Im Einzelnen zeigt die Figur 11 eine Brennstoffzelle (145), eine PSA-Anlage (141) als Sauerstoffquelle, einen Adsorptionstrockner (143) zur Trocknung der feuchten Luft, diverse Wärmetauscher (150), (153), (157) und (159), ein Gebläse (148) und einen Kamin (155) für die Abluft.

Die mittlere Kathoden-Kammer, die Kathode 1 der Brennstoffzelle (145) ist mit ihrem Einlass über die Verbindungen (144), (142), (140) und (151) mit dem Adsorptions-trockner (143), der PSA-Anlage (141) und mit dem Wärmetauscher (150) verbunden, während der Einlass der PSA-Anlage mit der Atmosphäre verbunden ist. Mit ihrem Auslass ist die Kathoden-Kammer von Kathode 1 der Brennstoffzelle (145) über die Verbindungen (146), (147), (149), (152) und (154) mit dem Wärmetauscher (150) und (153), dem Gebläse (148) und dem Kamin (119) verbunden. Über diesen ist der Auslass der Kathoden-Kammer von Kathode 1 mit der Atmosphäre verbunden.

Die PSA-Anlage (141) wird über die Verbindung (140) mit Luftsauerstoff aus der Atmosphäre gespeist und dieser durch Druckwechsel-Prozess selektiv in Sauerstoff und Stickstoff zerlegt. Während der Stickstoff über die Verbindung (164) einer nicht näher bezeichneten Verwendung zugeführt wird, wird der gewonnene Sauerstoff dem Adsorptionstrockner (143) über die Verbindung (142) zugeführt und in demselben getrocknet, bevor er in die Kathoden-Kammer von Kathode 1 der Brennstoffzelle (145) gelangt. In dieser wird der Sauerstoff zum Zwecke der Verstromung von Brenngas in der Anoden-Kammer abgereichert. Über den Auslass der Kathoden-Kammer von Kathode 1 und der vorbezeichneten Verbindungen gelangt eine Teilmenge des von Sauerstoff abgereicherten Luftgasgemischs als Abluft zum Kamin (155), von welchem es in die Atmosphäre gelangt. Zuvor wird der Abluft im Wärmetauscher (153) ein wesentlicher Teil der in ihr enthaltenden Enthalpie entzogen. Mit der auf den Sekundärkreis übertragenen Enthalpie wird über die Verbindung (161) ein Dampferhitzer (157) gespeist.

Der Kühlkreislauf der Brennstoffzelle (145) beginnt und endet am Auslass der Kathoden-Kammer von Kathode 1 und ist über die Verbindungen (146), (147), (149) und (151) sowie des mit dem Wärmetauscher (150) in Reihe geschalteten Gebläses (148) mit dem Einlass der Kathoden-Kammer verbunden. Über diesen Kreislauf wird der Luftsauerstoff als Kühlmittel im Kreis geführt. Die in der Kathoden-Kammer anfallende Abwärme wird durch den Luftstrom aufgenommen, aus der Kathoden-Kammer abgeführt und im Wärmetauscher (150) dem Luftstrom sodann entzogen. Mit der auf den Sekundärkreis übertragenen Enthalpie wird über die Verbindung (161) ein Dampferhitzer (159) gespeist. Das Kühlmittel Luftsauerstoff wird durch das Gebläse (148) angetrieben.

Die aus den Wärmetauschern (150) und (153) abgegebene Enthalpie wird von den Wärmetauschern (157) und (159) aufgenommen. Diese sind über die Verbindung (158) in Reihe miteinander verbunden. Gespeist wird der Wärmetauscher (157) über die Verbindung (156) mit Kesselspeisewasser. Dieses wird in den beiden Wärmetauschern (157) und (159) derart erhitzt, dass es als Frischdampf den Wärmetauscher (159) über die Verbindung (162) verlässt.

Der Adsorptionströckner (143) wird diskontinuierlich betrieben. Das bedeutet, dass für einen kontinuierlichen Prozess mindestens 2 Zwillingsbehälter erforderlich sind, welche im Wechsel in der Betriebsart "adsorbieren" und "regenerieren" betrieben werden. In der Betriebsart "regenerieren" wird der betreffende Behälter mit sowohl trockenem als auch heißem Stickstoff gespült, welcher über die Verbindung (163a) zuund das Desorptiv gemeinsam mit dem Stickstoff über die Verbindung (163b) abgeführt wird. Der zur gleichen Zeit von der Regenerierung befreite Behälter entzieht der Luft die in ihr steckende Feuchte durch Adsorption.

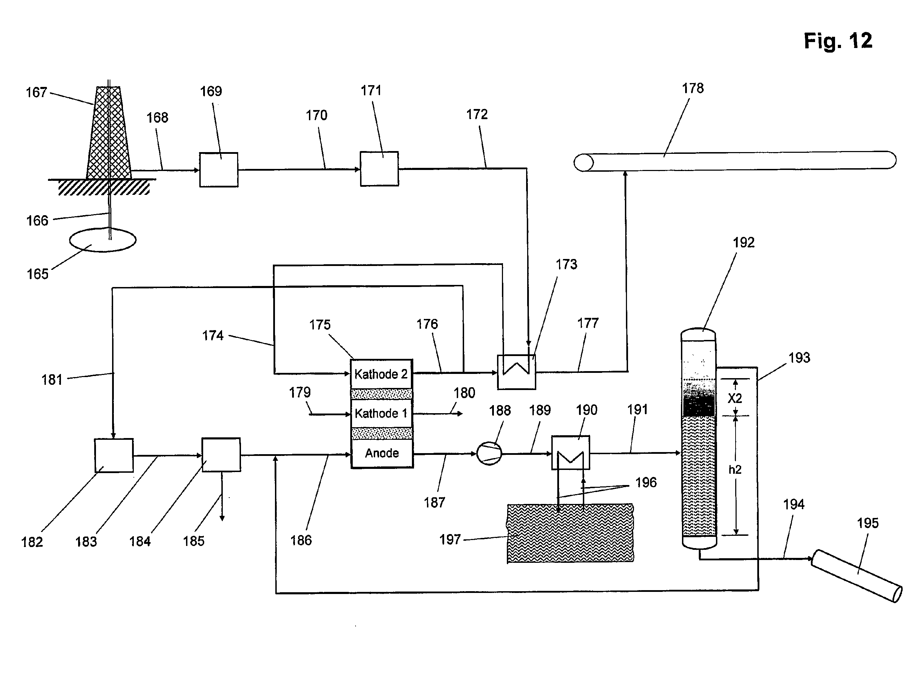

Die **Figur 12** zeigt eine Brennstoffzelle auf einer Erdgaslagerstätte, welche dem geförderten Erdgas das Kohlendioxid entzieht und das gereinigte Erdgas in eine Pipeline einspeist, welche das Erdgas zu den Verbrauchern transportiert, während über eine zweite Pipeline das Kohlendioxid aus dem Erdgas verflüssigt, in eine Kaverne transportiert und endgelagert wird.

Im Einzelnen zeigt die Figur 12 eine Erdgaslagerstätte (165) mit einem darauf angeordneten Förderturm (167), an welchen sich eine Entschwefelungs-Anlage (169), ein Adsorptionstrockner (171), ein Wärmetauscher (173), eine Brennstoffzelle (175), ein Synthesegas-Erzeuger (182), eine PSA-Anlage (184), ein Kompressor (188), ein Wärmetauscher (190), ein Druckbehälter (192) und zwei Pipelines (178) und (195) anschließen.

Die äußere Kathoden-Kammer, die Kathode 2 der Brennstoffzelle (175) ist mit ihrem Einlass über die Verbindungen (166), (168), (170), (172) und (174) mit dem Adsorptionstrockner (171), der Entschwefelungs-Anlage (169), dem Förderturm (167) und der Erdgaslagerstätte (165) sowie mit ihrem Auslass über die Verbindungen (176) und (177) mit dem Wärmetauscher (173) und der Erdgaspipeline (178) sowie über die Verbindung (181) mit dem Synthesegaserzeuger (182) verbunden. Das Kohlendioxid enthaltende Erdgas aus der Erdgaslagerstätte (166) wird durch den Förderturm (167) übertage gefördert, in der Entschwefelungs-Anlage (169) von Schwefel befreit und im Adsorptionstrockner (171) zum Zwecke des Korrosionsschutzes der Pipeline (178) und aus Gründen des späteren Verkaufs getrocknet, bevor es in die Kathoden-Kammer von Kathode 2 der Brennstoffzelle (175) gelangt. Dort wird das Kohlendioxid dem Erdgas entzogen. Eine Teilmenge der von Kohlendioxid abgereicherten Erdgasmenge wird vom Auslass der Kathoden-Kammer von Kathode 2 ab und über die Verbindung (181) dem Synthesegaserzeuger (182) als Edukt zugeführt. Der überwiegende Teil gelangt über die bezeichneten Verbindungen zur Pipeline (178), durch welche das Erdgas zu den nicht näher bezeichneten Verbrauchern gelangt, nachdem ihm zuvor durch den Wärmetauscher (173) ein wesentlicher Teil der im Erdgas enthaltenen Enthalpie entzogen wurde. Mit der auf den Sekundärkreis übertragenen Enthalpie wird das Kohlendioxid enthaltende Erdgas aus dem Adsorptionstrockner (171) so weit erhitzt, dass es die zulässige Betriebstemperatur für den Eintritt in die Kathoden-Kammer von Kathode 2 erreicht.

Der Adsorptionstrockner (171) wird diskontinuierlich betrieben. Das bedeutet, dass für einen kontinuierlichen Prozess mindestens 2 Zwillingsbehälter erforderlich sind, welche im Wechsel in der Betriebsart "adsorbieren" und "regenerieren" betrieben werden. In der Betriebsart "regenerieren" wird der betreffende Adsorptionsbehälter mit sowohl trockenem als auch heißem Stickstoff gespült, welcher über die Verbindung (198) zu- und das Desorptiv gemeinsam mit dem Stickstoff über die Verbindung (199) abgeführt wird. Der zur gleichen Zeit von der Regenerierung befreite Behälter entzieht dem Erdgas die in ihm steckende Feuchte durch Adsorption.

Die Anoden-Kammer der Brennstoffzelle (175) ist mit ihrem Einlass über die Verbindungen (183) und (185) mit der PSA-Anlage (185) und dem Synthesegas-Erzeuger (182) sowie über die Verbindung (193) mit dem Kopfraum des Druckbehälters (192) verbunden. Des Weiteren ist die Anoden-Kammer mit ihrem Auslass über die Verbindungen (187), (189) und (191) mit dem Kompressor (188), dem Wärmetauscher (190) und dem Druckbehälter (192) verbunden.

In der PSA-Anlage (184) wird das im Synthesegas-Erzeuger (182) erzeugte Synthesegas, welches aus Kohlenmonoxid und Wasserstoff besteht, selektiv in die Komponenten Kohlenmonoxid und Wasserstoff gespalten. Über die Verbindung (185) wird der Wasserstoff einer nicht näher beschriebenen Verwendung zugeführte, während das Kohlenmonoxid als Brenngas über die Verbindung (186) in die Anoden-Kammer der Brennstoffzelle (175) gelangt, in welcher es verstromt wird. Das Abgas aus der Verstromung, welches aus Kohlendioxid und Brenngasschlupf besteht, verlässt die Anoden-Kammer über ihren Auslass und wird im Kompressor (188) durch eine Druckbeladung über den kritischen Wert des Kohlendioxids hinaus komprimiert und im Wärmetauscher (190) so weit herabgekühlt, dass das Kohlendioxid verflüssigt, welches daraufhin im Druckbehälter (192) zwischengespeichert werden kann.

Der Sekundärkreis des Wärmetauschers (190) ist über die Verbindung (196) mit einem Gewässer (197) als Wärmesenke verbunden. Über diese Verbindung wird die aus dem Primärkreis des Wärmetauschers (188) entzogene Enthalpie abgeführt.

Der Druckbehälter (192) verfügt über einen Einlass und zwei Auslässe. In seinem Innern herrscht eine Flüssigkeitssäule mit der Höhe (h2), welche vom Bodenraum aus aufsteigt und aus Kohlendioxid besteht. Über dieser Säule befinden sich nicht verflüssigte und nicht verflüssigbare Stoffe. Zwischen beiden Aggregatzuständen "flüssig und gasförmig" herrscht eine Übergangszone mit der Höhe (X2) aus flüssigen und gasförmigen Stoffen. Der Einlass ist daher in seiner Höhe so gewählt, dass das in flüssiger Form zugeführte Kohlendioxid in die Flüssigkeitssäule und zwar deutlich unter der Höhe (h2) eintaucht und die nicht verflüssigten Stoffe innerhalb der Flüssigkeitssäule zur Oberfläche als Gasblasen aufsteigen. Über den kopfseitigen Auslass wird das Gemisch aus vornehmlich Kohlenmonoxid und nur noch Resten von Kohlendioxid aus dem Druckbehälter abgezogen und über die Verbindung (193) in die Anoden-Kammer der Brennstoffzelle (175) eingespeist, in welcher das Kohlenmonoxid verstromt wird. Über den bodenseitigen Ablass wird kontinuierlich flüssiges Kohlendioxid abgezogen und über die Verbindung (194) in eine nicht näher ausgeführte Pipeline (195) abgeführt, welche mit einer nicht näher dargestellten Endlagerstätte verbunden ist, in welcher das Kohlendioxid endgelagert wird.

Die mittlere Kathoden-Kammer, die Kathode 1 der Brennstoffzelle (175) ist mit ihrem Einlass mit der Verbindung (179) und mit ihrem Auslass mit der Verbindung (180) verbunden. Über den Einlass wird die Brennstoffzelle mit Luftsauerstoff für die Verstromung in der Anoden-Kammer gespeist, während die von Sauerstoff abgereicherte Abluft die Kathoden-Kammer über deren Auslass verlässt.

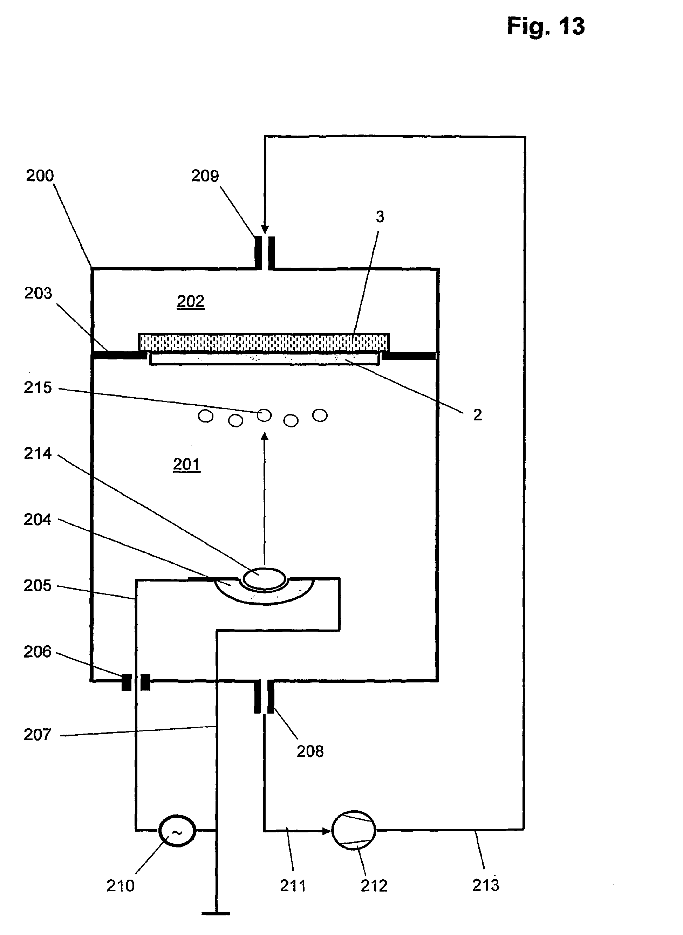

Die **Figur 13** zeigt einen Aufdampfprozess, in welchem eine Elektrolytmatrix mit einer Gas durchlässigen Anoden-Elektrode beschichtet wird.

Im Einzelnen zeigt die Figur 13 einen Rezipienten (200) mit den beiden Kammern (201) und (202), einem Substrathalter (203), eine Verdampferquelle (204), eine Energiequelle (210), eine Vakuumpumpe und die Elektrolytmatrix (3) als Auslass für die Kammer (202) und als Einlass für die Kammer (201).

Die Elektrolytmatrix (3) ist mit einem Substrathalter (203) verbunden und teilt den Rezipienten (200) in die Kammern (201) und (202) auf. Die Kammer (202) wird über den Einlass (209) mit Spülgas gespeist. Das Spülgas verlässt die Kammer (202), indem es durch die Porengänge der Elektrolytmatrix (3) in die Kammer (201) strömt. Dort verlässt das Spülgas die Kammer (201) über den Auslass (208). Über die Verbindung (208) ist der Auslass mit dem Eingang einer Vakuumpumpe (212) verbunden, welche die Kammer (201) auf ein Vakuum zwischen 10⁻³ und 10⁻⁴ Pa einstellt. Der Ausgang der Vakuumpumpe (212) ist über die Verbindung (213) mit dem Einlass (209) der Kammer (202) verbunden, über welche das Spülgas im Kreis geführt wird.

Die Verdampferquelle (214) ist über die Verbindung (205) und (206) mit der Energiequelle (210) verbunden, über welche die Verdampferquelle mit Energie gespeist wird, wobei die Verbindung (205) eine Vakuumschleuse (206) durchgreift.

Auf der Verdampferquelle (204) liegt das zu verdampfende Material auf, welches durch die Verdampferquelle (204) soweit erhitzt wird, dass es verdampft. Das verdampfte Material steigt als Dampf (215) auf und schlägt sich auf der Elektrolytmatrix (3) als Anoden-Elektrode (2) nieder. An den Porenausgängen der Elektrolytmatrix (3), welche von Spülgas durchströmt werden, findet aufgrund der Strömung durch das Spülgas kein Niederschlag statt.

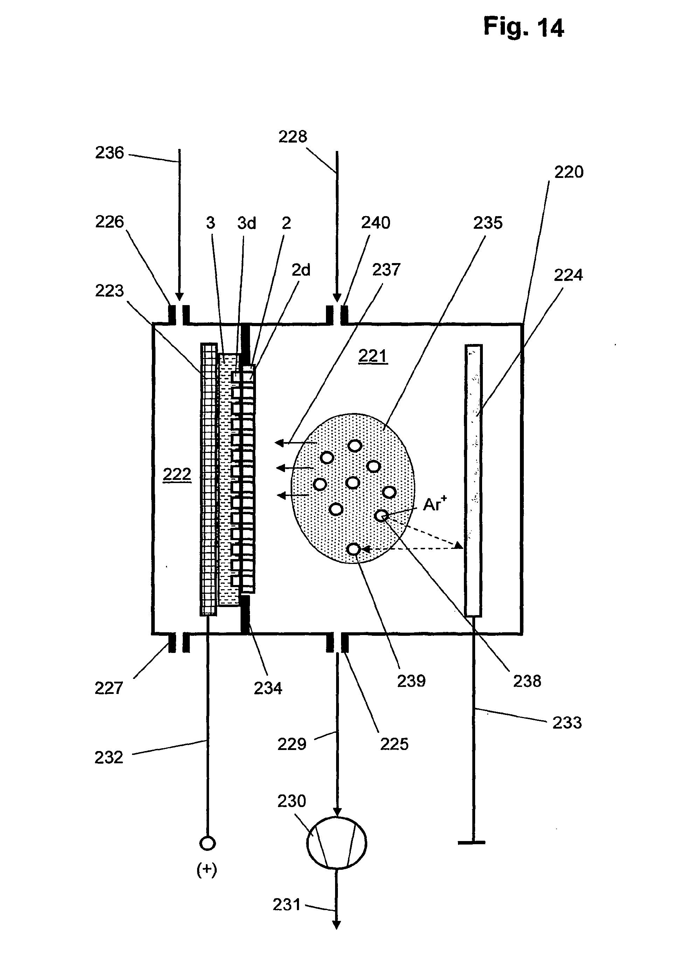

Die **Figur 14** zeigt einen Sputterprozess, in welchem eine Elektrolytmatrix mit einer Gas durchlässigen Anoden-Elektrode beschichtet wird.

Im Einzelnen zeigt die Figur 14 einen Rezipienten (220) mit den beiden Kammern (221) und (222), einen Substrathalter (234), eine Anode (223), eine Targetkathode (224), eine Vakuumpumpe (230) sowie die Elektrolytmatrix (3) als Auslass der Kammer (222) und als Einlass der Kammer (221).

Die Elektrolytmatrix (3) ist mit einem Substrathalter (234) verbunden und teilt den Rezipienten (220) in die Kammern (221) und (222) auf. Die Kammer (221) wird vor Prozessbeginn über den Einlass (224) mit Prozessgas als Spülgas gespült und die vorhandene Luft aus der Kammer (221) verdrängt, indem die Luft und das Spülgas die Kammer (221) über den Auslass (225) verlassen. Ebenso wird die Kammer (222) in gleicher Weise mit Spülgas gespült. Hierzu wird das Spülgas über den Einlass (226) zugeführt und über den Auslass (227) zusammen mit der vorhandenen Luft abgeführt.

Nach erfolgter Spülung durch das Spülgas werden der Einlass (240) und der Auslass (227) verschlossen und mit der Vakuumpumpe (230) die Kammer (221) auf einen Wert von einigen Zehntel Pa bis ca. 15 Pa evakuiert. Hierzu ist der Eingang der Vakuumpumpe über die Verbindung (229) mit dem Auslass (225) verbunden, über welche die Kammer (221) entleert wird. Der Ausgang der Vakuumpumpe (230) ist mit der Verbindung (231) verbunden, über welche Prozessgas abgeführt wird. Gleichzeitig wird die Kammer (222) über ihren Einlass (226) durch die Verbindung (236) mit Argon als Prozessgas gespeist. Dieses strömt von der Kammer (222) durch die Porengänge der Elektrolytmatrix (3) und füllt die Kammer (221) an, wobei eine gleich große Menge an Prozessgas über den Auslass (225) abgeführt wird.

Die Targetkathode (224) ist während des Prozesses über die Verbindung (233) mit dem Minus-Pol und die Anode (223) über die Verbindung (232) mit dem Plus-Pol einer Stromquelle verbunden, wobei die Anode (223) Gas durchlässig ist und an der Elektrolytmatrix (3) anliegt. Die positiv geladenen Argonionen werden zur negativen Targetkathode (224) hin beschleunigt und schlagen aus der Oberfläche Atome (239) heraus. Das Herausschlagen der Atome erfolgt durch eine Impulsübertragung. Neben den abgestäubten Atomen entstehen durch den Ionen-Beschuss eine Reihe weiterer Wechselwirkungsprodukte wie Sekundärelektronen und -ionen, Röntgenstrahlung und Photonen. Die Sekundärionen ionisieren neutrale Argonatome zu Ar⁺ und sorgen somit für die Aufrechterhaltung des Plasmas (235), welches sich als Dampf (237) an der Elektrolytmatrix (3) niederschlägt, wobei die Porengänge der Elektrolytmatrix (3) durch das in Richtung Kammer (221) hindurchströmende Prozessgas frei bleiben und sich eine Gas durchlässige Anoden-Elektrode (2) bildet.

### Bezugszeichenliste Figur 1

| **Nr.** | **Bezeichnung** |
|---|---|
| 1 | Anoden-Kammer |
| 2 | Anoden-Elektrode |
| 2a | Stromkollektor für die Anoden-Elektrode |
| 2b | Elektrische Verbindung zwischen Anoden-Elektrode und Stromkollektor |
| 3 | Elektrolytmatrix |
| 4 | Kathoden-Elektrode |
| 4a | Stromkollektor für die Kathoden-Elektrode |
| 4b | Elektrische Verbindung zwischen Kathoden-Elektrode und Stromkollektor |
| 5 | Mittlere Kathoden-Kammer |
| 6 | Elektrolytmatrix |
| 7 | Äußere Kathoden-Kammer |
| 8 | Elektrolytkanal |
| 9 | Einlass Anoden-Kammer |
| 10 | Einlass mittlere Kathoden-Kammer |
| 11 | Einlass äußere Kathoden-Kammer |
| 12 | Auslass Anoden-Kammer |
| 13 | Auslass mittlere Kathoden-Kammer |
| 14 | Auslass äußere Kathoden-Kammer |
| 15 | Elektrische Verbindung zwischen Anoden-Elektrode und Widerstand |
| 16 | Elektrische Verbindung zwischen Widerstand und Kathoden-Elektrode |
| 17 | Widerstand |
| 18 | Stromfluss zum Widerstand |
| 19 | Stromfluss vom Widerstand |

### Bezugszeichenliste Figur 2

| **Nr.** | **Bezeichnung** |
|---|---|
| 20 | Anoden-Elektrode |
| 20a | Anschluss Anoden-Elektrode |
| 21 | Elektrolyt |
| 22 | Kathoden-Elektrode |
| 22a | Anschluss Kathoden-Elektrode |
| E | Elektrisches Feld |

### Bezugszeichenliste Figur 3

| **Nr.** | **Bezeichnung** |
|---|---|
| 2 | Anoden-Elektrode |
| 2c | Anschluss Anoden-Kondensatorplatte |
| 2d | Einlass |
| 2e | Poröse Anoden-Kondensatorplatte |
| 3 | Elektrolytmatrix |
| 3c | Elektrolyt |
| 4 | Kathoden-Elektrode |
| 4c | Anschluss Kathoden-Elektrode |
| 4g | Kathoden-Kondensatorplatte als Metallschwamm |
| E | Elektrisches Feld |

### Bezugszeichenliste Figur 4

| **Nr.** | **Bezeichnung** |
|---|---|
| 2 | Anoden-Elektrode |
| 2d | Durchlass |
| 3 | Elektrolytmatrix |
| 3a | Keramikkorn |
| 3b | Verbindung zwischen den Keramikkörnern |
| 3c | Elektrolyt |
| 3d | Elektrolytraum |
| 4 | Kathoden-Elektrode |
| 4c | Kathoden-Elektrode |
| 4d | Metallkorn |
| 4e | Verbindung zwischen Metallkörnern |
| 4f | Elektrolytraum |
| 4g | Poröse Kathoden-Kondensatorplatte |
| 23 | Lupe |
| 24 | Lupe |
| 25 | Lupe |
| 26 | Lupe |
| 27 | Lupe |

### Bezugszeichenliste Figur 5

| **Nr.** | **Bezeichnung** |
|---|---|
| 2 | Anoden-Elektrode |
| 2a | Stromkollektor für Anoden-Elektrode |
| 2b | Dreieckprofil (31), Gas durchlässiges Blech (2c) und poröse Anoden-Kondensator-Platte (2e) |
| 2c | Gas durchlässiges Blech |
| 2e | Anoden-Kondensator-Platte |
| 3 | Elektrolytmatrix |
| 4 | Kathoden-Elektrode |
| 4a | Stromkollektor für Kathoden-Elektrode |
| 4b | Dreieckprofil (32) und Gas durchlässiges Blech (4c) |
| 4c | Gas durchlässiges Blech |
| 30 | Halb-Kondensator |
| 31 | Dreieckprofil |
| 32 | Dreieckprofil |
| 32a | Halbe Schenkellänge |
| 32b | Halbe Schenkellänge |
| 32c | Nach außen geklappte Schenkellänge (32a) |
| 32d | Nach außen geklappte Schenkellänge (32b) |
| 32e | Schweißnaht |
| 33a | Umklappung von (32a) nach (32c) |
| 33b | Umklappung von (32b) nach (32d) |
| 33c | Durchtrennung des Schenkels in die Hälften (32c) und (32d) |
| 34 | Öffnung im gelochten Blech (34) |
| 35 | Lupe |
| 42 | Funktionseinheit in der Anoden-Kammer (1) |
| 43 | Funktionseinheit in der Kathoden-Kammer (5) |
| F1 | Andruckkraft für Stromkollektor Anode |
| F2 | Andruckkraft für Stromkollektor Kathode |

### Bezugszeichenliste Figur 6

| **Nr.** | **Bezeichnung** |
|---|---|
| 6 | Elektrolytmatrix |
| 6a | Elektrolytraum |
| 6b | Keramikkörner |
| 6c | Verbindung zwischen Keramikkörnern |
| 7 | äußere Kathoden-Kammer |
| 11 | Einlass äußere Kathoden-Kammer |
| 14 | Auslass äußere Kathoden-Kammer |
| 36 | Modul-Platte, bestehend aus: Elektrolytmatrix (6) und äußere Kathoden-Kammer (7) |
| 37 | Lupe |
| 38 | Lupe |
| 53 | Kohlendioxid enthaltende Gasmischung |

### Bezugszeichenliste Figur 7

| **Nr.** | **Bezeichnung** |
|---|---|
| 1 | Anoden-Kammer |
| 2 | Anoden-Elektrode |
| 3 | Elektrolytmatrix |
| 4 | Kathoden-Elektrode |
| 5 | Mittlere Kathoden-Kammer |
| 6 | Elektrolytmatrix |
| 7 | Äußere Kathoden-Kammer |
| 8 | Elektrolytkanal und Elektrolyt-Depot |
| 8a | Elektrolyt |
| 9 | Zuleitung zu Einlass Anoden-Kammer |
| 10 | Zuleitung zu Einlass mittlere Kathoden-Kammer |
| 11 | Zuleitung zu Einlass äußere Kathoden-Kammer |
| 12 | Ableitung von Auslass Anoden-Kammer |
| 13 | Ableitung von Auslass mittlere Kathoden-Kammer |
| 14 | Ableitung von Auslass äußere Kathoden-Kammer |
| 30 | Halb-Kondensator |
| 30a | Äußere Kreisfläche als Klebefläche für Gegenfläche (41b) |
| 30b | Äußere Kreisfläche als Klebefläche für Gegenfläche (44a) |
| 30c | Vorgesehene Anschlussstelle für den Elektrolytkanal (8) mit umfassender Ringfläche als Klebestelle für den Hohl-Zylinder (8a) mit seiner äußeren Zylinder-Ringfläche (8c) |
| 36 | Modul-Platte, bestehend aus: Elektrolytmatrix (6) und Kathoden-Kammer (7) |
| 36a | Durchlass zur Befüllung des Zylinder-Hohlkörpers (8a) mit Elektrolyt (8) |
| 36b | Innere Ringfläche als Klebefläche für Zylinder-Hohlkörper (8a) |
| 36c | Äußere Ringfläche als Klebefläche für die Zylinderringfläche (44b) |
| 36d | Durchlass für Kontaktstift 47 |
| 36e | Durchlass für Kontaktstift 48 |
| 40 | Blind-Platte |
| 40a | Kreisringfläche als Klebefläche für Zylinderringfläche (41a) |
| 40b | Durchlass für Kontaktstift (45) |
| 40c | Durchlass für Kontaktstift (46) |
| 41 | Anoden-Kammer (1) umfassender Zylinderring |
| 41a | Äußere Zylinderringfläche als Klebefläche für Gegenfläche (40a) |
| 41b | Äußere Zylinderringfläche als Klebefläche für Gegenfläche (30a) |
| 42 | Funktionseinheit für die Anoden-Kammer (1), bestehend aus: Stromkollektor (2a), Dreieckprofil (31), gasdurchlässigem Blech (2c) und Anoden-Kondensator-Platte (2e) |
| 43 | Funktionseinheit für die Kathoden-Kammer (5), bestehend aus: Stromkollektor (4a), Dreieckprofil (32) und gasdurchlässigem Blech (4c) |
| 43a | Durchlass durch den Anschluss-Modul (43) für den Elektrolytkanal (8) |
| 44 | Mittlere Kathoden-Kammer (5) umfassender Zylinderring |
| 44a | Zylinderringfläche als Klebefläche für die äußere Kreisfläche (30b) |
| 44b | Zylinderringfläche als Klebefläche für die äußere Kreisfläche (36c) |
| 45 | Kontaktstift |
| 46 | Kontaktstift |
| 47 | Kontaktstift |
| 48 | Kontaktstift |
| 49 | Anoden-Brenngas |
| 50 | Anoden-Abgas |
| 51 | Kathoden-Luft-Sauerstoff |
| 52 | Kathoden-Abluft |
| 53 | Kohlendioxid enthaltendes Gasgemisch |
| 54 | Kohlendioxid enthaltendes Gasgemisch mit Rest-Kohlendioxid-Gehalt |

### Bezugszeichenliste Figur 8

| **Nr.** | **Bezeichnung** |
|---|---|
| 80 | Deckplatte |
| 81 a | Schalenkörper |
| 81b | Schalenkörper |
| 81c | Schalenkörper |
| 81d | Schalenkörper |
| 81e | Schalenkörper |
| 81f | Schalenkörper |
| 82a | Raumteiler |
| 82b | Raumteiler |
| 82c | Raumteiler |
| 82d | Raumteiler |
| 82e | Raumteiler |
| 82f | Raumteiler |
| 83a | Zylinderkörper |
| 83b | Zylinderkörper |
| 83c | Zylinderkörper |
| 83d | Zylinderkörper |
| 83e | Zylinderkörper |
| 83f | Zylinderkörper |
| 84 | Isolatorplatte |
| 85a | Brennstoffzelle |
| 85b | Brennstoffzelle |
| 85c | Brennstoffzelle |
| 85d | Brennstoffzelle |
| 86 | Isolatorplatte |
| 87 | Deckplatte |
| 88a | Einlass |
| 88b | Auslass |
| 88c | Einlass |
| 88d | Auslass |
| 88e | Einlass |
| 88f | Auslass |
| 89a | Angebauter Raum |
| 89b | Angebauter Raum |
| 89c | Angebauter Raum |
| 89d | Angebauter Raum |
| 89e | Angebauter Raum |
| 89f | Angebauter Raum |
| 90a | Diffusor |
| 90b | Diffusor |
| 90c | Diffusor |
| A | Anoden-Kammer der Brennstoffzelle |
| K1 | Mittlere Kathoden-Kammer der Brennstoffzelle |
| K2 | Äußere Kathoden-Kammer der Brennstoffzelle |

### Bezugszeichenliste Figur 9

| **Nr.** | **Bezeichnung** |
|---|---|
| 91 a | Durchgang |
| 91b | Durchgang |
| 91c | Durchgang |
| 91d | Durchgang |
| 91e | Durchgang |
| 91f | Durchgang |
| 92a | Zuleitung |
| 92b | Ableitung |
| 92c | Zuleitung |
| 92d | Ableitung |
| 92e | Zuleitung |
| 92f | Ableitung |
| 93a | Einlass |
| 93b | Auslass |
| 93c | Einlass |
| 93d | Auslass |
| 93e | Einlass |
| 93f | Auslass |
| 94 | Bodenplatte |
| 95 | Tellerfeder |
| 96 | Zellenblock umschließender Zylinder |
| 97 | Deckplatt |
| 98 | Zellenblock |
| 99a | Spannband |
| 99b | Spannband |
| 99c | Spannband |
| 100a | Führungsschiene |
| 100b | Führungsschiene |
| 101a | Zylinderkörper |
| 101b | Zylinderkörper |
| 101c | Zylinderkörper |
| 101d | Zylinderkörper |
| 101e | Zylinderkörper |
| 101f | Zylinderkörper |
| 102 | Einlass |
| 103 | Auslass |

### Bezugszeichenliste Figur 10

| **Nr.** | **Bezeichnung** |
|---|---|
| 110 | Kohlebetriebener Dampferzeuger |
| 111 | Verbindung |
| 112 | Entstaubungs-, Entschwefelungs- und Entstickungs-Anlage, kurz 3E-Anlage |
| 113 | Verbindung |
| 114 | Wärmetauscher |
| 115 | Verbindung |
| 116 | Brennstoffzelle |
| 117 | Verbindung |
| 118 | Verbindung |
| 119 | Kamin |
| 120 | Verbindung |
| 121 | Verbindung |
| 122 | Synthesegas-Erzeuger |
| 123 | Verbindung |
| 124 | PSA-Anlage |
| 125 | Ableitung für Wasserstoff |
| 126 | Verbindung |
| 127 | Verbindung |
| 128 | Kompressor |
| 129 | Verbindung |
| 130 | Wärmetauscher |
| 131 | Verbindung |
| 132 | Druckbehälter |
| 133 | Verbindung |
| 134 | Verbindung |
| 135 | Pipeline |
| 136 | Verbindung |
| 137 | Gewässer |
| h1 | Höhe der Kohlendioxid-Flüssigkeitssäule |
| X1 | Übergangszone |

### Bezugszeichenliste Figur 11

| **Nr.** | **Bezeichnung** |
|---|---|
| 140 | Verbindung |
| 141 | PSA-Anlage |
| 142 | Verbindung |
| 143 | Adsorptionstrockner |
| 144 | Verbindung |
| 145 | Brennstoffzelle |
| 146 | Verbindung |
| 147 | Verbindung |
| 148 | Gebläse |
| 149 | Verbindung |
| 150 | Wärmetauscher |
| 151 | Verbindung |
| 152 | Verbindung |
| 153 | Wärmetauscher |
| 154 | Verbindung |
| 155 | Kamin |
| 156 | Verbindung |
| 157 | Wärmetauscher |
| 158 | Verbindung |
| 159 | Wärmetauscher |
| 160 | Verbindung |
| 161 | Verbindung |
| 162 | Verbindung |
| 163a | Verbindung |
| 163b | Verbindung |
| 164 | Verbindung |

### Bezugszeichenliste Figur 12

| **Nr.** | **Bezeichnung** |
|---|---|
| 165 | Erdgaslagerstätte |
| 166 | Verbindung |
| 167 | Förderturm |
| 168 | Verbindung |
| 169 | Entschwefelungs-Anlage |
| 170 | Verbindung |
| 171 | Adsorptionstrockner |
| 172 | Verbindung |
| 173 | Wärmetauscher |
| 174 | Verbindung |
| 175 | Brennstoffzelle |
| 176 | Verbindung |
| 177 | Verbindung |
| 178 | Erdgas-Pipeline |
| 179 | Verbindung |
| 180 | Verbindung |
| 181 | Verbindung |
| 182 | Synthesegas-Erzeuger |
| 183 | Verbindung |
| 184 | PSA-Anlage |
| 185 | Ableitung für Wasserstoff |
| 186 | Verbindung |
| 187 | Verbindung |
| 188 | Kompressor |
| 189 | Verbindung |
| 190 | Wärmetauscher |
| 191 | Verbindung |
| 192 | Druckbehälter |
| 193 | Verbindung |
| 194 | Verbindung |
| 195 | Kohlendioxid-Pipeline |
| 196 | Verbindung |
| 197 | Gewässer |
| h2 | Kohlendioxid-Flüssigkeitssäule |
| X2 | Übergangszone |

### Bezugszeichenliste Figur 13

| **Nr.** | **Bezeichnung** |
|---|---|
| 2 | Anoden-Elektrode |
| 3 | Elektrolytmatrix |
| 200 | Rezipient |
| 201 | Kammer |
| 202 | Kammer |
| 203 | Substrathalter |
| 204 | Verdampferquelle |
| 205 | Verbindung |
| 206 | Vakuumschleuse |
| 207 | Verbindung |
| 208 | Auslass |
| 209 | Einlass |
| 210 | Energiequelle |
| 211 | Verbindung |
| 212 | Vakuumpumpe |
| 213 | Verbindung |
| 214 | Verdampfungsmaterial |
| 215 | Materialdampf |

### Bezugszeichenliste Figur 14

| **Nr.** | **Bezeichnung** |
|---|---|
| 2 | Anoden-Elektrode |
| 3 | Elektrolytmatrix |
| 220 | Rezipient |
| 221 | Kammer |
| 222 | Kammer |
| 223 | Anode |
| 224 | Targetkathode |
| 225 | Auslass |
| 226 | Einlass |
| 227 | Auslass |
| 228 | Verbindung |
| 229 | Verbindung |
| 230 | Vakuumpumpe |
| 231 | Verbindung |
| 232 | Vebindung |
| 233 | Verbindung |
| 234 | Substrathalter |
| 235 | Plasma |
| 236 | Verbindung |
| 237 | Materialdampf |
| 238 | Argon-Ion |
| 239 | Ausgeschlagenes Atom aus der Targetkathode |
| 240 | Auslass |

## Patentansprüche

1. Brennstoffzelle mit Anoden-Kammer (1), Kathoden-Kammer (5), (7) und Elektrolytraum (3), (6), Durchgriff (8) sowie Zuleitungen (9) für Brenngas und Ableitung (12) für entstehendes Kohlendioxid und Wasser an der Anoden-Kammer (1) und Zuleitungen (10), (11) für Sauerstoff und Kohlendioxid an der Kathoden-Kammer (5), (7) und Ableitung (13) für Luftsauerstoff und (14) für Kohlendioxid enthaltende Stoffe, wobei die Anoden-Kammer (1) und die Kathoden-Kammer (5) einen Metallschwamm und/oder eine Funktionseinheit (42), (43) und die Kathoden-Kammer (7) einen Metall- und/oder Keramikschwamm oder eine Modul-Platte (36) aufnehmen, **gekennzeichnet durch** folgende Merkmale:
a) die Brennstoffzelle ist unterteilt in eine äußere Kathoden-Kammer (7) und eine mittlere Kathoden-Kammer (5),
b) zwischen der Anoden-Kammer (1) und der mittleren Kathoden-Kammer (5) sowie zwischen der mittleren und der äußeren Kathoden-Kammer (5), (7) sind zwei separate Elektrolyträume (3), (6) angeordnet, wobei
c) die mittlere Kathoden-Kammer (5) und/oder die Wandung (44) der mittleren Kathoden-Kammer von einem Elektrolytkanal (8) durchgriffen ist und,
d) die Zu- (10) und Ableitungen (13) für Sauerstoff an der mittleren Kathoden-Kammer (5) und die Zu- (11) und Ableitungen (14) für CO₂ an der äußeren Kathoden-Kammer (7) angeordnet sind.

2. Die Brennstoffzelle nach Anspruch 1, **dadurch gekennzeichnet, dass** über die Zuleitung (11) zur Kathoden-Kammer (7) eine Mischung aus Kohlendioxidgas und weiteren Gasbestandteilen zuführbar ist.

3. Brennstoffzelle nach Anspruch 1 oder 2, **dadurch gekennzeichnet, dass** zwischen den Zu- und Ableitungen (11), (14) an der Kathodenkammer (7) und der Zu- und Ableitung (9), (12) der Anodenkammer (1) die Gase im Kreislauf geführt sind.

4. Brennstoffzelle nach Anspruch 1, **dadurch gekennzeichnet, dass** sich der Elektrolytraum zwischen der Anoden-Kammer (1) und der Kathoden-Kammer (5) aus einem aus drei Schichten bestehenden Schichtkörper besteht, wobei die erste Schicht eine gasdurchlässige Anoden-Elektrode (2), die zweite Schicht eine Elektrolytmatrix (3) und die dritte Schicht eine poröse Kathoden-Elektrode (4g) ist, welche zusammen einen ionisch leitenden Halb-Kondensator (30) bilden, in welchem
a) die Anoden-Elektrode (2) der Plus-Pol und die Kathoden-Elektrode (4) der Minus-Pol ist und
b) die Anoden-Elektrode (2) aus Nickel besteht, welche von Durchlässen (2d) unterbrochen ist, durch welche die Porengänge der Elektrolytmatrix (3) freiliegen und der in den Porengängen eingeschlossene Elektrolyt (3c) sich mit den Rändern der Durchlässe (2d) verbindet und
c) die Kathoden-Kondensatorplatte (4g) aus porösem Nickeloxid besteht und von Elektrolyt (3c) aus der Elektrolytmatrix (3) durchdrungen ist.

5. Brennstoffzelle nach Anspruch 1 bis 4, **dadurch gekennzeichnet, dass**
a) die Anoden-Kammer (1) eine Funktionseinheit (42) besitzt, welche auf der der Anoden-Elektrode (2) zugewandten Seiten durch eine poröse Kondensatorplatte (2e) und dieser gegenüber durch einen Stromkollektor (2a) begrenzt wird und dazwischen ein Profilkörper (31) gegen eine gasdurchlässige Metallschicht (2c) drückt, welche an der Rückseite der Kondensatorplatte (2e) anliegt und diese mit der Anoden-Elektrode (2) verbindet und
b) die mittlere Kathoden-Kammer (5) eine Funktionseinheit (43) besitzt, welche auf der der Elektrode (4) zugewandten Seite durch eine Gas durchlässige Metallschicht (4c) und dieser gegenüber durch eine Stromkollektorplatte (4a) begrenzt wird und dazwischen ein Profilkörper (32) die Stromkollektorplatte (4a) mit der Metallschicht (4c) verbindet, und
c) zwischen der Anoden-Elektrode (2) und der gegenüberliegenden Wand der Anoden-Kammer (1) sowie zwischen der Kathoden-Elektrode (4) und der gegenüber liegenden Wand der Kathoden-Kammer (5) ein Kontaktstift (45 ff) und (47 ff) eine Feder (32c ff) eingebaut ist, durch welche die Stromkollektorplatte (2a) und (4a) mit der Anoden- und Kathoden-Elektrode (2), (4) in Kontakt gehalten werden.

6. Brennstoffzelle nach Anspruch 1 bis 5, **dadurch gekennzeichnet, dass** ein Zylinderring (41), (44) die Funktionseinheit (42), (43) der Anoden- und der Kathoden-Kammer umfasst, welcher an seinen Stirnseiten durch eine Anoden-und Kathoden-Elektrode (2), (4) und einen Deckel (40) und einer Modul-Platte (36) verschlossen ist und der Zylinderring (41), (44) die auf die Verschlussfläche von Anoden- und Kathoden-Kammer einwirkende Kraft (F1), (F2) aufnimmt, diese in die Ringfläche des Zylinderrings einleitet und in dem Zylinder-Ringkörper adsorbiert, wobei der Zylinderring aus Metall oder Keramik besteht und durch einen Kleber mit seinen Verschlüssen verbunden ist.

7. Brennstoffzelle nach Anspruch 1 bis 6, **dadurch gekennzeichnet, dass** eine Modul-Platte (36) die Elektrolytmatrix (6) und die Kathoden-Kammer (7) in sich vereint und die Elektrolytmatrix (6) die Kathoden-Kammer (7) umfasst, wobei der poröse Körper der Elektrolytmatrix (6) Porenräume (6a) besitzt, welche mit Elektrolyt (3c) durchdrungen sind.

8. Brennstoffzelle nach Anspruch 1 bis 7, **dadurch gekennzeichnet, dass** der Elektrolyt-Kanal (8) durch eine Öffnung (36a) in der Modul-Platte (36) mit Elektrolyt gefüllt ist und der in Schmelze befindliche Elektrolyt die Elektrolytmatrix (3) und (6) mit solchem speist.

9. Brennstoffzelle nach Anspruch 1 bis 8, **dadurch gekennzeichnet, dass** eine Reihenschaltung von zwei und mehr Brennstoffzellen erfolgt, indem die elektrische Verbindung zwischen Stromkollektor (4a) der ersten Brennstoffzelle mit dem Stromkollektor (2a) der zweiten Brennstoffzelle verbunden wird, wobei die Verbindung durch einen Kontaktstift (73 ff) erfolg, welcher eine Modul-Platte (36) durchgreift und mit seinem Überstand die Stromkollektoren in Kontakt bringt und metallisch verklebt.

10. Brennstoffzelle nach Anspruch 1 bis 9, **dadurch gekennzeichnet, dass** um die Brennstoffzelle (85a) herum Anschlüsse (86a) bis (89f) für die Ein- (9), (10), (11) und Auslässe (12), (13), (14) derselben und Zu- (92a), (92c), (92e) und Ableitungen (92b), (92d), (92f) angebaut sind.

11. Brennstoffzelle nach Anspruch 1 bis 10, **dadurch gekennzeichnet, dass** mehrere zu einem Stapel geschichtete Brennstoffzellen (85a ff) zu einem Brennstoffzellenblock verschaltet werden, indem die angebauten Räume (89a ff) für die Ein- und Auslässe (9), (10), (11), (12), (13), (16) eine Parallelschaltung bilden und in die angebauten Räume der Zuleitungen Diffusoren (90a), (90b), (90c) eingebaut sind.

12. Brennstoffzelle nach Anspruch 1 bis 11, **dadurch gekennzeichnet, dass** ein Behältnis (94), (96), (97) den Brennstoffzellenblock (98) umfasst, wobei in dem Behältnis Öffnungen (9 1 a) bis (91f) vorgesehen sind, durch welche die Zu- und Ableitungen des Brennstoffzellenblocks hindurchführen und weitere Öffnungen (102), (103) im Behältnis vorgesehen sind, durch welche der Brennstoffzellenblock (98) mit einem diese durchströmenden Kühlmedium gekühlt wird.

13. Brennstoffzelle nach Anspruch 1 bis 12, **dadurch gekennzeichnet, dass** eine Brennstoffzelle (85a) und ein Brennstoffzellenblock (98) durch eine Tellerfeder (95) zusammengehalten werden, indem die Tellerfeder (95) die Brennstoffzelle (85a) und den Brennstoffzellenblock (98) gegen einen Anschlag (97) drückt.

14. Verfahren zur Abreicherung von Kohlendioxid aus Kohlendioxid enthaltenden Gasmischungen, **dadurch gekennzeichnet, dass** man die brennbaren Gase enthaltenen Gasmischungen in die Kathoden-Kammer (7) einer Brennstoffzelle gemäß Anspruch 1 - 13 zuführt.

15. Verfahren zum Betreiben einer Brennstoffzelle nach Anspruch 14, **dadurch gekennzeichnet, dass** die Anoden-Kammer (1) in Abwesenheit von Wasserstoff mit Kohlenmonoxid aus einem Synthesegas-Prozess gespeist wird und sich zwischen dem Synthesegas-Prozess und dem Einlass (9) der Brennstoffzelle ein Gastrenn-Prozess befindet, welcher dem Mischgas aus dem Synthesegas-Prozess den Wasserstoff entzieht und das Kohlenmonoxid enthaltende Gas der Brennstoffzelle und den Wasserstoff einem mit Wasserstoff laufenden Prozess über eine Verbindung zuführt.

16. Verfahren nach Anspruch 14 oder 15, **dadurch gekennzeichnet, dass** die Kathoden-Kammer (5) über ihren Einlass (10) in Abwesenheit von Kohlendioxid mit einem Sauerstoff enthaltenden Gas gespeist wird.

17. Verfahren nach Anspruch 14 - 16, **dadurch gekennzeichnet, dass** die Kathoden-Kammer (5) in Abwesenheit von Feuchte betrieben wird und hierzu der Einlass (10) der Kathoden-Kammer (5) über eine Verbindung mit einem Trockner verbunden ist, in welchem Luftsauerstoff vor dem Eintritt in die Kathoden-Kammer (5) getrocknet wird.

18. Verfahren nach Anspruch 14 - 17, **dadurch gekennzeichnet, dass** die Kathoden-Kammer (5) mit einem in Reihe geschalteten Gebläse und einem Wärmetauscher über ihren Einlass (10) und Auslass (13) kurzgeschlossen sind und in dem Kurzschluss ein Kreislaufgas als Kühlmedium geführt wird, wobei der Kurzschluss kontinuierlich über eine Zuleitung mit Luftsauerstoff aus einer Sauerstoff-Anreicherungs-Anlage gespeist und über eine Ableitung die in der Kathoden-Kammer (5) von Sauerstoff abgereicherte Luft in einem vor die Atmosphäre geschaltetem Wärmetauscher thermisch abgereichert und mit der thermischen Abwärme der beiden Wärmetauscher ein Wärmeprozess gespeist wird.

19. Verfahren nach Anspruch 14 - 18, **dadurch gekennzeichnet, dass** der Auslass (12) der Anoden-Kammer (1) mit einem Druckerhöhungs- einem Kühl- und einem Speicher-Prozess für die Verflüssigung von Kohlendioxid verbunden ist, durch welche, das den Auslass der Anoden-Kammer verlassende Gasgemisch aus Brenngasschlupf und Kohlendioxid bestehend, das Kohlendioxid von nicht verstromten Brenngas getrennt und das flüssige Kohlendioxid kontinuierlich über eine Ableitung im Bodenraum des Speichers entzogen wird, während das Brenngas über den Kopfraum des Speichers zum Einlass (9) der Anoden-Kammer zur Verstromung zurückfließt und die Anoden-Kammer (1) kühlt.

20. Verfahren nach Anspruch 14 -19, **dadurch gekennzeichnet, dass** es sich
a) bei dem Verfahren um eine Freistellung von Wasserstoff aus einer Wasserstoff enthaltenden Gasmischung handelt, welche mit einem Gastrenn-Prozess durchgeführt wird und der der Wasserstoff enthaltenden Gasmischung freigestellte Wasserstoff über eine Verbindung einem Wasserstoff unterhaltendem Prozess zugeführt wird und
b) um eine Sequestrierung von Kohlendioxid aus einer Kohlendioxid enthaltenden Gasmischung handelt, welche mit einem Brennstoffzellen-Prozess durchgeführt wird und der Prozess der Kohlendioxid enthaltenden Gasmischung Kohlendioxid entzieht und dieses nicht der Atmosphäre, sondern einem Kohlendioxid unterhaltendem und aufnehmendem Ort über eine Verbindung zuführt, während die von Kohlendioxid abgereicherte Gasmischung an die Atmosphäre abgegeben wird.

21. Verfahren nach Anspruch 20, **dadurch gekennzeichnet, dass** der Gastrenn-Prozess von Brenngas und Wasserstoff mit einer Gastrenn-Anlage und der Abtrenn-Prozess für das Kohlendioxid aus einem Kohlendioxid enthaltendem Gasgemisch mit einer Brennstoffzelle und einer Gastrenn-Anlage durchgeführt wird, welche über eine Verbindung mit der Atmosphäre, einer Synthesegasquelle, einem Wasserstoff- und/oder einem Kohlendioxid aufnehmenden Prozess und mit einem Kohlendioxid aufnehmenden Ort verbunden ist.

22. Verfahren nach einem der Ansprüche 1 bis 21, **dadurch gekennzeichnet, dass** eine Brennstoffzelle und ein Bio-Reaktor über eine Verbindung mit einander verbunden sind und in dem Bio-Reaktor chemoautotrophe Bakterien enthalten sind, welche durch die Zuführung von Wärme und Kohlendioxid gezüchtet werden und dazu das Kohlendioxid und/oder die Wärme für den Wachstumsprozess der Bakterien von der Brennstoffzelle geliefert wird.

23. Verfahren nach einem der Ansprüche 1 bis 22, **dadurch gekennzeichnet, dass** die Beschichtung einer Anoden-Elektrode (2) auf einer Elektrolytmatrix (3) durch einen Aufdampfprozess und einen Sputterprozess erfolgt, indem die Elektrolytmatrix als Substrat den Rezipienten in zwei Kammern unterteilt, in welchen zwei unterschiedliche Drücke herrschen und der höhere Druck auf der Kathodenseite das Prozessgas durch die Porengänge der Elektrolytmatrix (3) vorantreibt, welches beim Austritt aus derselben den Metalldampf hindert, sich im Porenbereich niederzuschlagen.

## Claims

1. A fuel cell having an anode chamber (1), cathode chambers (5), (7) and electrolyte area (3), (6), passage (8) as well as supply lines (9) for fuel gas and an output line (12) for the resultant carbon dioxide and water on the anode chamber (1) and supply lines (10), (11) for oxygen and carbon dioxide on the cathode chambers (5), (7) and output line (13) for air oxygen and (14) for substances containing carbon dioxide, with the anode chamber (1) and the cathode chamber (5) holding a metal sponge and/or a functional unit (42), (43), and with the cathode chamber (7) holding a metal and/or ceramic sponge or a module plate (36), **characterized by** the following features:
a) the fuel cell is subdivided into an outer cathode chamber (7) and a central cathode chamber (5),
b) two separate electrolyte areas (3), (6) are arranged between the anode chamber (1) and the central cathode chamber (5), as well as between the central and the outer cathode chambers (5, 7), with
c) an electrolyte channel (8) passing through the central cathode chamber (5) and/or the wall (44) of the central cathode chamber, and
d) the supply lines (10) and output lines (13) for oxygen being arranged on the central cathode chamber (5), and the supply lines (11) and output lines (14) for carbon dioxide being arranged on the outer cathode chamber (7).

2. The fuel cell as claimed in claim 1, **characterized in that** a mixture of carbon-dioxide gas and further gas constituents can be supplied via the supply line (11) to the cathode chamber (7).

3. The fuel cell as claimed in claim 1 or 2,
**characterized in that** the gases circulate between the supply line (11) and output line (14) on the cathode chamber (7) and the supply line (9) and output line (12) of the anode chamber (1).

4. The fuel cell as claimed in claim 1, **characterized in that** the electrolyte area between the anode chamber (1) and the cathode chamber (5) comprises a layer body formed from three layers, with the first layer being a gas-permeable anode electrode (2), the second layer being an electrolyte matrix (3) and the third layer being a porous cathode electrode (4g), which together form an ionically conductive half capacitor (30), in which
a) the anode electrode (2) is the positive pole and the cathode electrode (4) is the negative pole, and
b) the anode electrode (2) is composed of nickel which is interrupted by passages (2d) through which the pores of the electrolyte matrix (3) are exposed, and connects the electrolyte (3c) enclosed in the pores to the edges of the passages (2d), and
c) the cathode capacitor plate (4g) is composed of porous nickel oxide, through which electrolyte (3c) from the electrolyte matrix (3) passes.

5. The fuel cell as claimed in claims 1 to 4,
**characterized in that**
a) the anode chamber (1) has a functional unit (42) which is bounded on the sides facing the anode electrode (2) by a porous capacitor plate (2e) and, opposite this, by a current collector (2a), and, between them, presses a profiled body (31) against a gas-permeable metal layer (2c), which rests on the rear face of the capacitor plate (2e) and connects the latter to the anode electrode (2), and
b) the central cathode chamber (5) has a functional unit (43) which is bounded on the side facing the electrode (4) by a gas-permeable metal layer (4c) and, opposite this, by a current collector plate (4a) and, between them, a profiled body (32) connects the current collector plate (4a) to the metal layer (4c), and
c) a contact pin (45 et seq) and (47 et seq) a spring (32c et seq) is fitted between the anode electrode (2) and the opposite wall of the anode chamber (1) as well as between the cathode electrode (4) and the opposite wall of the cathode chamber (5), by means of which the current collector plates (2a) and (4a) are kept in contact with the anode electrode (2) and cathode electrode (4).

6. The fuel cell as claimed in claims 1 to 5,
**characterized in that** a cylindrical ring (41), (44) surrounds the functional unit (42), (43) of the anode chamber and cathode chamber, is closed at its end faces by an anode electrode (2) and a cathode electrode (4), and a cover (40) and a module plate (36) and absorbs the force (F1), (F2) acting on the closure surface of the anode chamber and cathode chamber, introduces this force into the annular surface of the cylindrical ring and adsorbs it in the cylindrical ring body, with the cylindrical ring being composed of metal or ceramic and being connected to its closures by an adhesive.

7. The fuel cell as claimed in claims 1 to 6,
**characterized in that** a module plate (36) combines the electrolyte matrix (6) and the cathode chamber (7), and the electrolyte matrix (6) surrounds the cathode chamber (7), with the porous body of the electrolyte matrix (6) having pore spaces (6a) through which electrolyte (3c) passes.

8. The fuel cell as claimed in claims 1 to 7,
**characterized in that** the electrolyte channel (8) is filled with electrolyte through an opening (36a) in the module plate (36), and the electrolyte located in the melt feeds the electrolyte matrix (3) and (6) therewith.

9. The fuel cell as claimed in claims 1 to 8,
**characterized in that** two or more fuel cells are connected in series by connecting the electrical connection between the current collector (4a) of the first fuel cell to the current collector (2a) of the second fuel cell, with the connection being made by a contact pin (73 et seq), which passes through a module plate (36), and whose projection brings the current collectors into contact, and provides metallic adhesion between them.

10. The fuel cell as claimed in claims 1 to 9,
**characterized in that** connections (86a) to (89f) for the inlets (9), (10), (11) and outlets (12), (13), (14) of the fuel cell, and supply lines (92a, 92c, 92e) and output lines (92b), (92d), (92f) are fitted around the fuel cell (85a).

11. The fuel cell as claimed in claims 1 to 10, **characterized in that** a plurality of fuel cells (85a et seq), which are in layers to form a stack, are connected to form a fuel cell block by the spaces (89a et seq) fitted for the inlets and outlets (9), (10), (11), (12), (13), (16) forming a parallel circuit, and by diffusors (90a), (90b), (90c) being installed in the spaces fitted for the supply lines.

12. The fuel cell as claimed in claims 1 to 11, **characterized in that** a container (94), (96), (97) surrounds the fuel cell block (98), with the container being provided with openings (91a) to (91f) through which the supply lines and output lines of the fuel cell block pass, and with further openings (102), (103) being provided in the container, through which the fuel cell block (98) is cooled by means of a cooling medium flowing through it.

13. The fuel cell as claimed in claims 1 to 12, **characterized in that** a fuel cell (85a) and a fuel cell block (98) are held together by a cup spring (95), by the cup spring (95) pressing the fuel cell (85a) and the fuel cell block (98) against a stop (97).

14. A method for depleting carbon dioxide from gas mixtures containing carbon dioxide, **characterized in that** the gas mixtures containing combustible gases are supplied to the cathode chamber (7) of a fuel cell as claimed in claims 1 to 13.

15. The method for operating a fuel cell as claimed in claim 14, **characterized in that** the anode chamber
(1) is fed with carbon monoxide from a synthesis gas process in the absence of hydrogen, and a gas separating process is located between the synthesis gas process and the inlet (9) of the fuel cell, which gas separating process removes the hydrogen from the mixed gas from the synthesis gas process, supplies, via a connection, the gas containing carbon monoxide to the fuel cell, and supplies, via a connection, the hydrogen to a process that uses hydrogen.

16. The method as claimed in claim 14 or 15,
**characterized in that** the cathode chamber (5) is fed with a gas containing oxygen via its inlet (10) in the absence of carbon dioxide.

17. The method as claimed in claims 14 to 16,
**characterized in that** the cathode chamber (5) is operated in the absence of moisture and, for this purpose, the inlet (10) of the cathode chamber (5) is connected via a connection to a drier, in which air oxygen is dried before entering the cathode chamber (5).

18. The method as claimed in claims 14 to 17,
**characterized in that** the cathode chamber (5) together with a series-connected fan and a heat exchanger are short-circuited via their inlet (10) and outlet (13), and a circulating gas is carried as a cooling medium in the short circuit, with the short circuit being continuously fed via a supply line with air oxygen from an oxygen-enrichment installation and with the air which has been depleted of oxygen in the cathode chamber (5) being thermally depleted via an output line in a heat exchanger connected upstream of the atmosphere, and with a heating process being fed with the thermal waste heat from the two heat exchangers.

19. The method as claimed in claims 14 to 18,
**characterized in that** the outlet (12) of the anode chamber (1) is connected to a pressure-increasing, a cooling and a storage process for liquefying carbon dioxide, by means of which, with the gas mixture leaving the outlet of the anode chamber comprising fuel gas leakage and carbon dioxide, the carbon dioxide is separated from unconverted fuel gas and the liquid carbon dioxide is extracted continuously via an output line in the bottom area of the reservoir, while the fuel gas flows back via the head area of the reservoir to the inlet (9) of the anode chamber for conversion, and cools the anode chamber (1).

20. The method as claimed in claims 14 to 19,
**characterized in that**
a) the method comprises hydrogen being released from a gas mixture containing hydrogen, with this release process being carried out by means of a gas separating process and with the hydrogen released from the gas mixture containing hydrogen being supplied via a connection to a process which maintains hydrogen, and
b) comprises sequestering of carbon dioxide from a gas mixture containing carbon dioxide, which sequestering process is carried out by means of a fuel cell process, and the process extracts carbon dioxide from the gas mixture containing carbon dioxide and, rather than supplying this to the atmosphere, supplies it via a connection to a point which receives and maintains carbon dioxide, while the gas mixture depleted of carbon dioxide is emitted to the atmosphere.

21. The method as claimed in claim 20, **characterized in that** the gas separating process for fuel gas and hydrogen is carried out by means of a gas separating installation, and the separating process for carbon dioxide from a gas mixture containing carbon dioxide is carried out by means of a fuel cell and a gas separating installation, which is connected via a connection to the atmosphere, to a synthesis gas source, to a process which receives hydrogen and/or to a process which receives carbon dioxide, and to a point which receives carbon dioxide.

22. The method as claimed in one of claims 1 to 21, **characterized in that** a fuel cell and a bioreactor are connected to one another via a connection and the bioreactor contains chemoautotrophic bacteria which are cultivated by supplying them with heat and carbon dioxide, with the carbon dioxide and/or the heat for the growth process of the bacteria being supplied from the fuel cell for this purpose.

23. The method as claimed in one of claims 1 to 22, **characterized in that** an anode electrode (2) on an electrolyte matrix (3) is coated by means of a vapor-deposition process and a sputtering process by the electrolyte matrix, as a substrate, subdividing the recipients into two chambers in which there are two different pressures, with the higher pressure on the cathode side forcing the process gas through the pores in the electrolyte matrix (3) which, on emerging therefrom, prevents metal vapor from being precipitated in the pore area.

## Revendications

1. Pile à combustible comprenant une chambre anodique (1), une chambre cathodique (5), (7) et un espace électrolytique (3), (6), un passage (8) et des alimentations (9) pour le gaz combustible et une évacuation (12) pour l'eau et le dioxyde de carbone qui se forme, dans la chambre anodique (1), et des alimentations (10), (11) pour l'oxygène et le dioxyde de carbone dans la chambre cathodique (5), (7), et des évacuations (13) pour l'oxygène de l'air et (14) pour des substances contenant du dioxyde de carbone, une éponge métallique et/ou une unité fonctionnelle (42), (43) venant se loger dans la chambre anodique (1) et dans la chambre cathodique (5), et une éponge métallique et/ou ou en céramique ou une plaque modulaire (36) venant se loger dans la chambre cathodique (7), **caractérisée par** les particularités suivantes :
a) la pile à combustible est subdivisée en une chambre cathodique externe (7) et en une chambre cathodique médiane (5) ;
b) entre la chambre anodique (1) et la chambre cathodique médiane (5) et également entre la chambre cathodique médiane et la chambre cathodique externe (5), (7), sont disposés deux espaces électrolytiques séparés (3), (6) ;
c) la chambre cathodique médiane (5) et/ou la paroi (44) de la chambre cathodique médiane sont traversées par un canal (8) pour l'électrolyte ; et
d) les alimentations (10) et les évacuations (13) pour l'oxygène, sont disposées dans la chambre cathodique médiane (5), et les alimentations (11) et les évacuations (14) pour le CO₂ sont disposées dans la chambre cathodique externe (7).

2. Pile à combustible selon la revendication 1, **caractérisée en ce que**, via l'alimentation (11) menant à la chambre cathodique (7), on peut acheminer un mélange de dioxyde de carbone gazeux et d'autres constituants gazeux.

3. Pile à combustible selon la revendication 1 ou 2, **caractérisée en ce que**, entre les alimentations et les évacuations (11), (14) dans la chambre cathodique (7) et entre l'alimentation et l'évacuation (9), (12) de la chambre anodique (1), les gaz sont guidés en circuit.

4. Pile à combustible selon la revendication 1, **caractérisée en ce que** l'espace électrolytique entre la chambre anodique (1) et la chambre cathodique (5) est constitué par un corps stratifié constitué par trois couches, la première couche représentant une électrode anodique (2) perméable aux gaz, la deuxième couche représentant une matrice électrolytique (3) et la troisième couche représentant une électrode cathodique poreuse (4g), qui forment ensemble un demi-condensateur à conductivité ionique (30), dans laquelle
a) l'électrode anodique (2) représente le pôle plus et l'électrode cathodique (4) représente le pôle moins ; et
b) l'électrode anodique (2) est constituée de nickel qui est interrompu par des passages (2d) à travers lesquels les passages poreux de la matrice électrolytique (3) sont disposés à découvert et l'électrolyte (3c) inclus dans les passages poreux se lie aux bords des passages (2d) ; et
c) la plaque de condensateur cathodique (4g) est constituée par de l'oxyde de nickel poreux et est traversée par l'électrolyte (3c) à partir de la matrice électrolytique (3).

5. Pile à combustible selon l'une quelconque des revendications 1 à 4,
**caractérisée en ce que** :
a) la chambre anodique (1) possède une unité fonctionnelle (42) qui est délimitée, du côté tourné vers l'électrode anodique (2), par une plaque poreuse de condensateur (2e) et du côté opposé, par un collecteur de courant (2a), un corps profilé (31) disposé entre les deux comprimant une couche métallique (2c) perméable aux gaz, qui vient se disposer contre le côté dorsal de la plaque de condensateur (2e) et qui relie cette dernière à l'électrode anodique (2) ; et
b) la chambre cathodique médiane (5) possède une unité fonctionnelle (43) qui est délimitée, du côté tourné vers l'électrode (4), par une couche métallique (4c) perméable aux gaz et du côté opposé, par une plaque de collecteur de courant (4a), un corps profilé (32) disposé entre les deux reliant la plaque de collecteur de courant (4a) à la couche métallique (4c) ; et
c) entre l'électrode anodique (2) et la paroi opposée de la chambre anodique (1) et également entre l'électrode cathodique (4) et la paroi opposée de la chambre cathodique (5), sont incorporés une broche de contact (45 ff) et (47 ff) et un ressort (32c ff), par lesquels les plaques de collecteurs de courant (2a) et (4a) sont maintenues en contact avec l'électrode anodique et l'électrode cathodique (2), (4).

6. Pile à combustible selon les revendications 1 à 5, **caractérisée en ce qu'**un anneau cylindrique (41), (44) comprend l'unité fonctionnelle (42), (43) des chambres anodique et cathodique, qui est fermé, sur ses côtés frontaux, par une électrode anodique et par une électrode cathodique (2), (4) et par un couvercle (40) et par une plaque modulaire (36), et l'anneau cylindrique (41), (44), qui absorbe la force (F1), (F2) s'exerçant sur la surface de fermeture de la chambre anodique et de la chambre cathodique, introduit cette dernière dans la surface annulaire de l'anneau cylindrique et l'adsorbe dans le corps annulaire cylindrique, l'anneau cylindrique étant constitué de métal ou de céramique et étant relié à l'aide d'un adhésif à ses fermetures.

7. Pile à combustible selon les revendications 1 à 6, **caractérisée en ce qu'**une plaque modulaire (36) combine la matrice électrolytique (6) et la chambre cathodique (7), et la matrice électrolytique (6) comprend la chambre cathodique (7), le corps poreux de la matrice électrolytique (6) possédant des espaces poreux (6a) qui sont traversés par l'électrolyte (3c).

8. Pile à combustible selon les revendications 1 à 7, **caractérisée en ce que** le canal (8) pour l'électrolyte est rempli avec l'électrolyte via une ouverture (36a) pratiquée dans la plaque modulaire (36) et l'électrolyte à l'état fondu alimentant la matrice électrolytique (3) et (6) dans cet état.

9. Pile à combustible selon les revendications 1 à 8, **caractérisée en ce qu'**on obtient un montage en série de deux piles à combustible en reliant la liaison électrique entre le collecteur de courant (4a) de la première pile à combustible au collecteur de courant (2a) de la deuxième pile à combustible, la liaison s'effectuant via une broche de contact (73 ff) qui traverse une plaque modulaire (36) et qui, avec son extrémité en porte-à-faux, entre en contact avec les collecteurs de courant et les soumet à un collage métallique.

10. Pile à combustible selon les revendications 1 à 9, **caractérisée en ce qu'**autour de la pile à combustible (85a), on monte des raccords (86a) à (89f) pour les entrées (9), (10), (11) et les sorties (12), (13), (14) de la pile, ainsi que des alimentations (92a), (92c), (92e) et des évacuations (92b), (92d), (92f).

11. Pile à combustible selon les revendications 1 à 10, **caractérisée en ce qu'**on relie plusieurs piles à combustible stratifiées (85a ff) en les empilant afin d'obtenir un bloc de piles à combustible, les espaces formés (89a ff) pour les entrées et les sorties (9), (10), (11), (12), (13), (16) formant un circuit parallèle et les diffuseurs (90a), (90b), (90c) étant incorporés dans les espaces formés par les alimentations.

12. Pile à combustible selon les revendications 1 à 11, **caractérisée en ce qu'**un récipient (94), (96), (97) comprend le bloc de piles à combustible (98), des ouvertures (91a) à (91f) étant prévues dans le récipient, à travers lesquelles passent les alimentations et les évacuations du bloc de piles à combustible, ainsi que d'autres ouvertures (102), (103) dans le récipient, à travers lesquelles le bloc de piles à combustible (98) est refroidi avec un agent réfrigérant les traversant.

13. Pile à combustible selon les revendications 1 à 12, **caractérisée en ce qu'**une pile à combustible (85a) et un bloc de piles à combustible (98) sont maintenus ensemble par un ressort à disque (95), de telle sorte que le ressort à disque (95) comprime la pile à combustible (85a) et le bloc de piles à combustible (98) contre une butée (97).

14. Procédé pour l'appauvrissement en dioxyde de carbone à partir de mélanges gazeux contenant du dioxyde de carbone, **caractérisé en ce qu'**on alimente les mélanges de gaz contenant des gaz combustibles dans les chambres cathodiques (7) d'une pile à combustible selon les revendications 1 à 13.

15. Procédé pour faire fonctionner une pile à combustible selon la revendication 14, **caractérisé en ce qu'**on alimente la chambre anodique (1) en l'absence d'hydrogène, avec du monoxyde de carbone issu d'un processus de gaz de synthèse et on intercale, entre le processus de gaz de synthèse et l'entrée (9) de la pile à combustible, un processus de séparation des gaz qui permet d'extraire l'hydrogène du mélange gazeux issu du processus de gaz de synthèse et par lequel on achemine le gaz contenant du monoxyde de carbone à la pile à combustible et on achemine l'hydrogène à un processus se déroulant en présence d'hydrogène, via une liaison.

16. Procédé selon la revendication 14 ou 15, **caractérisé en ce que** la chambre cathodique (5) est alimentée avec un gaz contenant de l'oxygène, via une entrée (10) en l'absence de dioxyde de carbone.

17. Procédé selon les revendications 14 à 16, **caractérisé en ce que** la chambre cathodique (5) est faite fonctionner en l'absence d'humidité ; à cet effet, l'entrée (10) de la chambre cathodique (5) est reliée, via une liaison, à un dessiccateur dans lequel l'oxygène de l'air est séché avant son entrée dans la chambre cathodique (5).

18. Procédé selon les revendications 14 à 17, **caractérisé en ce que** la chambre cathodique (5) est court-circuitée avec un ventilateur monté en série et avec un échangeur de chaleur, via son entrée (10) et sa sortie (13), un gaz de circulation étant guidé dans le court-circuit pour faire office d'agent réfrigérant, le court-circuit étant alimenté en continu via une alimentation avec de l'oxygène de l'air provenant d'une installation d'enrichissement en oxygène et l'air appauvri en oxygène dans la chambre cathodique (5) étant soumis, via une évacuation, à un appauvrissement thermique dans un échangeur de chaleur monté en amont de l'atmosphère, un processus de réchauffement étant alimenté avec les chaleurs thermiques d'échappement des deux échangeurs de chaleur.

19. Procédé selon les revendications 14 à 18, **caractérisé en ce que** la sortie (12) de la chambre anodique (1) est reliée à un processus d'élévation de pression, à un processus de refroidissement et à un processus de stockage pour la liquéfaction du dioxyde de carbone, par lesquels le mélange de gaz qui quitte la sortie de la chambre anodique est constitué par un échappement de gaz combustible et par du dioxyde de carbone, le dioxyde de carbone est séparé des gaz combustibles qui n'ont pas été transformés et le dioxyde de carbone liquide est extrait en continu via une évacuation pratiquée dans l'espace inférieur de la chambre de stockage, tandis que les gaz combustibles sont renvoyés via l'espace supérieur de la chambre de stockage en direction de l'entrée (9) de la chambre cathodique à des fins de transformation, tout en refroidissant la chambre anodique (1).

20. Procédé selon les revendications 14 à 19, **caractérisé en ce que**
a) en ce qui concerne le procédé, il s'agit d'une libération d'hydrogène à partir d'un mélange de gaz contenant de l'hydrogène, qui est mise en oeuvre avec un processus de séparation des gaz, l'hydrogène libéré du mélange de gaz contenant de l'hydrogène étant acheminé, via une liaison, à un processus recevant de l'hydrogène ; et
b) il s'agit d'une séquestration de dioxyde de carbone à partir d'un mélange de gaz contenant du dioxyde de carbone, qui est mise en oeuvre avec un processus faisant appel à une pile à combustible et le processus extrait le dioxyde de carbone du mélange de gaz contenant du dioxyde de carbone et achemine ce dernier, non pas dans l'atmosphère, mais à un endroit de réception et de conservation du dioxyde de carbone, via une liaison, tandis que le mélange de gaz appauvri en dioxyde de carbone est relâché dans l'atmosphère.

21. Procédé selon la revendication 20, **caractérisé en ce que** le processus de séparation des gaz pour la séparation des gaz combustibles et de l'hydrogène est mis en oeuvre avec une installation de séparation des gaz et le processus de séparation des gaz pour le dioxyde de carbone à partir d'un mélange de gaz contenant du dioxyde de carbone est mis en oeuvre avec une pile à combustible et avec une installation de séparation des gaz qui est reliée, via une liaison, à l'atmosphère, à une source de gaz de synthèse, à un processus de réception de l'hydrogène et/ou à un processus de réception du dioxyde de carbone, et à un endroit de réception du dioxyde de carbone.

22. Procédé selon l'une quelconque des revendications 1 à 21, **caractérisé en** en ce qu'on relie l'un à l'autre une pile à combustible et un bioréacteur via une liaison, des bactéries chimio-autotrophes étant contenues dans le bioréacteur, que l'on cultive par alimentation de chaleur et de dioxyde de carbone, le dioxyde de carbone et/ou la chaleur pour le processus de croissance des bactéries étant fournis à cet effet par la pile à combustible.

23. Procédé selon l'une quelconque des revendications 1 à 22, **caractérisé en** en ce que le revêtement d'une électrode anodique (2) sur une matrice électrolytique (3) a lieu via un processus de dépôt en phase gazeuse et via un processus de pulvérisation cathodique, dans le sens où la matrice électrolytique à titre de substrat subdivise le récipient en deux chambres dans lesquelles règnent deux pressions différentes, la pression supérieure, côté cathode, poussant le gaz du processus à travers les passages poreux de la matrice électrolytique (3), de telle sorte que le gaz en question, lors de sa sortie de cette dernière, empêche la vapeur métallique de précipiter dans la zone poreuse.
